(19) Europäisches Patentamt
European Patent Office
Office européen des brevets

(11) **EP 2 230 793 A2**

(12) **EUROPEAN PATENT APPLICATION**

(43) Date of publication:
22.09.2010 Bulletin 2010/38

(51) Int Cl.:
*H04L 9/32* (2006.01)   *H01Q 15/00* (2006.01)
*H01Q 17/00* (2006.01)

(21) Application number: 09157043.2

(22) Date of filing: 31.03.2009

(84) Designated Contracting States:
**AT BE BG CH CY CZ DE DK EE ES FI FR GB GR HR HU IE IS IT LI LT LU LV MC MK MT NL NO PL PT RO SE SI SK TR**
Designated Extension States:
**AL BA RS**

(30) Priority: 16.03.2009 EP 09003764
16.03.2009 EP 09003763

(71) Applicants:
• **Technische Universität München**
**80333 München (DE)**

• **Rührmair, Ulrich**
**83679 Sachsenkamp (DE)**

(72) Inventor: **Stutzmann, Martin**
**85435 Erding (DE)**

(74) Representative: **Herrmann, Franz**
**Dendorfer & Herrmann**
**Patentanwälte Partnerschaft**
**Bayerstrasse 3**
**80335 München (DE)**

(54) **On-Chip Electric Waves: An Analog Circuit Approach to Physical Uncloneable Functions: PUF**

(57) This application proposes the use of Cellular Non-Linear Networks (CNNs) as physical uncloneable functions (PUFs). We argue that analogue circuits offer higher security than existing digital PUFs and that the CNN paradigm allows us to build large, unclonable, and scalable analogue PUFs, which still show a stable and repeatable input-output behaviour.

CNNs are dynamical arrays of locally-interconnected cells, with a cell dynamics that depends upon the interconnection strengths to their neighbours. They can be designed to evolve in time according to partial differential equations. If this equation describes a physical phenomenon, then the CNN can simulate a complex physical system on-chip. This can be exploited to create electrical PUFs with high relevant structural information content. To illustrate our paradigm at work, we design a circuit that directly emulates nonlinear wave propagation phenomena in a random media. It effectively translates the complexity of optical PUFs into electrical circuits. This, leading to better practicality, while maintaining or even improving the security properties of their optical counterparts.

FIG 18

EP 2 230 793 A2

**Description**

The invention relates to a method for security purposes with the acts of:

- requesting a measurement on a physical system wherein the measurement is performed by applying a challenge signal to the system and by receiving a response signal dependent on a setting of the challenge signal and dependent on the inner structure of the object and by determining a characteristic of the response signal,
- receiving the characteristic of the response signal.

The invention further relates to a device for security purposes and to a software product.

Such a method and such a device is known from PAPPU, R.; RECHT, B.; TAYLOR, J.; GERSHENFELD, N.: "Physical One-Way Functions", Science, Volume 297, pages 2026-2030, September 20, 2002. In the known method, a scattering token is irradiated by a laser from various directions and with various points of incidence. The pattern of the scattered light is detected by a detector. The images generated by the detector are characterized by a key that allows for distinguishing between the scattering patterns contained in the images of the detector. The known device can be used for implementing an authentication protocol based on illumination-key pairs. During the enrollment stage, several illumination-key pairs are acquired at a trusted terminal. During the verification stage of the protocol, the server challenges the scattering token with a specific illumination and compares the key of the response with the known key. The scattering token is authenticated if the Hamming-distance between the actual key and the key measured previously is below a predefined threshold.

One disadvantage of the known method and of the know device is that an online connection between the terminal and the remote server is needed for executing the protocol. Since the security of the known protocol rests on the large number of challenge-response pairs, a large number of participants in the protocol entrails the necessity to store large amounts of data on a central server that is accessible by the terminals.

A further disadvantage of this known method is that it works structurally similar to a private key system: It requires that the data stored at the central server must be kept secret such as a a private key, and that the data corresponding to the secret key has been established in a secure, joint set-up phase.

Proceeding from this related art, the present invention seeks to provide a simplified security method and device.

This object is achieved by a method having the features of the independent claim. Advantageous embodiments and refinements are specified in claims dependent thereon.

In the method, the characteristic of the response signal is validated by determining the time elapsed for the measurement and by performing a verification process of the response using a description of the system, wherein the complexity of the inner structure of the physical system ensures that the time needed for the verification process is longer than the time elapsed for the measurement. The description of the system can thereby be made publicly known without endangering the security. Due to this public nature of the description of the system, no external database is necessary for validating the system. Furthermore, the complexity of the inner structure of the physical system ensures that the measurement on the system can not be replaced by a simulation based on the knowledge of the description, since such a simulation - albeit possible - will inevitably take longer time as a direct measurement of the system.

In one embodiment, the characteristic of the response signal is validated by generating a simulated characteristic of the response signal using a simulation program capable of reproducing the characteristic of the response signal dependent on the description of the object and the setting of the challenge signal, wherein the complexity of the inner structure ensures that the time needed for the simulation is longer than the time elapsed for the measurement. In some cases it might not be necessary to perform a complete simulation of the measurement, but to perform a simple verification that demonstrates that the response obtained by the measurement is indeed a measurement on the system that is described by the description. In other cases, however, it might be necessary to perform a complete simulation of the measurement for validating the response signal obtained by the measurement.

The method may also be used for labeling purposes, for example for labeling products, identity cards, access cards or cash cards. In this case, the authority assigns the system to the item and generates a digital signature of the description of the system and of an identification of the item using a secret signing key of the authority, allowing the validation of the assignment of the functionality to the item by validating the signature using a public signing key of the authority and by verifying the presence of the system whose description was signed by/included in the digital signature.

The method may also be used for licensing a software program to a particular processing unit, for example a unit contained in a computer. In this case, the item is a software program and the authority is the manufacturer of the software program, wherein the manufacturer generates the digital licensing signature of the description and of an identification of the program using a secret signing key of the manufacturer. Furthermore, the software program is provided with an access to the system. During execution of the program the program checks the assignment of the software program to the processing unit and the availability of the system. Thus, the software program can only be executed by the processing unit if the software program has been assigned to the system associated with the processing unit and if the processing unit has still access to the system.

In a similar way, arbitrary products can be validated by attaching the system to the product and by generating a digital signature of the description and the identification of the product and by making the identification, the description and the signature readable from the product. Thus a control unit can read the identification, the description and the signature, and can verify the validity of the signature. The control unit can further perform a validation of the system by performing a measurement on the system or by requesting the correct measurement values in a timely manner from the system.

One particular advantage of the method is that a virtual proof of possession can be performed if the measurement on the system is assigned to a unit A and if the validation of the response signal obtained by the measurement is assigned to a different unit B remote from the unit A. Thus, it can be demonstrated to unit B that unit A is indeed in possession of the system, if unit A performs the measurement on the system and sends the response signed to unit B for validation.

If the system can be modified such that the modified system allows the conclusion that the modified system must have been generated by a modification of the original system, a virtual proof of destruction can be performed. This proof can be performed by demonstrating to unit B that unit A is in possession of the original system, by modifying the original system into a modified system and by proving to unit B that unit A is now in possession of the modified system. Such a virtual proof of destruction can particularly be used for transferring an item and a functionality associated with the item from unit A to unit B, for example for a transfer of a computer program from a processing unit associated with unit A to another processing unit associated with unit B. Thereby it is assured by our method that unit A cannot (fraudulently) keep a copy of the program (or other digital data) in the original form. This means that our approach can be used to implement the secure migration of files.

Another application of the method is the proof of colocality by using two interacting systems. This embodiment of the program can be useful for demonstrating to a central unit that a user is present at a particular terminal, for example at a particular cash terminal.

In another embodiment, the method allows the generation of a key that can be used to generate an authentication code with respect to a message.

But the concept of a method can also be used for transmitting authenticated messages.

Also sensor data can be authenticated, if the sensor is constructed in such a way that it generates an output signal comprising at least two components: A first component describes the usual sensor data, for instance temperature, images, sounds, or similar physical quanties. A second component is authenticating information for the sensor data, which depends on the inner structure, the environment and some further external challenge signals applied to the inner structure. The authenticity of the sensor data can be validated on the basis of the description of the inner structure, the authenticating information and the sensor data. One possibility for this validation is to simulate the authenticating information that would result from the described inner structure and the provided sensor data, and to compare the result to the provided authenticating information and the temporal structure of the authenticating information. The complexity of the inner structure ensures that the simulation or any other way to obtain the authenticating data without making a real sensor measurement takes longer than a real sensor measurement, and is hence detected.

For the method various systems can be used. In particular, cellular non-linear networks seem to be suitable for the method. This cellular non-linear network comprises a plurality of interconnected cells that have a state variable. The temporal behaviour of the state variable of a particular cell depends on the output of the cells interconnected with the particular cell. These cellular non-linear networks are generally used for solving ordinary partial differentially equation much faster than by using digital computers. The simulation of the ordinary partial differentially equation can be used as a simulation whereas the cellular non-linear network itself forms the system on which the measurements are performed. The initial values of the state variable are the challenge signals whereas the final values of the state variables represent the response signal.

If the cells of the cellular non-linear network are provided with sensors, the cellular non-linear networks can be used for authenticating sensor data since the input of the sensors affects the behaviour of the cellular non-linear network in a way that can also be simulated by a digital computer.

A further system suitable for the method is a semiconductor memory that comprises cells with fixed information content and ordinary cells with variable information content wherein the result of a writing procedure into the cells with variable information content depends on the supply voltage of the semiconductor memory. The output of the semiconductor memory is feedback as input for further writing operations.

For performing the method, the system can be associated with items like a cash card, banknote, identification card, or may be used in connection with a camera or a microphone or a fingerprint or other biometric sensors for authenticating the data generated by the camera or the microphone or the sensor.

This object is achieved by a method having the features of the independent claim. Advantageous embodiments and refinements are specified in claims dependent thereon.

Further advantages and properties of the present invention are disclosed in the following description, in which exemplary embodiments of the present invention are explained in detail based on the drawings:

Figure 1     shows a network of non-linear resistors with individual U-I-curves;

Figure 2     illustrates interference phenomena that are induced through high frequency pulses on computer chips;

Figure 3     depicts a banknote provided with a system for security purposes;

Figure 4     depicts a brand product provided with a system for security purposes;

Figur 5     shows an identification card provided with a system for security purposes;

Figur 6     illustrates a virtual proof of destruction

Figure 7     shows the basic working principle of a camera that generates authenticated image data;

Figure 8     illustrates a camera that splits the light beam between a standard CCD and a photosensitive system for generating authenticated image data;

Figure 9     illustrates a virtual proof of an event;

Figure 10    illustrates a virtual proofs of sensoric perceptions that might be carried out for all kinds of sensor data;

Figure 11    illustrates the operation of a cellular non-linear network;

Figure 12    shows the circuit schematics of a single cell

Figure 13    illustrates a autowave formation in an autonomous cellular non-linear network circuit;

Figure 14    shows simulation results of the wave-CNN, with a single excitation of the center;

Figure 15    illustrates the sensitivity of a CNN for one particular input;

Figure 16    shows the averaged output of the CNN from Figure 15;

Figure 17    illustrates the sensitivity of the CNN to change in a particular template;

Figure 18    shows a circuit schematics of a non-programmable CNN cell;

Figure 19    shows templates and interaction structure of a 3-layer CNN;

Figure 20    shows the simulated bahviour of CNN from Figure 19;

Figure 21    shows a secure circuit intermingled with a cellular non-linear network (= CNN) ;

Figure 22    shows two interacting security systems;

Figure 23    shows a cellular non-linear network with unique scatterer that allows an input test vector / image to be projected to an unique scatterer and then to a focal plane array of a cellular non-linear network;

Figure 24    ilustrates optically routed cellular automata, and its operation;

Figure 25    shows major components of a semiconductor memory; and

Figure 26    illustrates the use of a semiconductor memory as security system.

Figure 27    shows the layout of a single memory cell of the memory from Figure 26.

Figure 28    shows simulation results on the read and write behavior of the memory cell from Figure 27.

In the following, various embodiments of the method and the system are discussed in detail.

**1 Introduction**

This report discusses the notion of a so-called *SIMPL system*, where the acronym SIMPL stands for "**SIM**ulation **P**ossible, but **L**aborious", and presents several applications of these systems. Slightly simplifying, a SIMPL system is a physical system $S$ with the following three properties:

1. It is possible to numerically simulate and, thus, to predict the physical behaviour of $S$ under a very large number of different experimental conditions with very high accuracy.

2. However, any such sufficiently accurate numerical simulation of the system is bound to be time consuming. Determining the system's behaviour under the respective conditions by an actual physical experiment works significantly quicker than the simulation.

3. It is difficult to physically reproduce or clone $S$.

A fertile view is to regard the behaviour of a SIMPL system $S$ as an analogue computation, which can be imitated on a standard digital computer only with some loss in time efficiency. The input of this computation would be the experimental conditions to which the system is exposed, and the output was the measured physical behaviour of the system under these conditions. At first sight, SIMPL systems seem to be mainly related to the areas of theoretical physics and computational complexity theory [20], but SIMPL systems enable new approaches to some important problems in cryptography and security.

**2. Related Work.**

SIMPL systems technically belong to a subfield of cryptography that could be termed physical cryptography. This area tries to explore how certain analogue physical or chemical effects can be exploited for cryptography and security purposes. Examples include the well-known quantum cryptography [21], DNA-based cryptography [38], or physical one-way functions [36].
SIMPL systems constitue a fully novel concept in that area, which enables a large number of new applications. They are inspired by two pieces of earlier work: First of all by the physical one-way functions just mentioned [36, 37]. However, these lack the vital simulatability condition of SIMPL systems (see above items 1 and 2), a fact which comparatively restricts their cryptographic applicability.
Secondly, SIMPL systems were motivated by some previous work of Feynman, who investigated the question whether all physical systems can in principle be simulated on a Turing machine [39]. He affirms this question, but at the same time disbelieves that such a simulation can always be carried out efficiently. SIMPL systems are, in fact, a special example of this general idea, which has been tailored for cryptographic purposes.

**3. Definition**

We start with some formalism that enables us to talk about measurements and measurement results. In doing so, we will try to strike a balance between strict formality and pragmatism that suits our cause.
Please note that terms like Alice, Bob and Eve are common representation for functional units that are generally used in cryptography. These terms designate functional units that can be implemented by hardware, by software of by a combination of hardware and software in a single physical unit or distributed over various physical units.

**Definition 2.1 (Measuring Apparatuses and Measurement Results)**

An apparatus $M$ is called a measuring apparatus for physical objects if it meets the following requirements:

1. $M$ is capable of executing a finite number of measurements $M^1,...,M^n$ on a given physical system.

2. Each measurement $M^i$ can be fully characterized by an associated numerical parameter $p_i$. These parameters are called the measuring parameters of $M$. We use the term $P_M$ to denote the set of all measurement parameters of a measuring apparatus $M$.

3. $M$ has the following functional behavior: Provided with a physical system $S$ and a measuring parameter $p_i$ as

input, $M$ executes the measurement $M^i$ characterised by $p_i$ on $S$. After that it outputs a numerical measurement result, which we denote by $M(p_i,S)$.

Please note that item 2.1 implicitly assumes that the measurement result is stable for different executions of one measurement. Furthermore, please note that measurement apparatuses are related to the concept of a general measurement method in the sense that any measurement apparatus realises a finite number of specific measurements (characterised by the parameters $p_i$ from the set $P_M$) according to a general measurement method.

**3 SIMPL systems**

**3.1 Definition**

As stated in the introduction, SIMPL systems are are physical systems whose "behaviour" can be simulated numerically on a digital computer, but for which any such simulation is guaranteed to be tedious. The following definition lays down this concept in more detail and also presents a specific adversarial model.

**Definition 3.1 (SIMPL Systems)**

Let $M$ be a measuring apparatus and $S$ be a physical system. Let furthermore $t_R$ be the response time of $M$ and $S$, that is, the maximum time over all measurement parameters $p \in P_M$ that it takes to determine the value $M(p,S)$ through measuring $S$ by $M$. $S$ is called a SIMPL system relative to $M$ if there is a numerical string $D(S)$, which we call the description of $S$, and a computer algorithm $Sim$ such that the following conditions are met:

1. For (almost) all measurement parameters $p \in P_M$, the algorithm $Sim$ on input $(p,D(S))$ in feasible time outputs a numerical value $Sim(p,D(S))$, such that

$$Sim(p,D(S)) = M(p,S).$$

2. For any cryptographic adversary Eve it is infeasible to succeed in the following experiment with a probability greater than $3/4$ :

(a) Eve is provided with a characterisation of the set $P_M$, the numerical description $D(S)$, and the code of the algorithm $Sim$.
(b) Eve is given access to the system $S$ for a period of several days. After that, access to $S$ is withdrawn from Eve.
(c) Then, Eve is presented with a measurement parameter $p^*$ that was chosen uniformly at random from the set $P_{M,}$ and is asked to output a value $V$.

We say that Eve succeeded in the above experiment if the following conditions are met:

(a) $V = M(p^*,S)$.
(b) The time that Eve needed to output $V$ after she was presented with $p^*$ is at most $2 \cdot t_R$.

Please note that said probability of $3/4$ is taken over the uniformly random choice of $p^* \in P_M$, and over the random choices or actions that Eve might take in steps 3.1 and 3.1.

**Immunity against Full Read-Out.**

It follows from Definition 3.1 that for any SIMPL system $S$, it is impossible to measure the values $M(p, S)$ for *all* possible parameters $p \in P_M$ within a relatively short timeframe. Otherwise, Eve could create an exhaustive lookup-table for all possible values $M(p,S)$ during step 3.1, which would enable her to succeed in the described experiment. Hence, for any SIMPL system either the set of possible measurement parameters $P_M$ must be very large, or successive read-outs can only be carried out relatively slowly, or both must apply.

**Immunity Against Cloning.**

Please note further that Definition 3.1 implies that previous physical access and a number of known measurement results $M(p, S)$ of $S$ must not enable Eve to do one of the following:

1. Build an *exact physical clone S'* of the system $S$, for which
$M(p,S) = M(p,S')$ for almost $p \in P_M$, and for which the evaluation of $M(p,S')$ works comparably quickly as by an experiment on $S$.

2. Build a *functional physical clone S'* of $S$, which may be a physical system of a possibly very different structure or different lengthscales than $S$, that enables Eve to determine the values $M(p,S)$ for (almost) all $p \in P_M$ correctly and comparably quickly as by an experiment on the original system $S$.

3. Build a *digital clone*, which is a computer algorithm $Alg$ that numerically computes the values $Alg(p)=M(p,S)$ for (almost) all $p \in P_M$ comparably quickly as by an experiment on $S$.

Please note that the inability for *digital cloning* implies a number of non-trivial requirements for any SIMPL system: Firstly, it logically includes the immunity against full read-out that we discussed earlier. Secondly, it implies that the behaviour of $S$ for the various measurement parameters $p \in P_M$ cannot be learned by a machine learning algorithm that has a very rapid prediction phase, which works on a comparable timescales as determination of $M(p, S)$ by a physical experiment. Thirdly and most generally, it implies that the simulation of $S$ on the basis of $D(S)$ cannot be split into a possibly laborious precomputation phase independent of $p$, which takes most of the computational load, and a specific computation phase that very rapidly determines $M(p,S)$ for some given $p$.
In the sequel, we will sometimes refer to the immunity of $S$ against cloning also as the unreproducibility or the uniqueness of $S$.

**Different Adversarial Scenarios.**

Definition 3.1 leaves open which resources Eve may employ during her attack. There are several meaningful scenarios.

1. Security against Private Attackers and Consumers: In this scenario we assume that Eve is a private person, possibly very educated in cryptographic and security matters, but with a budget not exceeding one million dollars.

2. Security against Organizations: Here, we suppose that Eve is an organisation with very significant financial resources, possibly up to billions of Dollars, but with some significant constraints concerning impending legal prosecution.
For example, a criminal organisation might well get involved in copying DVDs at some site in a remote country, since this requires only limited hardware means, or set up a hidden physical laboratory of some limited capacity, but would find it hard to build a full-fledged chip foundry in some Western country without being noticed and prosecuted, if that was required to break a certain type of SIMPL system.

3. Technological Security: We assume that Eve is allowed to use basically unlimited fincancial resources, and faces no restrictions other than those induced by current technology.

When we say that a SIMPL system is secure in one of the above scenarios, we mean that it remains secure in the sense of Definition 3.1 if Eve is allowed the described resources. Technologically secure SIMPL systems provide the strongest security guarantees, organization secure SIMPL systems the second, and consumer secure SIMPL systems the least strongest guarantees. Which type of security we seek obviously strongly depends on the intended application. For example, a SIMPL system that is not technologically secure, but consumer secure might still find very fruitful applications in the consumer market. Hence, one should not focus solely on technological security when designing SIMPL systems.

**3.2 Realisation**

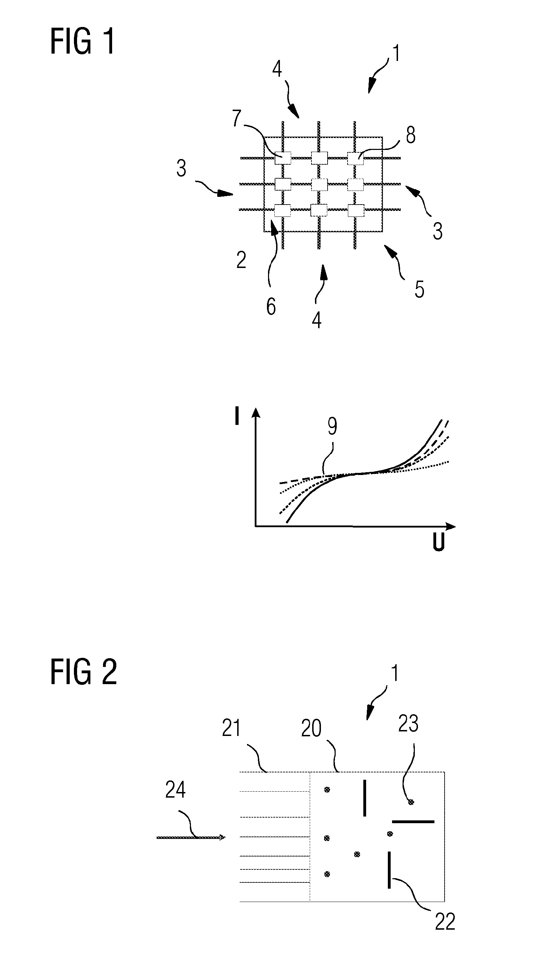

One class of systems that make promising candidates for SIMPL systems are networks of non-linear passive or, better still, active resistors [11, 12, 13]. The behaviour of these networks is well investigated and can be simulated by established simulation tools [32, 33], which are known to be computationally intensive. Furthermore, these types of networks can be fabricated such that each of the resistors has its own, unique, and very hard to reproduce U-I-curve, whence they may be *technologically secure.* Figure 1 illustrates the approach.
Figur 1 shows a SIMPL system 1 that comprises a number of terminals 2 that can be used as input terminals 3 and output terminals 4. The SIMPL system 1 further comprises an inner structure 5 that is formed by a network 6 with a plurality of notes 7 which are formed by unique, non-linear elements 8. Figur 1 further shows in a diagram some U-I-curves 9 of the unique, non-linear elements. It can be recognized from the diagram that each of the elements 8 as an unique U-I-curve 9.

One important issue in connection with these candidate SIMPL systems is how the description $D(S)$ for the simulation of $S$ can be obtained. There are two general possibilities:

1. Physical measurements that characterise $S$ sufficiently exactly. In the case of resistor networks, this would probably amount to measuring the U-I-curve of each single resistor. This required a specific circuit design which allowed to address every resistor individually. Please note that after $D(S)$ has once been obtained, the extra wires could be burnt or otherwise destroyed if this was necessary for security reasons.

2. Numerical model building/system identification or machine learning on the basis of a large number of value pairs $(p_i, M(p_i, S))$. Such an approach builds a simulation model or a learned model in a digital computer, which can predict the behaviour of $S$ for (almost) all measurement parameters $p_i$. Since such a model can be expressed numerically and can be used to obtain the values $M(p_i, S)$, it can also serve as the desired description $D(S)$.

Please note, however, that the computational model set up in method 2 must work slower that the physical real-time behaviour of $S$, as otherwise $S$ was no SIMPL system as defined in Definiton 3.1. Hence, one needs to make sure that the prediction phase of the machine learning scheme after the completion of the training phase does not work too quickly. Identifying physical systems which can be learned, but for which the prediction phase is bound to be sufficiently slow, requires careful analysis.

The problem seems less severe if system identification and subsequent simulation is used instead of machine learning and subsequent prediction by the trained machine. In general, the numerical simulation of physical systems will require more complex computations than the prediction phase of a machine learning scheme.

Other possible realisations than resistor networks include photonic crystal microcavity arrays, spin glasses and ising models, or interference and standing wave phenomena on computer chips [13]. The latter is illustrated in Figure 2.

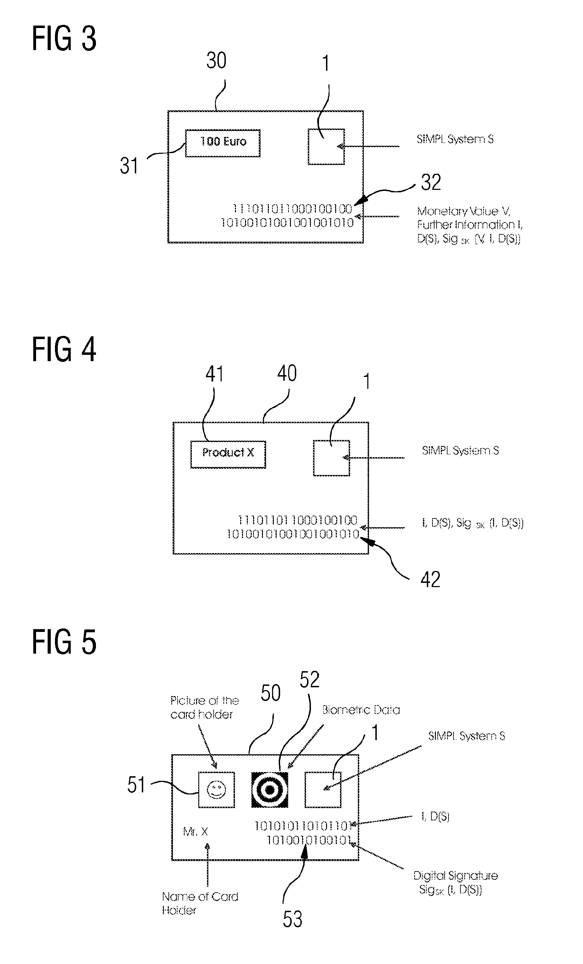

Figure 5 illustrates interference on a chip 20 that has terminals 21 on which electric pulses, for example pulses with sharp rising edges are applied to the chip 20. Due to production variations, the geometry and the composition of the elements of the chip 20 are unique for each chip 20. For example the signals of the layers or the density may vary among chips 20. In addition, the chips 20 can be provided with unique geometrical structures or wave scattering obstacles 22. The chip is further provided with detection spots 23, for example transistors, which detect variations of the electric field over time.

Yet another, very interesting possibility arises if memory chips are manufactured in a skew design, which means that the structural dimensions of their cells vary from cell to cell [14].

This induces a different behaviour of each memory cell at different operational voltages, which means that the behaviour of the whole chip under intentional successive voltage variations can be somewhat laborious to imitate on a standard digital computer, or by means of a standard digital memory. Since chips with such a non-standard, skew layout can be refabricated by a fraudster if and only if he has access to or even owns a chip foundry, this implementation is not technologically secure, but consumer secure and to some extent organization secure. One advantage of *skew* SIMPL systems is that their description $D(S)$ can be obtained easily, since it follows directly from the known IC layout.

### 3.3 Applications

We will discuss several applications of SIMPL systems in this section; the list is certainly not exhaustive.

### 3.3.1 Authentication of Messages

Let us consider the following scenario: Bob knows the description $D(S)$ of Alice's SIMPL system $S$, and also has got access to the program code for the simulation algorithm *Sim*. This can be achieved, for example, by publicly associating $D(S)$ with Alice and by generally making *Sim* publicly accessible. Now suppose that Alice wants to write Bob a message $N$ over an insecure channel in an authenticated manner (which means that the content of $N$ cannot be altered by Eve without detection by Bob). Then, the two can proceed as described in the upcoming protocol.

**Protocol 3.2 (Authentication of Messages by SIMPL Systems)**

1. Bob chooses uniformly at random measurement parameters $p_1, ..., p_k$ from $P_M$, and sends them to Alice.

2. Alice uses $S$ to determine the values $M(p_1,S),..., M(p_k,S)$, and sets the keys $K_1, ..., K_k$ to be

$$K_i \overset{\text{def}}{=} M(p_i, S) \quad \text{for} \quad i = 1,...,k.$$

3. Alice uses a standard Message Authentication Code $MAC$ with the keys $K_1,...,K_k$, and sends the value

$$N, MAC_{K_1}(N), ..., MAC_{K_k}(N)$$

to Bob.

4. Bob measures the time that passed between sending the parameters $p_1, ..., p_k$ in step 1 and receiving the values $N, MAC_{K_1}(N), ..., MAC_{K_k}(N)$ in step 3. If it is above a certain threshold, then he aborts the protocol.

5. Bob chooses $m$ numbers $n_1, ..., n_m$ from the set $\{1, ..., k\}$ (with $m << k$). Then, Bob computes by simulation through use of the algorithm $Sim$ for all $n_i$ the value

$$K'_{n_i} \overset{\text{def}}{=} Sim(p_{n_i}, D(S)) = M(p_{n_i}, S).$$

6. Bob checks if for all $n_1,...,n_m$,

$$MAC_{K'_{n_i}}(N) = MAC_{K_{n_i}}(N).$$

If this is the case, he regards the message $N$ as properly authenticated; if not, he does not.

In a nutshell, the protocol works because Eve is unable to determine the values $M(p_i,S)$ for randomly chosen $p_i$ comparably quickly as Alice. The fact that Bob does not check the correctness of the message authentication codes $MAC_{K_i}(N)$ for all $i =1,...,k$, but only for a randomly chosen subset $\{n_1, ..., n_m\}$, has the purpose of saving computational effort on his side.

Several variations of the protocol are immanent; for example, the keys $K_i$ could be computed as a function of the measurement values $M(p_i,S)$, or other procedures for the verification of the correct authentication other than simulation are conceivable (see section 9.2).

### 3.3.2 Identification of Entities

The identification of entities is a very fundamental cryptographic problem. The standard procedure devised by mathematical cryptography for that purpose is the Feige-Fiat-Shamir identification protocol [1]. In this protocol, Alice possesses a secret key $SK$ and a corresponding public key $PK$. $PK$ is publicly associated with Alice's name or her identity (similar as in a telephone book), and is in particular known to Bob. The Feige-Fiat-Shamir protocol, then, allows Alice to prove her knowledge of the secret key (and thus her identity) to Bob or anyone else *without* actually revealing the secret key in plain to the other person. Please note that the latter property of the protocol is essential, because if Bob would learn Alice's secret key, he could later impersonate her.

SIMPL systems allow to perform a similar protocol, but with SIMPL systems instead of binary numbers. The setting is comparable to above: Alice possesses a unique SIMPL system $S$, with respect to some measurement apparatus $M$, which has a description $D(S)$. The description $D(S)$ is publicly associated with Alice's identity or her name, and is known by Bob. Bob furthermore is assumed to know the set of measurement values $P_M$ of $M$, and the simulation algorithm $Sim.$ This can be achieved, for example, by putting this date in a certified public register, or by signing it by a central registration authority. Under these provisions, Alice can prove her identity to Bob as follows.

1. Bob sends a number of measurement parameters $p_1,..., p_k$ chosen uniformly at random from $P_M$ to Alice.

2. Alice determines the values $M(p_1,S),..., M(p_k,S)$ by experiment on her SIMPL system $S$, and sends them to Bob.

3. Bob receives values $V_1,...,V_k$, and measures Alice's response time. If it is above a certain threshold, he aborts the protocol (or might ask Alice to repeat it, and aborts only after several failed trials). A possible threshold that could be used is $2t_R$.

4. Bob he checks through simulation by the algorithm *Sim* if for all $i = 1,..., k$

$$V_i = M(p_i, S).$$

If this is the case, Bob believes Alice's identity, otherwise he does not.
Another variant is that Bob only verifies a subset of the responses which the obtained from Alice. A still further variant is that small error tolerances and deviations from $M(p_i,S)$ are allowed or a few $i \in \{1,...,k\}$, for which $V_i \neq M(p_i,S)$.
Again, some simple variations of the protocol are conceivable, for example by executing the verification procedure without conducting actual simulations, as discussed in section The advantages of using a unique and unreproducible SIMPL system instead of a secret binary key for identification are as follows:

1. A SIMPL system cannot be transferred or spied out from your computer system, for example through a virus or a Trojan horse, without your notice.

2. If secret keys are used in mobile environments like smart cards or, more significantly still, on RFID chips, it is long known that there is a severe danger of invasive or side channel attacks that extract these keys [2]. Once extracted, they can be duplicated at will in order to generate arbitrarily many effectively equivalent systems. This is particularly dangerous in the secure labeling of banknotes or passports, for example: One extracted secret key allows the fabrication of arbitrarily many valid notes. The physical unreproducibility of SIMPL systems prevents such types of attacks.

### 3.3.3 Copy Protected Digital Content and Digital Rights Management

SIMPL systems can also be applied to the management of digital rights and to the generation of copy protected content. We are going to describe the problem in the Alice -- Bob setting that we are by now familiar with: Suppose that some company *Com* wants to issue a digital content *C* in a certain representation or form to Alice, which we call the legal representation. This legal representation shall have the following properties:

1. Alice can prove to Bob over a binary channel that the content she holds is, in fact, in said *legal representation.* This certifies that Alice has the right to play the content.

2. Given the full *legal representation* of the content *C*, it is still impossible for Alice, Bob or a third, fraudulent party Eve to make a copy of *C* that has said *legal representation.*

SIMPL systems can be very successfully applied to the practical realisation of *legal representations*, as shown in the following protocol.

**Protocol 3.3 (Copy Protected Content through SIMPL Systems)**

**Generation of a Legal Representation of Some Content:**

1. *Com* generates a unique SIMPL system *S* with description *D(S)* .

2. *Com* creates a digital signature $Sig_{SK}(C,D(S))$ by use of its secret signing key *SK*, where *C* is (or includes) the digital content to be represented.

3. The *legal representation* of *C* , then, consists of the strings $C,D(S),Sig_{SK}(C,D(S))$ and the physical system *S*.

Please note that if necessary, *Com* can include this legal representation in any physical system which contains as subparts

1. A standard digital memory.
2. The SIMPL system *S*.

Such a system could, for example, be a USB stick, a desktop or laptop computer, or an RFID chip with sufficient memory.

**Variant of the Generation of Copy Protected Content:**

Alternatively, one can also assume that Alice holds or generates the SIMPL system at the beginning of the protocol. Then, Alice and *Com* may proceed as follows:

1. Alice generates or holds a unique SIMPL system *S* with description *D(S)* .

2. Alice sends the description *D(S)* to the company *Com.*

3. *Com* returns to Alice the strings $C,Sig_{SK}(C,D(S))$, where *SK* is *Com*'s secret signing key, and *C* is (or includes) the digital content to be represented.

4. Then, Alice can form a legal representation of *C* consisting of the strings C, D(S) ,$Sig_{SK}$(C, D(S)), and the physical system *S* .

As above, Alice may use store and transport this representation in any system which contains as subparts (i) a standard digital memory and (ii) the SIMPL system *S*. Such a system can, for example, be a USB stick, a desktop or laptop computer, or an RFID chip with sufficient memory.

**Testing if Alice holds a Legal Representation of *C* :**

In order to test whether Alice holds a legal representation of some content *C*, Bob can proceed as follows:

1. Alice sends to Bob the strings $C,D(S),Sig_{SK}(C,D(S'))$.

2. Bob checks whether the signature $Sig_{SK}(C,D(S'))$ is valid by using the publicly known verification key *PK* of *Com*. If it is invalid, he aborts.

3. Bob chooses uniformly at random measurement parameters $p_1,..., p_k$ from the set $P_M$, and sends them to Alice.

4. Alice determines the values $M(p_1,S),...,M(p_k,S)$ by measurement of *S* , and sends them to Bob.

5. Bob receives values $V_1,..., V_k,$ and measures Alice's response time. If it is above a certain threshold, he aborts the protocol (or might ask Alice to repeat it, and aborts only after several failed trials).

6. Bob checks through simulation by the algorithm *Sim* if for all *i* =1, ... , *k,*

$$V_i = M(p_i, S).$$

If this is the case, Bob believes that Alice holds a *legal representation* of *C*.

Again, several variations are conceivable: For example, Bob can execute the check of the correctness of the values $M(p_i,S)$ in a different manner (see section 9.2), or the legal representation of *C* can also include a characterization of the set of measurement parameters $P_M$, or the simulation algorithm *Sim* , if these are not known to Bob. Also error tolerances can be added, as discussed before.

Please note that the above general protocol between Alice and Bob applies to many situations in digitalized environments:

1. Suppose that a legal representation of some content *C* is part of an USB stick, which is inserted into a multimedia device or a computer. Then, the device can run the above protocol with the USB stick, where the device plays the role of Bob, and the USB stick plays the role of Alice. The device plays the content if and only if it believes that Alice (or the USB stick, respectively) holds a legal representation of *C* at the end of the protocol.

2. Suppose that the content *C* and the string $D(S), Sig_{SK}(C, D(S))$ are stored in the memory of a computer, and that some user wants to play *C*. Then the CPU can check whether it will grant the right to play or not, depending on whether the computer system can prove that it has got access to a SIMPL system *S* with description *D(S)*. The check can also be performed by a Trusted Platform Module (= TPM)

In other words, the role of Bob in the above protocol is played by the CPU in this situation, and the role of Alice is played by the computer system, the computer memory or, alternatively, by a personal, ID-like device that the user may be asked to connect externally to the computer if he wants to play *C*.

The advantage of our system compared to standard approaches is as follows:

1. In our scheme, a copy protected representation of some content is not merely a digital string like a digitally watermarked content [6], and hence cannot be trivially copied or reproduced.

2. Unlike some other known approaches which use unique physical structures in connection with digital signatures [15, 7, 8, 9], our approach allows that the legality of some representation of content can be checked without analogue measurements on the unique structures. That makes it applicable in completely digital environments like computers and on USB sticks. This is obviously a huge asset in comparison with other approaches.

### 3.3.4 Copy Protected Software

We will now deal with a special case of digital content, namely computer software. In order to see the difference between copy protection of software and general digital content, please note that we had to assume in section 3.3.3 that any devices that played digital content had been programmed to check whether the inserted content was in said legal representation. This presumption was necessary because digital content like movies or songs on CDs or DVDs are passive in the sense that they cannot enforce such a check by themselves - they simply cannot actively execute such measures. Computer programs, however, can do so, whence we devote an separate section to them.

The basic setting that we envision is as follows: We suppose that a company *Com* wants to licence a certain software program *P* to Alice. Alice is assumed to have a unique SIMPL system *S* with description *D(S)* on her computer. Under these premises, the two can proceed as follows.

### Protocol 3.4 (SIMPL Systems and Copy Protected Software)

1. 1. *Com* issues a *licensing signature*

$$LS \overset{\text{def}}{=} Sig_{SK_{Com}}(D(S), \text{Program} - \text{ID})$$

to Alice, which is generated by *Com's* secret signing key.

2. Alice stores the *licensing signature* in her computer system.

3. *Com* has implemented the following Subroutine A in the program *P*, which the program calls at the start of its execution:

(a) Call the operating system for the *licensing signature* and the description *D(S)* of the corresponding SIMPL system.

(b) Check the validity of the signature, and the correctness of the program-ID. If either is invalid, abort the program execution.

4. *Com* has also implemented the following Subroutine B in the program $P$, which the program calls in certain intervals, possibly relatively frequently, during its execution:

(a) Choose random measurement parameters $p_1,..., p_k$, and send them to the operating system.
(b) The operating systems is asked to use the SIMPL system $S$ in order to determine the values $M(p_i,S)$, and to send them to the program.
(c) The program determines by simulation whether the values values given by the operating system were correct.

Please note that in order to save computational expenses, the program may not check the correctness for all of the measurement parameters, but only for a randomly chosen subset. Furthermore, it may randomly choose not to check any values at all on certain executions of the protocol.

If both routines are linked to the program code in an inseparable manner, then any user who wants to run the program needs, first of all, a valid signature from *Com.* However, this binary signature alone could potentially be borrowed or copied from other users. Thus, our protocol is designed in such a manner that the computational power of the physical SIMPL system is required to run the program quickly. This physical system cannot just be copied from other users. If the program was run without possession of $S$ , then the numerical determination of right values $M(p_i,S)$ either slows down the program to an extent where it certainly becomes useless, or will even prevent an execution at all.

Please note further that also no sandbox simulation (that is, no simulation which runs an illegal copy of a program in a closed environment) can be used to trick our security mechanism. This is in opposition to any approaches that work on the basis of binary secret keys, which can in principle be overcome by such a sandbox simulation once the secret binary key is known to fraudsters and can be copied. Examples for such secret keys include program keys that are distributed together with the program, or secret keys stored in the operating system, or even serial ID numbers of computer chips. Please note that our scheme also enables a new business model for computer programs: Programs could be made publicly accessible, and customers only would need to pay for the *licensing signatures* issued by the software companies. This business model could in principle be used on the basis of current computer hardware, given that SIMPL systems will from now on be implemented in the users' PCs. Alternatively, users could be given a USB stick or a similar device which contains a respective SIMPL system $S$. This device could be be plugged into the computer at the start of, or possibly also during, the execution of some program $P$.

### 3.3.5 Labeling of Products, Banknotes and Identity Cards

The labeling of valuable goods is among the economically most relevant cryptographic and security problems. In 2004, the World Economic Forum in Davos estimated the worldwide damage through faked brand products per year to be on the order of 450 billion Dollars. Similar figures have been published by other institutions. It is known that unique physical structures can be applied fruitfully to that problem [7, 8, 15, 9, 16]. However, in most cases the characteristics of the physically unique object need to be determined through analogue measurement. This complicates the practical application and passivation of these structures, and makes the measurement apparatus more expensive.

SIMPL systems can be applied to the labeling of objects, too, but enable convenient testing of the labels through mere digital communication between the labeled object and the testing device. This can be advantageous, since such a communication could be executed remotely and via RFID-like techniques, and is generally less error prone than analogue measurements. The general idea is very similar to the exposition in the subsection 3.3.3:

1. In order to label a product, Alice generates a unique SIMPL system $S$ , and determines its description $D(S)$.

2. Alice generates a digital signature $Sig_{SK}(I,D(S))$, where $I$ is some arbitrary product related information, and writes the strings $I,D(S)$ and the signature $Sig_{SK}(I,D(S))$ onto the product.

3. Alice sticks $S$ to the product.

In order to test the validity of a label, Bob proceeds as follows:

1. Bob reads the strings $I,D(S),Sig'$ from the product, where $Sig'$ is the alleged signature.

2. Bob checks by use of the verification key $PK_{Alice}$, which is publicly known and associated with Alice, whether $Sig'$ is a valid signature of the strings $I$ and $D(S)$. If this is not the case, Bob believes that the label is invalid and aborts the protocol.

3. Bob chooses random measurement parameters $p_1,..., p_k$ from the set $P_M$, and sends them to the label.

4. If the label returns the values $M(p_1,S),...,M(p_k,S)$ correctly and quickly, then Bob believes that the label is valid.

Please note that this presumes that the label has got the capacity to measure the values $M(p_i,S)$ by itself (i.e., that it has got some "self-measuring capacity"). This can be achieved rather easily in the examples that we have named so far, in particular in IC structures. Note further that Bob's part lends itself easily to automatisation, and can be carried out mechanically by a testing machine. This testing machine does not need any secret keys for its operation, whose unveiling would endanger the security of the general system. It only requires the public key $PK_{Alice}$. This is an important asset if the testing machines shall be widespread, and shall be used in every fuel station or supermarket.
The same technique can be applied to the following:

- Banknotes (where the information $I$ should include the value of the note).
- Passports or ID cards, where $I$ should include personal information about the holder, possibly including biometric data.
- Access cards or bank cards, where $I$ should again contain some information about the card holder and the rights that are granted to him, possibly plus some biometric data. This data can be checked together with the card properties at the insertion point of the card.

In Figures 3 to 5 these approaches are further illustrated.
Figure 3 shows a bank note 30 that is provided with the SIMPL system 1 designated $S$. The bank note 30 is further provided with an indication 31 of the amount and comprises further readable information 32 concerning the monetary value $V$, an identification $I$ of the bank note 30, a description $D(S)$ of the SIMPL system 1 and a signature $Sig_{SK}(V,I,D(S))$ of the monetary value V, the identification I and the description D(S) using a secret signing key SK of an institution that issues the bank note 30.
The method may also be used for labeling a product 40 as illustrated in Figure 4. The product 40 is provided with the product label 41 and the SIMPL system 1 designated S. From the product 40 readable information 42 comprising an identification of the product 40, a description $D(S)$ of the SIMPL system 1 and the signature $Sig_{SK}(I,D(S))$ of the identification $I$ and the description $D(S)$ using a secret key of the manufacturer of the product 40.
Figure 5 shows an identification card 50 that is provided with a picture 51 of the card holder, that is further provided with biometric data 52 and the SIMPL system 1 and comprises readable information 53 containing an identification $I$ of the identification card 50 and the description $D(S)$ of the system 1 as well as a digital signature $Sig_{SK}(I,D(S))$ of the identification and the description using a secret key of the authority issuing the identification card 50.

### 3.3.6 A Generalisation: Virtual Proofs of Possession

The reader may have noticed that all applications of SIMPL systems (with the exception of section 3.3.1) can be seen as special cases of one general protocol. In this protocol, Alice tries to prove to Bob via a binary channel that she possesses a certain physical system with description $D(S)$. For example:

1. In order to prove her ID, Alice proves possession of a physical system that is associated with her identity (section 3.3.2).

2. In order to prove the right to play digital content, Alice proves the possession of a system that is linked to that content via a digital signature (section 3.3.3).

3. In order to check a label, the label or the labeled product or the ID card execute a Virtual Proof of Possession with the testing device (section 3.3.5).

Provided that the physical system in question is a SIMPL system relative to some measuring apparatus $M$, then - as we have seen - there is a standard method that achieves the desired goal: Bob chooses random measurement parameters $p_i \in P_M$, and sends them to Alice. Alice responds with the values $M(p_i,S)$. Subsequently, Bob believes that she possesses the system if and only if her responses are quickly and correctly. We would like to call this protocol a Virtual Proof of Possession, since it proves the possession of a physical system through remote, merely digital communication. Please note in this context how difficult it would be to prove possession of a certain physical object over a digital channel if the object was no SIMPL object!

**4 Modifiable SIMPL Systems**

**4.1 Informal Definition**

We will now turn to modifiable SIMPL systems. Roughly speaking, a modifiable SIMPL system $S$ should have the following property:

It shall be possible to physically modify or change the system $S$ into a system $S'$ such that the following holds:

1. $S'$ is a SIMPL system.
2. From knowing the descriptions $D(S)$ and $D(S')$, and under the premise that at some point in time $t_1$ a system $S$ with description $D(S)$ existed, and at some later point in time $t_2$ a system $S'$ with description $D(S')$ exists, one may infer that with very high probability, the system $S'$ with description $D(S')$ must have been generated by modifying the system $S$. That means, in particular, that at point $t_2$ the initial system $S$ no longer exists in its original form, but has been modified or destroyed.

**4.2 Realisation**

The realisation of modifiable SIMPL systems could be envisioned on the basis of resistor networks in the following manner: In order to modify system $S$ to system $S'$, one may change the network geometry, but leave the individual resistors (and their U-I-curves) unchanged. Then, the individual U-I-curves serve as a unique and invariant fingerprint of each network, since they remain unchanged through all possible modification cycles of the network. What changes in each modification are only the connections between the network resistors. The full description $D(S)$ of such a system in each possible modification cycle, then, should consist of the actual network geometry plus the invariant U-I-curves of each resistor element.

**4.3 Applications**

**4.3.1 Virtual Proofs of Destruction**

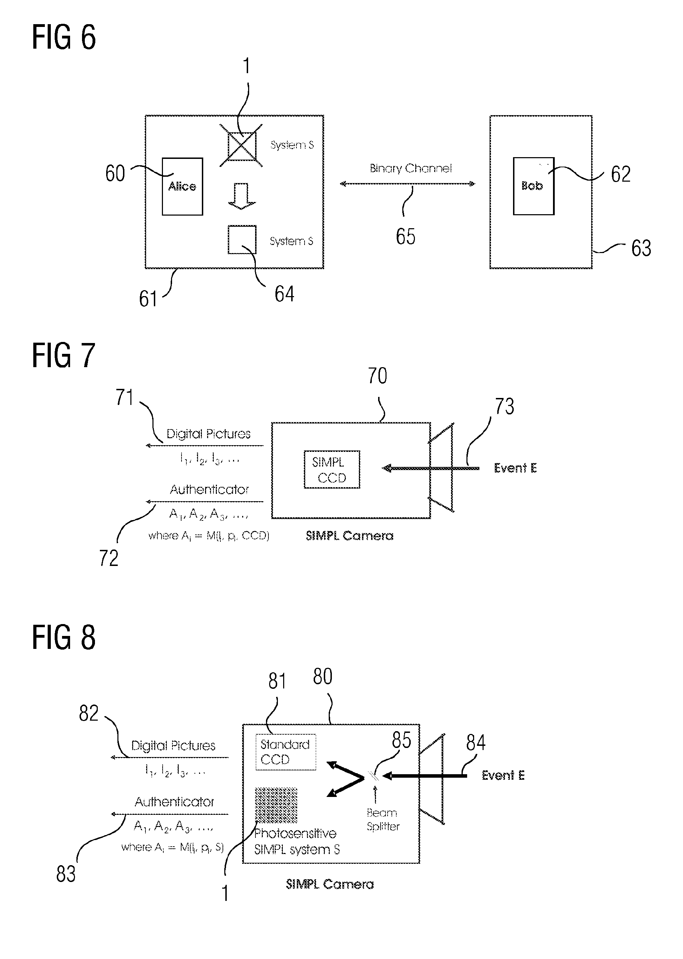

In opposition to the deductive exposition in section 3.3, we will this time start with the most general notion behind modifiable SIMPL systems. This notion is a communication protocol called a Virtual Proof of Destruction. In this protocol, Alice tries to prove to Bob over a binary channel that a certain physical system in her possession has been destroyed or irreversibly changed. Figure 6 illustrates the situation.

According to Figure 6, a functional unit 60 designated Alice is situated in a location 61 whereas a functional unit 62, designated Bob is situated in a location 63. Alice is able to modify the original system 1 into a modified system 64 and is further able to communicate with the functional unit 62 designated Bob by a binary channel 65.

If the system in Alice's possession is a modifiable SIMPL system, then Alice and Bob can execute a Virtual Proof of Destruction as follows:

**Protocol 4.1 (Virtual Proof of Destruction)**

1. Alice and Bob execute a Virtual Proof of Possession (see section 3.3.6) of the system $S$ with description $D(S)$. We assume that this description was either publicly known before the Virtual Proof, or was sent to Bob by Alice.

2. Alice modifies or destroys the original system $S$ , and turns it into a system $S'$ with description $D(S')$.

3. Alice sends $D(S')$ to Bob.

4. Bob checks whether $D(S')$ allows the conclusion that $S'$ must have been generated by modification of $S$.

5. Alice and Bob execute a Virtual Proof of Possession of the system $S'$.

6. If the Virtual Proofs in steps 1 and 5 and Bob's check in step 4 have been successful, then Bob believes that the system $S$ no longer exists in its original state (and, thus, has been "destroyed" in a certain sense).

Please note the general difficulty of designing a binary communication protocol that proves that a certain physical object has been destroyed in case this object is not a SIMPL system.

### 4.3.2 Provable Erasure of Files

Assume the following scenario: Alice's computer has a special architecture with the following properties:

1. Part of the computer are several SIMPL systems $S_1,..., S_k$.

2. Every file $C_1,..., C_k$ on the computer is associated with one SIMPL system (let us assume w.l.o.g. that each $C_i$ is associated with the system $S_i$).

3. Every file $C_i$ is stored in the following format:

$$C_i, D(S_i), Sig_{SK_{CP_i}}(C_i, D(S_i)).$$

whereby $CP_i$ is the content provider with whom the file $C_i$ originated and $SK_{CP_i}$ is the secret signing key that of $CP_i$. The corresponding public key we denote by $PK_{CP_i}$.

4. Before granting the right to play or execute any file $C_i$, or even before granting the right for accessing or copying the file, the CPU of the computer system is programmed to do the following:

   (a) It checks the validity of the signature by use of the public key $PK_{CP_i}$.

   (b) It checks whether the SIMPL system $S_i$ is present in the computer system by a Virtual Proof of Possession (see section 3.3.6) between the computer system and the Central Processing Unit (= CPU) and/or a Trusted Platform Modul (= TPM).

Then, the CPU grants the right to play, execute, copy or access the file if and only if both conditions are fulfilled.
In this situation, the right to use any file $C_i$ is obviously linked to the existence of the associated SIMPL system $S_i$. If this system is destroyed, the file cannot be read, played or executed, or even copied from the system any more. Hence, destruction of $S_i$ amounts in a certain sense to the erasure of the file $C_i$.
Since the destruction of $S_i$ can be proved through a Virtual Proof of Destruction, this means that we can use a VP of Destruction in the above setting to prove the erasure of a file in a certain sense. This technique can be applied in a variety of settings. For example, when Alice has rented a digital video file for some limited time, and now wants to hand back the playing rights: She can prove to the rental company that she destroyed the representation that is necessary to watch the file (presuming that her playing device has got similar internal mechanisms as just described). Another application would be computer programs that you can take for rent and that you provably "destroy" after some time of use.

### 4.3.3 Migration of Files

The problem of migration of files is the problem of passing on a computer file from Alice's computer $PC_1$ to Bob's computer $PC_2$, such that provably no copy of the file is kept by Alice in the old system $PC_1$. Ideally, Bob should later be able to pass on the file in the same manner to Claire etc., which requires that Bob stores the file in the same format as Alice. This allows successive application of the original protocol that enabled migration from Alice to Bob.
A cornerstone in solving the problem of migration is to find a mechanism that proves that the representation of the file on Alice's computer has been destroyed. This suggests the application of the techniques from the previous section. Closer inspection reveals a second problem, however: In order to regenerate a valid representation of $C_i$ in the required format

$$C_i, D(S_i), Sig_{SK_{CP_i}}(C_i, D(S_i)),$$

on Bob's computer, Bob needs a new digital signature. This signature must link the file $C_i$ to a new SIMPL system $S_i' \neq S_i$,

where $S_i'$ is a SIMPL system present in Bob's computer $PC_2$.

Who creates this signature? Only the company $CP_i$ that has originally issued the file $C_i$ and that has signed the original representation of $C_i$ should be able to do so (or, alternatively, one subsidiary mandated by $CP_i$). $CP_i$ will not, however, sign new representations right away, without possessing some proof that the file has been destroyed on Alice's system $PC_1$. These observations suggest that Alice, Bob and the company $CP_i$ may proceed as follows in order to migrate a file $C_i$ originally issued by $CP_i$, from Alice's to Bob's computer:

**Protocol 4.2 (Migration of Files)**

1. Alice gets in touch with $CP_i$ and announces the migration of a file $C_i$ to Bob. To that aim, she sends a hash value of $C_i$ and Bob's identity to the $CP_i$.

2. Given that $C_i$ has been stored on Alice's computer in the form

$$C_i, \ D(S_i), \ Sig_{SK_{CP_i}}(C_i, D(S_i)),$$

Alice sends the description $D(S_i)$ and the signature

$$Sig_{SK_{CP_i}}(C_i, D(S_i))$$

to $CP_i$.

3. $CP_i$ checks the validity of the signature. If it is invalid, it aborts the protocol.

4. $CP_i$ and Alice execute a Virtual Proof of Destruction (see Protocol 4.1) of the system $S_i$. If the proof fails, the $CP_i$ aborts the protocol.

5. Bob sends to the $CP_i$ the description $D(S_i')$ of the SIMPL system that he intends to associate on his computer with the file $C_i$.

6. The $CP_i$ returns the signature $Sig_{SK_{CP_i}}(C_i, D(S_i'))$ to Bob.

7. Bob stores the new valid representation

$$C_i, D(S_i'), Sig_{SK_{CP_i}}(C_i, D(S_i')),$$

of the file $C_i$ on his computer.

Please note that if the privacy of Alice and Bob is a concern, then Alice should send the hash value of a one-way hash function to the $CP_i$ in step 1. Furthermore, authenticated or encrypted communication between Alice and Bob may be applied whenever needed.

**4.3.4 SIMPL Cash Cards**

Modifiable SIMPL systems also can be applied in the context of cash cards: One may equip a cash card with a modifiable SIMPL system $S$ and a digital signature by the issuing bank. This signature signs the "value" that is associated with $S$, for example 100 Euros, together with $D(S)$. In order to pay an odd amount of 50,87 Euro to a vendor, the following protocol is executed between the card holder, a vendor and the bank:

1. The card is handed over form the card holder to the vendor or inserted into a machine at the vendor's or the card holder's site.

2. The vendor reports to the bank, sends the payable amount, $D(S)$, the value of the card, and the signature that certifies the value of the card together with $D(S)$, and executes a virtual proof of possession of the corresponding object.

3. After that, $S$ is modified into an object $S'$, and the vendor and the bank execute a proof of destruction.

4. After that, the bank issues a new signature of the new description $D(S')$, and the new value 100 - 50, 87=49,13 Euros. This signature is stored on the SIMPL cash card.

The advantage of this protocol compared to known digital cash and e-cash protocols (see [17] and references therein) is the fact that double spending by either the vendor or the card holder is not a problem. Hence, one does not need to maintain a list of all spent coins at the site of the bank.

## 5 Tamper Sensitive SIMPL Systems

### 5.1 Idea and Concept

A *tamper sensitive SIMPL system* (or a *TS SIMPL system*, for short) is a SIMPL system $S$ with the following additional property: If the structural integrity of $S$ is violated, for example through drilling a hole into the system or disassembling the system, then it becomes infeasible to quickly answer random challenges $p_i$ with the correct values $M(p_{i,}S)$.

### 5.2 Realisation

The standard realisation of a SIMPL system, namely a resistor network, probably is also a TS SIMPL system: Imagine that a hole is drilled in the network, which destroys a number of connections and resistors. Then, the behavior of the system likely will change in an unrecoverable manner. Numerical simulations could probably be used in order to to back up this argument, and to show the sensitivity of the structure against destruction.

One could also use a layer of a TS SIMPL network in order to protect an underlying IC structure. If the TS SIMPL layer is removed or perforated, it will be destroyed. This protects the IC against tampering, invasive attacks, manipulations, and read out of keys.

### 5.3 Applications

#### 5.3.1 Virtual Proof of Hardware Integrity and Hardware Functionality

The main application of TS SIMPL systems is probably a virtual proof of untamperedness or hardware functionality. In this scenario, Alice can prove to Bob over a binary channel that her hardware has not been manipulated, even if Alice and Bob have never met before, and even without an online connection to a central authority. This is a particularly big asset in the long predicted ubiquitous or pervasive computing environments [27, 28, 26], in which all kinds of computers and intelligent machinery are supposed to pervade our everyday life, from intelligent refrigerators to smart cars and *PDAs*. As a current example, MIT's *Project Oxygen* is directed towards investigating such a setting [25].

In such scenarios, typically quite extreme security and privacy issues arise. One important subissue is how Alice can trust a device that she has just encountered for the first time in an ubiquitous environment, for example a printer that is supposed to print a personal file, or an access point via which she likes to download data. The danger for Alice is that this device could have been designed to be malicious from the start, or that it might have been tampered and turned to be malicious by some adversary during the lifetime of the device. What we would require in such a situation is two-fold: First of all, a guarantee by the (trusted) manufacturer of the device, for example *FACTORY*, about the device's functionality when it left the foundry. Secondly, a proof that the device has not been manipulated since.

Please note how difficult it is to check these two facts by mere binary communication. Since binary keys can potentially be extracted from the devices (see [2]), their security potential in such a scenario is limited. Furthermore, highly secure protection mechanisms against read out (sensitive meshs with temperature sensors etc.) usually are bulky and expensive. Tamper sensitive SIMPL systems, however, provide a structurally novel solution to the problem which is inexpensive, lightweight and small. The next protocol describes this solution in detail.

**Protocol 5.1 (Virtual Proof of Hardware Integrity and Hardware Functionality)**

1. The manufacturer of a computing device or a computer chip $C$ (like, for example, *FACTORY*) covers $C$ by a TS SIMPL layer. It obtains a description $D(S)$ of the layer, and signs it with its secret signing key. *FACTORY*, then, stores on the chip the data

$$D(S), Sig_{SK_{\text{INTEL}}}(D(S)).$$

We further suppose that the public key of *FACTORY*, denoted $PK_{INTEL}$, is publicly known.

2. If Alice gets in touch with the chip $C$ or the device that contains $C$, she requires the description $D(S)$ from the chip, plus *FACTORY's* signature $Sig_{SK_{INTEL}}(D(S))$.

3. Alice checks by use of $PK_{INTEL}$ whether the signature is valid. If not, Alice aborts.

4. Alice checks whether the TS SIMPL layer around $C$ is still intact.
To that aim, she chooses a number of random measurement parameters $p_1, .... p_k$ and sends them to the chip $C$.

5. The chip measures the values $M(p_i, S)$ at the layer, and returns them to Alice.

6. Alice measures whether the response time was quick enough. If it is above a certain threshhold value, she aborts.

7. Alice checks whether the responses were correct through simulation by use of the algorithm Sim. She does so only for a randomly chosen subset of all parameters $p_1,..., p_k$ in order to save computational effort.

Alice believes in the trustworthiness of the device if and only if all (or a significantly large fraction) of the responses were correct.
In other words, Alice executes with the chip a Virtual Proof of Possession of the untampered protection layer $S$ that covers the chip. Please note that *FACTORY* could also provide a description of the functionality of the chip $C$ in the data and in the signature. That means that the chip could prove its original, untampered functionality to Alice merely via a binary communication. In an ubiquitous computing environment, this protocol would obviously have very strong applications.

## 6 Interacting SIMPL Systems

Another relevant security issue is to prove that two objects $O_1$ and $O_2$, or two parties Alice and Bob, have been at the same physical location at a specific point in time. Usually, such a proof of colocality is carried out with regard to a third party Claire. It is assumed that Claire is located remotely, and that she can communicate with the two objects/parties merely by a binary channel. This makes the proof very difficult, especially if the resulting protocol shall provide a security guarantee for Claire even if Alice and Bob cooperate maliciously. A special type of SIMPL system, which we call interacting SIMPL system, can help us to achieve such guarantees.

### 6.1 Definition

We will start by a definition of interacting SIMPL systems.
**Definition 6.1 (Interacting SIMPL Systems)** Let $S_1$ and $S_2$ be two SIMPL systems with respect to some measurement apparatuses $M_1$ and $M_2$. They shall have sets of measurement parameters $P_{M_1}$ and $P_{M_2}$, response times $t_{R_1}$ and $t_{R_2}$, descriptions $D(S_1)$ and $D(S_2)$, and simulation algorithms $Sim_1$ and $Sim_2$, respectively. $S_1$ and $S_2$ are called Interacting SIMPL Systems if the following holds:

1. $S_1$ and $S_2$ can be linked together, or physically coupled, in such a way that they together form a new, joined SIMPL system $S^*$ with respect to a measurement apparatus $M^*$. $S^*$ has got a set of measurement parameters $P_{M^*}$, response time $t_{R^*}$, description $D(S^*)$, and simulation algorithm $Sim^*$.

2. $P_{M^*}$, $t_{R^*}$, $D(S^*)$ and $Sim^*$ can be obtained by an efficient, publicity known procedure from knowledge of $P_{M_1}$, $P_{M_2}$, $t_{R_1}$, $t_{R_2}$, $D(S_1)$, $D(S_2)$, $Sim_1$, and $Sim_2$.

3. It is infeasible for an adversary Eve to succeed in the following experiment with a probability greater than 3 / 4 :

> (a) Eve is given a characterization of the sets $P_{M_1}$, $P_{M_2}$, the response times $t_{R_1}$, $t_{R_2}$ , the descriptions $D(S_1)$, $D(S_2)$, and the simulation algorithms $Sim_1$, $Sim_2$.
> (b) Eve is given arbitrary access to the two systems $S_1$ and $S_2$ for a period of several days.
> (c) After that, Eve can still access both systems $S_1$ and $S_2$ and is allowed to use any set-up to handle them at will, but must place the two systems at a distance of at least 10 $m$ from each other.
> (d) Then, Eve is presented with a measurement parameter $p^*$ that was chosen uniformly at random from the set $P_{M^*}$, and is asked to output a value $V$ .

We say that Eve succeeded in the above experiment if the following conditions are met:

(a)

$$V = M(p^*, S).$$

(b) The time that Eve needed to output $V$ after she was presented with $p^*$ is at most 2 $\cdot t_{R^*}$.

Please note that said probability of 3 / 4 is taken over the uniformly random choice of $p^* \in P_M$, and over the random choices or actions that Eve might take in steps 3b, 3c, 3d.

### 6.2 Realisation

Let us have a word on the realisation of interacting SIMPL systems. Again, certain complex electrical or optical structures seem well suitable, including complex integrated circuits such as cellular non-linear networks, complex non-linear and/or diode networks, complex SRAM or other memory structures with special designs, photonic crystal microcavity arrays, random dispersions of optically active particles in a solid body matrix, etc.

Regarding ICs, it is known that the transient behavior of ICs can be sensitive to processes in the nanosecond range (which applies, for example, trivially to ICs with GHz clock rates). If two suitably designed SIMPL systems with such clock rates interact with each other, then the distance between them will sensitively influence their transient behavior. Recall that the information exchange between them is limited by the speed of light, which travels only 30 $cm$ within 1 $ns$, and which requires 33 ns = 0.03 $\mu$s to cover a distance of 10 $m$. Placing the two systems at a distance of 10 $m$ will thus influence their transient behavior in a distinctive way. This makes two complex ICs that operate at high frequencies, and which are designed to react sensitively on signal delays, good candidates for interacting SIMPL systems.

Please note further that the two ICs can be coupled in many ways, ranging from optical, electrical, radiowave to magnetic or other data transmission or coupling effects. For example, it might be useful to convert the internal IC signals at the interface between the two SIMPL systems into radiowave or optical signals, in order to get better control of delay or temperature effects, or in order to achieve higher practicality and easier coupling.

### 6.3 Applications

As is immanent from their definition, the properties of two interacting SIMPL systems $S_1$ and $S_2$ can be used to prove to a third party that $S_1$ and $S_2$ are in the same location. The details are given in the next protocol.

### Protocol 6.2 (Proof of Colocality of two Interacting SIMPL Systems)

1. Alice holds an interacting SIMPL system $S_1$, and Bob holds an interacting SIMPL system $S_2$. They claim that

both are in the same location. Claire wants to verify this by virtue of a binary communication between Alice/Bob and herself.

2. Alice and Bob send a characterization of the sets $P_{M_1}$, $P_{M2}$, the response times $t_{R_1}$, $t_{R_2}$, the descriptions $D(S_1)$, $D(S_2)$' and the simulation programs $Sim_1$ and $Sim_2$ to Claire.

3. Alice and Bob form the joined system $S^*$ from $S_1$ and $S_2$.

4. Claire derives a characterization of the set $P_{M^*}$, the response time $t_{R^*}$, the description $D(S^*)$, and the simulation program $Sim^*$, from the data she received from Alice and Bob.

5. Claire chooses several measurement parameters $p_1,..., p_n$ uniformly at random from the set $P_{M^*}$, and sends them to Alice and Bob.

6. Alice and Bob determine the values
$M^*(p_i,S^*)$ for $i=1,...,n$
by measurement on the (joined, coupled) system $S^*$, and send them to Claire.

7. Claire checks by use of her simulation tool $Sim^*$ that the received values are correct, and also checks that the response time of Alice and Bob was fast enough, i.e. below a certain threshold. A possible suggestive threshold would be $2t_{R^*}$.

If both conditions are fulfilled, Claire believes that $S_1$ and $S_2$ were in a range of 10 $m$ to each other, if not, she disbelieves it.

The choice of 10 $m$ as the mutual distance is to some extent quite arbitrary; suitable other values could be used, too, and the protocol and the definitional properties of the systems could be adjusted accordingly. Please note that the protocol is secure against two maliciously cooperating parties Alice and Bob. It also requires no secure hardware or software environments on Alice's and Bob's side, nor any secret cryptographic keys in their hardware systems.

**Extension**

By refinement of the described technique, it seems even possible to proof the continuous metrical distance of the two objects to Claire, albeit with certain limitations on the achieved resolution. Please note, for example, that a sensitivity of the interacting SHIC systems on the nanosecond range seems possible, which could allow determination of the distance at the order of 30 $cm$ or 1 $m$ (see also discussion in section 6.2).

**7 SIMPL Cameras**

We will now describe how SIMPL systems might assist us in building security cameras with novel properties. We will start by saying something about standard security cameras and their limitations.

**7.1 Current Security Cameras**

The authentication of digital images and video recordings naturally has achieved a lot of attention. In particular, the juridical relevance of such recordings is a matter of discussion, since they can in principle be faked and manipulated, albeit with some effort. Possible countermeasures are discussed, for example, in [18, 19].

In [18], the authors suggest that each police surveillance camera could contain a secret cryptographic key, by which the recorded images could be signed through a digital signature scheme (see [3, 4, 5] for an explanation of digital signatures). Also further measures such as changing the camera focus or using a flash to briefly illuminate the image are discussed in

[18]. This approach is certainly very interesting, but some problems remain. Let us illustrate these by two examples.

Example 1: One day, Eve comes up with a digital video which shows Alice killing someone. Eve reports this video to the police, and demands that Alice is taken to jail. The video stream has been signed with Eve's personal secret signing key. This key is used for general purposes by Eve, and is also contained in Eve's camera.

Example 2: The police has recorded Alice murdering Bob at a public location by a public, automatic surveillance camera. Again, the video stream is signed by the secret key contained in the camera.

The problem with these recordings is as follows:

1. In Example 1, Eve could have faked the whole video on a digital computer, and then signed it subsequently with her personal cryptographic key. Thus, the digital signature in effect says nothing about the credibility or reality of the video.

2. In Example 2, there is the possibility that someone inside the organisation (a criminal policeman) might have tampered the camera, extracted the camera's key, and could have used it to sign a faked video stream like Eve did in example 1. Furthermore, somebody might have used an image projector in order to project a faked video from outside onto the lens of the public surveillance camera.

**General Problems.**

Abstracting from the given examples, the general problems with current approaches, which work on the basis of secret binary keys, are as follows:

1. They assume that the camera is untampered.

2. They assume that only trustworthy persons know the secret key of the camera.

3. They assume a public key infrastructure, in which the public key associated with the camera is publically known.

This implies that the general, well-known problems of PKIs [24] carry over to our security cameras. To name just one: Is the equivalent of key revocation possible? That is, what happens when some incriminating video material signed with the secret cryptographic key of some camera appears in court, and at the same time the defence can present that the camera carrying the secret key has been destroyed or physically tampered with, suggesting that the key had been stolen and abused?

The situation apparently results in a dilemma: If a destroyed or tampered camera implies no liability, then any criminal can destroy the camera after an incriminatory recording in order to escape a verdict. If, on the other hand, the tampering of a camera has no influence on the jurisdiction, then maliciously extracting a key and using it to sign a faked video enables the creation of inculpatory material against innocent persons.

4. Security cameras commonly are not designed to notice the difference between recording a real-world event or object and recording a faked imitation like a picture, an LCD screen, a beamer projection etc.

**Criteria for Security Cameras**

These problems entrail that a security camera should fulfill the following criteria.

1. The camera must be able to identify the difference between a real-world event or object and a faked event or object which is shown on a picture, on a screen, an LCD array, through a beamer projection, etc. This can help us to prevent fraud under the assumption that the camera is untampered.
2. The construction principle of the camera may not rely on secret keys that are required in the camera, so that the camera is not affected by PKI-like problems or by attacks that extract this secret key from it.
3. The design of a camera that must ensure its security even if it is tampered and/or disassembled.

These criteria are sorted in increasing order of difficulty, and all on their own constitute criteria that significantly increase camera security. The first item appears to be non-trivial, but workable on the basis of current knowledge in optics. The second and third item, however, require new concepts beyond secret keys. This is where SIMPL systems enter the picture.

**7.2 Idea and Concept of SIMPL Cameras**

We will now describe one approach that is capable of settling the open problems of the last paragraph, so-called SIMPL cameras.

**Basic Principle.**

SIMPL cameras are cameras which employ one or more SIMPL system in order to convert the incoming analogue image stream into a sequence of binary bitstrings

$I_1,I_2,I_3,...,A_1,A_2,A_3,....$

Thereby the strings $I_i$ are the digital images derived from the incoming analogue image stream, and the strings $A_i$ are called the authenticator or authenticator stream. This authenticator stream consists of data produced aside by the camera, as a function of the incoming images and the SIMPL system or SIMPL systems contained in the camera. Its purpose is to later prove that the recording was authentic and, indeed, shows an unaltered real-world event.

Unlike the approach described in [18], a SIMPL camera should not be based on the use of secret cryptographic keys in the camera only. They can be included aside if necessary, but should not constitute the fundamental security measure of the camera. The principle is illustrated in Figure 7.

Figure 7 shows a camera 70 that is provided with the SIMPL system 1 designated as a SIMPL recording chip. The SIMPL system 1 may be a chip that generates digital pictures 71 and digital authenticating data 72 that can be used for verifying that a physical event 73 has been recorded by the camera 70.

**Key Idea.**

The key idea in the design of SIMPL cameras is to generate the authenticator stream by a complex physical interaction between the optical wavefront irradiated by the real-world event, and the unique SIMPL system inside the camera. This interaction should exploit the analogue computational power of a SIMPL object. For reasons of computational complexity, it should be much slower or even practically infeasible to artificially generate the authenticator stream on a digital computer, without physically irradiating the SIMPL part of the camera with the actual wavefront. This has the security effect that the authenticator and, thus, a valid recording, cannot be faked computationally comparably efficiently inside a purely digital environment like a digital computer.

**Verification of the Authenticator.**

In order to test a supposedly valid recording for genuineness , which consists of the strings
$I_1,I_2,I_3,...,A_1,A_2,A_3,...,$
it is necessary to check whether the images $I_i$ really would induce the authenticators $A_i$ under the use of a certain SIMPL system $S$ in the camera. In order to achieve that aim, one would employ a simulation of the system $S$ and the occurring interaction with the wavefront, and compare the results of the simulation to the given values of the authenticators. The basis for the simulation would be given by the simulation algorithm Sim, the description $D(S)$ of the SIMPL system $S$ inside the camera, and the digitised data that describes the wavefront, namely the images $I_i^D$. Please note that this simulation becomes easier if the SIMPL system is directly integrated in the CCD or other recording cicuitry, as shown in Figure 7, where the SIMPL system 1 might be a simple CCD, for example through adding unique non-linear resistors to its circuitry or by use of a circular cellular network (CCN) with a respective unique structure. In order to save computational expenses, one might check the correctness of the authenticator by a random spotcheck, that is, only for a relatively small number of randomly chosen values of $i$. Alternatively, verification that the interaction really produced the authenticator might be possible without laborious simulation from scratch, see section 9.2.

Please note further that due to the necessity for verification, the system inside the camera needs to be a SIMPL system (and cannot just be any arbitrarily complex optical system). Otherwise, no verification of the authenticator was possible.

**7.3 Realisation of SIMPL Cameras**

We will nowdiscuss some relevant design issues occurring in the realization of SIMPL cameras in section 7.3.1, and subsequently try to provide some abstract design for future research in subsection 7.3.2.

**7.3.1 Some Design Issues**

**Photosensitve SIMPL Systems.**

It is quite apparent that the described approach requires the use of a photosensitive SIMPL system inside the camera. By that term, we refer to a SIMPL system whose behaviour is sensitive to an light signal, for example an image, that is projected onto the system. The following potential implementations come to mind:

1. A network of photosensitive, unique non-linear resistors [13, 11, 12].

2. A photonic crystal microcavity array.

3. A CCD, which has been designed to have unique features, like, again, non-linear resistors as parts of its circuitry, or some sort of "skew design" [14].

4. A Circular Cellular Network, which has been designed in a unique and hard to reproduce fashion. This could be met, again, through skew designs, or through certain manufacturing irregularities.

When describing photosensitve SIMPL systems, it would be straightforward to extend our earlier terminology, and use the expression $M(p^*,S)$ in order to denote the behaviour of $S$ under experimental conditions $p^*$, where the parameter $p^*$ includes an (analog) image $I^A$ and possible further side conditions $p$ . In order to highlight dependency of the image, though, we will instead write

$$M(I^A, p, S).$$

**Two Basic Design Options.**

Two basic design options for SIMPL cameras that involve photosensitive SIMPL objects are illustrated in Figures 7 and 8. They involve either a beam splitter, or, alternatively, try to derive the image and the authenticator stream from the same device. Please note that several variations are conceivable, such as combining both approaches in one camera, or using several beam splitters in order to split up the light beam $k$ times, etc.

**Some Further Promising Security Measures.**

There are a number of other security measures that might be of interest in the design of SIMPL cameras.

1. Split the incoming light beam into $k$ beams, which are incident upon different systems which record or analyse different aspects of the image. They could, for example, care about different spectral information, or record at different frequencies and/or different resolutions. In order to unfold the full power of this approach, one would need to make sure cryptographically that the recorded, split views originate from the same real-world object and not from two independent sources.
Figure 8 shows a camera 80 that comprises a standard CCD. The CCD 81 produces digital pictures 82. The camera 80 further comprises the separate photosensitive SIMPL system 1 that produces authenticating data 83. The standard CCD 81 and the photosensitive SIMPL system 1 record a physical event 84 using a beam splitter 85 that directs the incoming light associated with the physical event 84 to the standard CCD 81 and the photosensitive SIMPL system 1.

2. Use a flash, that is directed at the recorded scenery, and which illuminates it for a very small time interval. Record the "response" of the scenery, expecting a very short illumination of the picture. A beamer that is directed at the camera could not regenerate this response comparably quickly and with comparable time resolution!

3. Exploit the three-dimensionality of a real-world scenery, for example by recording from different angles or positions, or by changing the camera focus. All these changes can be done pseudo-randomly, for example in dependence of the output of the SIMPL system on previous images, to make them unpredictable for a fraudster.

4. In certain scenarios, such as bank withdrawals or declarations of will, one might also ask the person that is recorded on the video to perform certain actions, such as waving the hands, making certain gestures, speaking out loud a certain random number sequence, etc [19]. This can make the pre-computation of faked video material more difficult, since a fraudster cannot predict the actions that are required from the recorded person.

5. One of the most suggestive attacks to trick a SIMPL camera is to project an artificially generated digital image sequence via a beamer onto the camera lens. The standard answer to this was to let the SIMPL camera record in time intervals which are beyond the beamer switching times. In turn, a fraudster might try to encounter this by disassembling the camera and forcing the SIMPL system to record at slower rates, which the fraudster can match with his beamer (please note, though, that this requires considerable effort, and will be strictly impossible in certain application scenarios). However, one might also think about countermeasures against this: One could use a SIMPL system in which the recording of one image frame depends on the previous image and on the time that has passed between the recording of the two frames. For example, the SIMPL system might still oscillate, or be in a certain stage influenced by the previous picture, for a time interval $t_1$ after the shooting of the first picture. If the second picture is not projected and recorded at the SIMPL system within that time frame, then this results in a detectable change of the recorded picture. Therefore, a SIMPL system that prevents slow replay at lower frequencies and witnesses that the recording rate was very low at real time should be a suitable counter measure.

### 7.3.2 A General Design Procedure

We would like to conclude this section by recommending an abstract design procedure that can guide further implementation efforts. On building a SIMPL camera, it seems helpful to proceed in three conceptually separate steps:

1. In the first step, one should not bother about SIMPL systems at all, but merely search for optical effects that are suited to distinguish a real-world event or object from a faked one. Examples of potential fakes include a paper picture, a TV picture, a picture on a LCD screen, a beamer projection that is directed into the camera lense, or a beamer projection onto a wall at which the camera is directed at. Measures like illuminating the scenery with a flash, recording it from different angles, or random changes in the camera focus can be of help here. These and several other possible measures have been described also in earlier subsections of section 7.

For example, if a real-world scenery is illuminated with a very short flash pulse, it comes to a characteristic and very short illumination of the colours with sharp peaks. This effect cannot be generated a comparable time scales with a beamer or an LCD array, because these react too slowly. Furthermore, real world objects generate characteristic spectra with partly very sharp peaks even without being illuminated, that also can hardly be imitated through LCD arrays and the like.

2. In a second step, one has to make sure that the above distinctive effects are recorded by SIMPL sensor systems. In other words, one needs to design the sensors that record these effects in a SIMPL manner, which means that their behaviour through the recording process can be simulated or verified by other means but can not be simulated or imitated on comparable time scales as the real-time behaviour of the original SIMPL system.

3. In a final step, one should try to make sure that no valid authenticator stream can be generated even if the camera is disassembled, and a fraudster can play with all parts of the camera at will.

Taken together, the resulting architecture should enable the following two conclusions:

1. On the basis of the recorded sensor data such as the image stream, the spectra of the recorded objects, reaction to flash illumination, three-dimensional images, etc., one may conclude that the recorded event is real, provided that the given data had been taken from a real scenery, and not been faked numerically inside a computer. Please note that the latter provision cannot be guaranteed by any sensor data alone: Any sensor curve, any measurement signal can just as well be a fake, in particular an digital imitation or digital emulation of a real measurement curve. Lying about supposed measurement data is really easy.

2. On the basis of the authenticator and the complex analogue computation carried out by the SIMPL object, one should be able to rule out that the sensor data has been generated artificially inside a computer. The reason is that creating the authenticator without exploiting the computational power of the SIMPL object would have been computationally too expensive. That allows to conclude that the optical wavefront or other signals that generated the sensor data must have been really existent.

Taken together, these two conclusions logically imply that the recorded image stream and the event they show corresponds to a real physical event, which is what we desired.

### 7.4 Applications of SIMPL cameras

### 7.4.1 Authenticated Video Material

The most suggestive application of SIMPL cameras is the generation of authenticated video material. The envisioned scenario is a stand-alone camera (such as a surveillance camera), which records the image streams together with the authenticators. A judge in court shall later be able to determine the authenticity of the images through use of the authenticators.

Please note that this scenario can be complemented through two public authorities: The first authority continually generates a stream of random numbers $R_1$, $R_2$,.... This stream can be transferred into measurement parameters $p_1$, $p_2$,..., which are used in the generation of the authenticators $A_i$ according to

$$A_i \stackrel{\text{def}}{=} M(I_i, p_i, S),$$

where $I_i$ is the $i$-th image in the image stream, and $S$ is the SIMPL system in the camera (assuming wlog that there is just one).

The second authority acts as a time stamping authority: After the image stream and the authenticator stream have been generated in dependency of $R_1$, $R_2$, ..., they can be sent to the time stamping authority, which signs them together with the date and time of receipt. Alternatively, to enhance privacy, one may use a collision-free hash function and have the hash values signed.

This procedure enables us to pinpoint the time frame in which some video recording was made: It must have been made after the first authority has issued the utilised random number sequence, and is guaranteed to have been made before the time stamp issued by the second authority.

The advantage of a SIMPL stand-alone camera is the fact that the authenticity of the recorded images does not depend on a secret cryptographic key inside the camera which can be stolen or copied, and that it would also be secure against other attacks that use a faked image stream that was merely generated in a digital environment like a computer.

### 7.4.2 Virtual Proofs of Events

SIMPL cameras can also be used for a protocol in which Alice proves over a binary data connection (like the Internet) to Bob that a certain event E has occurred at her location. The situation is similar to the one described in the last subsection.

**Protocol 7.1 (Virtual Proofs of Events)**

1. Alice announces the recording of the event $E$, and sends the description $D(S)$ of the SIMPL part of the camera to Bob. Alternatively, this description might be publicly known from the start.

2. Bob chooses random measurement parameters $p_1$,..., $p_k$ from the set $P_M$ and sends them to Alice.

3. Alice feeds these parameters into the recording procedure and the SIMPL camera, and produces an image stream

$$I_1, \ldots, I_k,$$

$$A_i \stackrel{\text{def}}{=} M(I_i, p_i^*, S).$$

Thereby the measurement parameter $p_i^*$ may not only depend on the measurement parameter $p_i$, but also on previous measurement results, previous measurement parameters, and previous images. That is, for some function $F$,

$$p_i^* = F(p_1, \ldots, p_i, A_1, \ldots, A_{i-1}, I_1, \ldots, I_{i-1}).$$

This function $F$ (or, in other words, the recording procedure) must be known to Bob.

4. Alice sends $I_1,..., I_k$ and $A_1,..., A_k$ to Bob.

5. Bob chooses some random indices $i_1,..., i_m$ from the set $\{1,...,k\}$, and checks whether

$$A_{i_1} \overset{\text{def}}{=} M(I_i, p_i^*, S),$$

with $p_i^* = F(p_1,...,p_i, A_1,...,A_{i-1}, I_1,...,I_{i-1}).$

6. If this is the case, and if Alice answered quickly enough after Bob has sent away the parameters $p_1,..., p_k$, then Bob believes the authenticity of the recording.

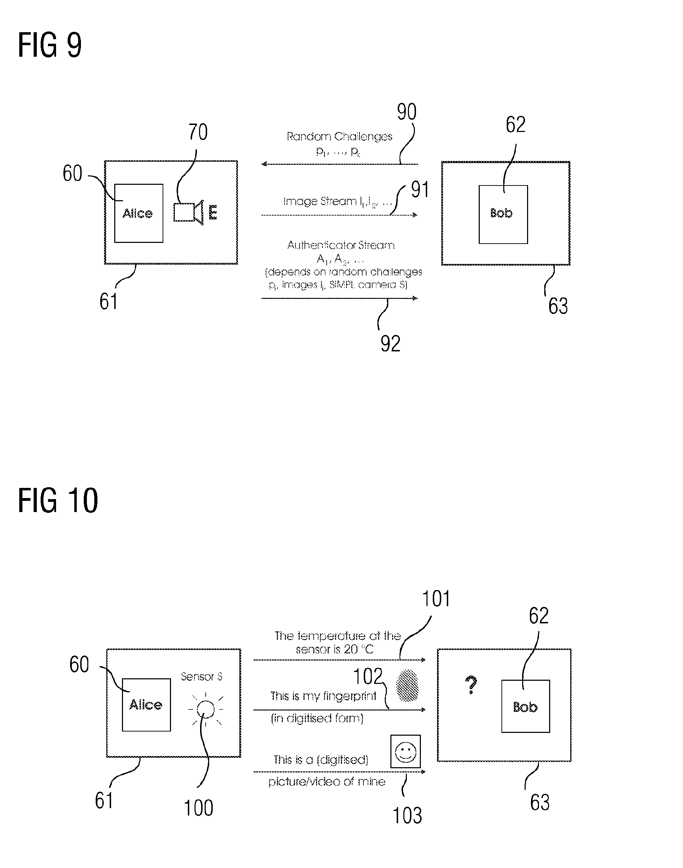

Figure 9 illustrates the scenario. According to Figure 9 the functional unit 60 designated Alice and the location 61 operates the camera 70 or 80. The functional unit 62 designated as Bob in the location 63 sends random challenges 90 to functional unit 60 and receives an image stream 91 and an authenticated stream 92 for performing the validation procedure specified in protocol step 5 of protocol 7.1.

### 7.4.3 New Ways of Cryptographic Key Exchange

SIMPL cameras also provide new means for the secure exchange of a cryptographic key. It is well known that presumably secure protocols for key exchange exist, provided that Alice and Bob are connected by an authenticated, but otherwise public channel [3, 5, 2, 21]. The non-trivial part of the story is how Alice and Bob can realise this authenticated channel in the first place. Usually, one tries to circumvent this problem through a public key infrastructure [22, 23], which is known to be quite tedious and also problematic in general [24].

Suppose now that both Alice and Bob possess a camera with integrated SIMPL systems $S_{Alice}$ and $S_{Bob}$. Then, they can proceed as follows in order to securely exchange a cryptographic key:

### Protocol 7.2 (New Ways of Cryptographic Key Exchange)

1. Alice records the event of saying "Hello, today is the [date of today]. How's it going, Bob?" (or something similar), and executes a Virtual Proof of this event with Bob (see Protocol 7.4.2).

2. Bob, on his side, records the event of saying "Hello, today is the [date of today]. How's it going, Alice?" (or something of the like), and execute a Virtual Proof of this event with Alice.

3. If either Bob does not recognise Alice on the sent video material in person, or Alice does not recognise Bob in person, then they abort the protocol as failed.

4. If the two machine executable Virtual Proofs of Events and the human-based mutual facial recognition have been successful, then Alice knows the description $D(S_{Bob})$ of Bob's SIMPL system $S_{Bob}$, and Bob knows the description $D(S_{Alice})$ of Alice's SIMPL system $S_{Alice}$.

5. After that, Alice and Bob can mutually implement the authenticated channel by using her respective SIMPL systems $S_{Alice}$ and $S_{Bob}$ for authenticating messages sent between them (see section 3.3.1).

6. This allows them to execute an arbitrary key exchange protocol, such as those referenced above, in an authenticated manner, and to successfully exchange a cryptographic key.

Please note that the only requirement for the above protocol is that Alice and Bob can recognise each other visually by their faces. This protocol can in principle be executed each time Alice and Bob want to communicate with each other, in order to establish a secure adhoc network connection.

**7.5 Comparative Analysis**

Let us conclude this section by subsuming to what extent SIMPL cameras excel known approaches.

1. SIMPL cameras remain secure even if they are tampered. In opposition to that, tampering and key extraction renders current security cameras insecure.

2. They are secure even against fraud by their manufacturer. In opposition to that, security cameras that work on the basis of secret binary keys do not remain secure against anyone knowing the key, in particular not against the company that fabricated the camera.

3. SIMPL cameras enable novel applications such as he named Virtual Proofs of Events (section 7.4.2) or the described new ways of cryptographic key exchange (section 7.4.3).

Together, these positive features make them a rewarding security tool.

**8 SIMPL Microphones**

**8.1 Idea and Concept**

In the same way as we tried to build SIMPL cameras, we could potentially also aim at building a SIMPL microphone. Then, the SIMPL microphone could be used in the same manner as SIMPL cameras for authenticated audio recordings and - possibly even better - as an extremely convenient method for authenticated key exchange in telephones or other speech transmission systmes: Just build a SIMPL microphone and related hardware into the speech transmission system. Whenever Alice starts talking to Bob, the hardware takes automatically care of authenticated key exchange and subsequent encryption of the conversation. There is no need for any public key infrastructure.

**8.2 Realisation**

The key idea is to exploit some details of the human voice or the analogue behaviour of the resonant systems (throat, lungs, tongue etc.) that generate human voice and the underlying principles of stream physics, in order to enable the sought distinction between artificially generated and real voice sounds.

**8.3 Applications**

Possible applications of SIMPL microphones include:

1. Authenticated audio recordings by stand alone microphones or surveillance microphones. This would be conceptually similar to section 7.4.1.

2. Virtual Proofs of Audio Recordings. This would be similar to section 7.4.2, except that Alice would prove the authenticity of audio instead of video data.

3. Secure key exchange. Here, SIMPL microphones would excel SIMPL cameras, since they would provide a secure, extremely convenient method for secure communication over telephones or other speech transmission channels. Again, please compare section 7.4.3.

So, if realised, SIMPL microphones and acoustic SIMPL systems could provide another killer application of SIMPL systems to the area of secure communication.

**9 Further Extensions**

We will now discuss some further concepts.

**9.1 Virtual Proofs of Sensoric Perceptions**

The SIMPL cameras of section 7 and the SIMPL microphones from section 8 can both be seen as special cases of a SIMPL sensor: A camera is obviously a sensor for images, a microphone for sound. Thus, the techniques that we discussed in relation to them promise to be fruitful also with any sort of general sensor: If such a sensor is designed to have the simulability properties of SIMPL systems, then it will likely be able to prove over a binary channel that the data that it presumably recorded and subsequently transferred is correct and "real". This approach can be useful in an extremely large variety of settings: Just to name a few examples, it can be applied to fingerprint sensors, temperature sensors and iris scanning, and, of course, also includes the earlier proofs that some audio or video signal is real. Figure 10 illustrates the situation. In Figure 10, the functional unit 60 designated Alice operates as sensor 100 that operates similar to the cameras 70 and 80 as described in the previous sections. The sensor 10 can be used for transmitting authenticated physical quantities 101, for example a temperature measured by the sensor 100, fingerprint data 102 of a human operator operating the functional unit 60 or a personal authenticated image data, for example a picture or video of the operator of the functional unit 60.

Please note that for many sensors, it seems quite plausible to design them in a SIMPL fashion, by introducing certain irregularities into the sensor design. If the common form of a sensor does not induce enough complexity because it is too simple (and not sufficiently SIMPL), then one may change its design intentionally to get the desired sensor data as a byproduct of a more complex process. In this process, one may employ the ideas that we discussed in section 3.2, for example skew designs, or unique resistor networks that are merged into the circuitry of the sensor.

As an example consider a temperature sensor: It will be probably difficult to turn standard thermometers into SIMPL systems. Nevertheless, one could once more use a resistor network, but this time with temperature dependent resistors, as a SIMPL thermometer $S$ . If the temperature of $S$ changes, then so will the U-I-curves of all resistors or other behaviour of the other circuit elements. Thus, if the network is at a claimed temperature $T_0$, then it will exhibit a certain, well defined behaviour in dependence of that temperature. This can be verified by Bob in the usual manner, by sending $p_1,..., p_k$, and expecting the correct $M(p_i,S)$, which can be generated quickly by $S$ if and only if it is really at the claimed temperature.

### 9.2 Verification vs. Simulation

The reader may have noticed that the previous protocols all include one common subprocedure, which is called a *challenge-response protocol* in cryptographic terms. In this subprotocol, Bob chooses a number of random measurement parameters $p_1,..., p_k$ (the *challenges*), and sends them to Alice. Subsequently, he awaits the correct answers or *responses* $M(p_1,S),...,M(p_k,S)$ from her. The most straightforward substep to check the correctness of Alice's answers in this protocol is to simulate the system $S$ and to compare the results to the values sent by Alice. This possibility is directly suggested by the definition of SIMPL systems (Definition 3.1), and was used in a standard fashion in all previous protocols. Nevertheless, any such simulation is guaranteed to be tedious by the same definition, which forces Bob to spend some time on it. Our approach thus lives in the following tension: On the one hand, we cannot grant Bob too much time for executing his correctness check for practicality reasons. On the other hand, the time that is required for simulation from anyone must be kept high in order to keep the protocol secure. There are several strategies to partly resolve this tension, two of which we have encountered already:

1. Let Bob choose a random subset of all indices {1,..., $k$}, and let him check only the correctness of Alice's answer $M(p_i,S)$ for those indices.

2. Grant Bob a verification time that is far beyond Alice's answering time. In certain scenarios, we might allow Bob on the order of minutes to check Alice's answers, but may at the same time delimit Alice's response to seconds or even below. That introduces an extra security margin.

Beyond these two methods there might be one fundamentally different strategy, which we want to discuss in this section. It is based on the well-known computational asymmetry between finding the solution of a computational problem from scratch and verifying a given solution for correctness. This asymmetry is long known and well established in computer science, and has led to the introduction of the two well-known complexity classes *NP* and *P* and the famous *NP vs. P* problem [20].

Let us illustrate it by two examples. First of all, suppose that you are given a 1,000 decimal digit number $N$, which is known to be the product of two large primes of about 500 decimal digits. Suppose further that you are given the computational task of finding one factor of $N$. Then, you will find rather quickly that solving the posed computational problem is infeasible for you, as it would require computations of billions of years on your personal desktop computer.

On the other hand, if you are presented with a presumable solution for said computational problem - namely a number $p$' which is a claimed factor of $N$ -, then you can verify the correctness of this solution conveniently within milliseconds on your desktop computer: Simply execute a trial division of $N$ by $p$', and check that the remainder is zero. In other words, there is a large computational asymmetry in the named problem between solving the problem from scratch and checking a presumed solution for correctness.

Another example, which is quite relevant for the behaviour of physical systems, is given by differential equations: Finding the solution for a differential equation can be extremely time consuming, while checking whether one given candidate solution is correct merely requires to insert the solution into the equation. This can usually be carried out very quickly.

It is one suggestive research task to see if we can exploit this asymmetry in the earlier protocols when Bob needs to check the correctness of Alice's answers. Alice, who possesses the SIMPL object and thus is in a position to exploit its computational power, may present her answers to Bob in a form that enables him to quickly check their correctness.

To further illustrate this point, let us get back to our earlier example of a resistor network: The global behaviour of such networks is tedious to simulate. Nevertheless, one might use random spot checks in order to verify the correctness of one given solution: See whether everything is ok in several randomly chosen subregions of the network. Alice might present her solution in the respective form to Bob from the start, or answer his deliberate questions about the behavior in subregions later.

Another natural possibility to exploit the asymmetry described above might arise in the case that differential equations play a role in the simulation of the SIMPL system. While the precise strategy that should be employed remains open, the chances that some tailored verification procedure will be much more efficient than a full simulation from scratch seem to be very good in these circumstances.

Please note, finally, that quick verification instead of simulation is not necessary for the successful application of our ideas, but would enhance their security and practicality in a quite elegant fashion.

### 9.3 Identification of Computer Chips

It is well known that each integrated circuit deviates from all other, even nominally identical ICs from the same manufacture series in its finestructural configuration (see [29], sec. 3.1.1., and [30], ch. 12). For example, process variations cause notable differences in material parameters such as thickness, length, width, and doping concentration, which affects runtime delays and other characteristics of the IC. It is conceivable, though non-trivial, to use these unique characteristics as a fingerprint by which any IC can be identified. If the characteristics (for example the runtime delays) could further be simulated on a digital computer, then one could use each IC as a SIMPL object that can identify itself unambiguously in a protocol similar to a Virtual Proof of Possession.

To that aim, one would need to determine a description $D(IC)$ that allows the simulation of the IC by some simulation program *Sim.* The manufacturer of the IC would digitally sign this description, possibly with some further data *Func* that describes the functionality of the IC. This would enable Alice to identify a chip by merely binary communication, and to be assured of its functionality.

Please note the similarities of this approach with section 5.3.1. The most notable difference is that in section 5.3.1, we use an extra SIMPL protection layer that covers the IC, while here we try to use the original IC structure itself. Whether this is advantageous or disadvantageous mostly depends on the application.

### 10 Introduction and Overview: Physical Implementations

From now on we will deal with the physical implementation of SIMPL systems in yet greater detail. From the material presented up to this point of the application, we know that for realizing SIMPL systems in practice, the following questions need to be addressed:

1. Which physical systems are suitable?

2. How can we efficiently characterize these systems in order to obtain, for each system S, a description $D(S)$ which allows the (slow) digital simulation of $S$ ?

3. Why are the proposed systems physically unique and difficult to rebuild?

4. Why are they difficult to emulate in real-time by a digital computer or by other physical systems?

### 11. Overview of the physical realization of SIMPL systems

We have found a number of implementations that solve all of these issues successfully. In particular, we suggest the following structures as SIMPL systems:

- Cellular nonlinear networks (CNNs) with specially designed templates. CNNs are known to perform many types of analogic computations significantly faster than any digital circuitry would do. Speed-up factors reported in the liter-

ature are up to $10^5$. The exploitation of random manufacturing variations of these circuits, which occur on a micro / nanoscale level, can provide the uniqueness that is required from SIMPL systems. The unique characteristics required for the description $D(S)$ can be obtained by direct measurements on the CNN, for example by in-built measurement connections in the circuit architecture. Another possibility is the numerical analysis of data gathered from the CNN during its standard operations (in other words, via a sample of many pairs of the form $p_i, M(p_i, S)$), for example by machine learning or model building techniques. Both the idea to use CNNs, the general characteristics of certain CNN templates, and, of course, certain concrete templates seem to be patentable.

- CNNs which are combined with optical systems to form electro-optical implementations. The advantage of such electro-optical implementations is that the uniqueness of the whole system may have its source in the unique behaviour of the optical system. This optical type of uniqueness is more stable against aging and temperature variations, leading to a more stable behavior of the overall system.

- One particular implementation consists of CNNs with photosensors integrated in each cell, which are combined with unique, random scattering media to form a joined, electro-optical system. In such a system, the optical part (the scattering medium) will always exhibit random and unique features, while the electrical part (the CNN) can be designed either to be sensitive to the inevitable manufacturing variations, meaning that also its behaviour is unique, or insensitive, meaning the overall system will mainly draw its uniqueness from the optical component. The latter possibility will stabilize the system, since the "unique" properties in the optical structure are naturally more stable against aging and temperature variations. Please note that CNNs with integrated photosensors are a commercially available system, since they are used in a standard manner for ultra-fast image processing.

- Another type of electro-optical system which we present consists of a number of small and ultrafast electronic circuit blocks equipped with a photodiode (laser) and photodetector, which are coupled to a unique optical scatterer. The whole structure is encapsulated by a mirror. The laser diodes are coupled directly to the photodetector, and start illumination if the incoming light originating from the scatterer is beyond a certain threshold. This procedure is re-iterated at a certain clock rate. This means that there is an intense, ulta-quick, parallel interaction between the two components, which will outperform any sequential and digital simulation.

- A further promising candidate for SIMPL systems is a specially designed memory. Each of the memory cells has one of $k$ different, special designs, for example varying cell dimensions. This has the effect that for varying operational voltages, the cells either work correctly, or (intentionally) induce read and write errors. If the chip writes, reads, and then re-writes large amounts of data into randomly chosen registers at full speed, while the operational voltage is varied quickly at each of these steps, then the chip behavior can only be simulated relatively slower on a standard architecture. Furthermore, the same chip is prohibitively expensive to refabricate for an adversary without access to a chip foundry.

- A fifth suggestion is to exploit standing wave phenomena or, more generally, interference of high-frequency electromagnetic waves, on computer chips for our purposes. Such effects depend on very subtle differences in the material and geometry of the chip, and can be read out very easily by probes such as transistors or memory cells located directly on the chip. At the same time, due to the complex nature of the interference effects, they are time consuming to simulate on a standard, digital computer.

- Finally, we suggest that any secure SHIC system (see patent application EP 09003763), with the exception of the ones utilizing slow memories, might, in principle, be turned into a SIMPL system by reducing its complexity / improving its characterizability to a point where it can be machine learned or otherwise numerically simulated. At such a point, the system will lose its character as a SHIC system (see patent application EP 09003763), but may turn into a SIMPL system instead. This means that many of our suggestions made in patent application EP 09003763 on SHIC systems can, in principle, be employed as SIMPL systems, provided that they are not built at an ultimate level of complexity, but intentionally with lower complexity.

We also propose several fundamental ways how the description $D(S)$ of a SIMPL system can be obtained:

- By direct integration of a measurement circuitry into the SIMPL system. This works best for electrical systems, for example ICs and CNNs
- By gathering of a large sample of input-ouput data of a SIMPL system, and subsequent numerical model building. This subsequent model building can be executed, for example, through a machine learning algorithm such as a support vector machine, a neural network, or similar means.

- By constructing all systems the same in an initial manufacturing step, and subsequently "personalizing" them through intentional actions on the system, for example burning of individually chosen fuses or wires, or intentional alteration of other system elements. In particular, the choice which fuses are burnt (or which other elements in the system are altered) can be made on the basis of a sequence of pseudo-random numbers. This offers the following, significant advantage: Since the sequence is pseudo-random, it behaves like a truly random sequence in all applications, realizing the necessary complexity in the system. On the other hand, the pseudo-random nature of the sequence implies that it was generated deterministically from a short random seed, meaning that it also can be *represented* or *stored* by this short seed in a very, very compact way. Typical bit lengths for the seed would be several hundred bits. This method allows a very compact and short $D(S)$, a fact that has got great advantages for all practical purposes. It leads to a system that is no more manufacturer resistant, but secure against all opponents that cannot afford an investment for a multi-billion dollar semiconductor foundry. This type of security will clearly suffice for many applications in consumer scenarios.

### 12 Cellular Nonlinear Networks as SIMPL systems

### 12.1 Overview of CNNs

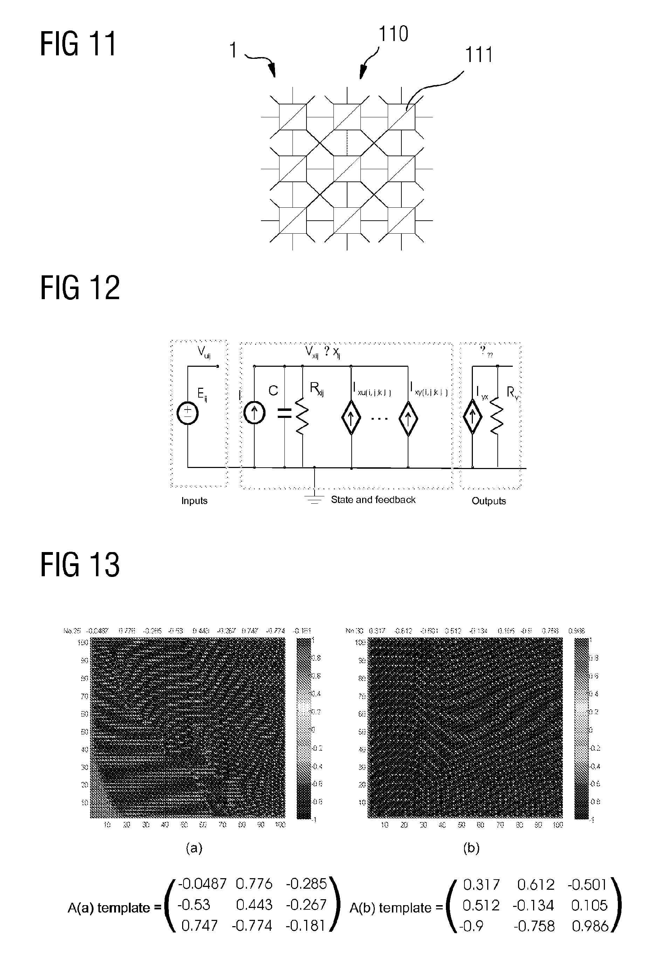

A promising, *electrical and on-chip* candidate for the implementation of SIMPL systems are Cellular Nonlinear Networks (CNNs) [27]. CNNs are analog computing arrays with a regular, periodic, cellular structure. Each cell is characterized by a state variable, and its time evolution is described by an ordinary differential equation and depends on its own internal state and on the inputs from neighboring cells. On an abstract level, the precise cell-behavior and the cell-to-cell relation is characterized by so-called templates, which -- in the simplest case -- are real-valued matrices. On a circuit level, it is given by the transistor architecture of a cell, which implements the behavior specified by the templates.
A schematic illustration of the CNN architecture is given in Figure 11. Figure 11 shows the topology of a CNN circuit 110 with nearest-neighbor couplings between adjacent cells 111., whose state variable can be set via terminals connected to the cells.
The time evolution of the state variable is described by the the following ODE:

$$\dot{x}_{ij} = -x_{ij} + \sum_{k,l}\mathbf{A}_{i,j,k,l}y_{kl} + \sum_{k,l}\mathbf{B}_{i,j,k,l}u_{kl} + z_{ij}$$

i.e. the time derivative of the state variable (for cell with *i, j* indices) depends on the *y* output of the neighboring cells (denoted by the *k, l* indices) via a the **A** cloning templates. Each cell has a bias (*z*) and inputs, which are coupled by the **B** template to the dynamical equation. The CNN behavior can be programmed by choosing appropriate templates. If only nearest neighbors are coupled, then the **A** and **B** templates are 3×3 matrices.
The output of each cell is sigmoid-like (saturating) function of the state variable, for example:

$$y_{ij} = f(x_{ij}) = \frac{1}{2}|x_{ij}+1| - |x_{ij}+1|$$

CNNs often have multiple layers and these layers are also coupled to each other via **B** templates.
As a mathematical model, CNNs are very general. For example, cellular automata [7] can be interpreted as a special CNN which operates on discrete variables in discrete time (and where rules replace the ODE-based description). CNNs are also known to be Turing-complete [8]. Furthermore they have an extraordinary computational efficiency: for many tasks (typically those which involve large number of local operations) they are several orders of magnitude faster than standard Boolean microprocessors [9], since the time evolution of thousands of cells goes on in parallel.
It is possible to construct a relatively simple circuit that solves the CNN equation 'by hardware'. This circuit is sketched in Figure 12 that shows the circuit schematics of a single cell, realized by controlled current and voltage sources. The state variable is represented by the voltage (or charge) on a capacitor. Controlled current and voltage sources are charging this capacitor and generate the outputs according to the CNN equation.
From the common application point of view (not necessarily from a SIMPL system based view), CNN's, with state variables converging to a steady state are the most important. The CNN operation then can be interpreted as an image transformation: an initial distribution of initial values / inputs is considered to be the input image and the distribution of steady-state output variables is the output. If the templates are programmable, then this output image can serve as an input for a next operation, with a different template. This sequential image-processing device is called CNN Universal machine (CNN-UM).

Due to their analog and highly parallel architecture, CNNs have a remarkable computing power and efficiency. Already in 2004, a state-of-the-art programmable, commercially available CNN in a 0.35-$\mu$ m standard CMOS technology exhibited peak computing figures of 330 GOPS [28] (3.6 GOPS/mm$^2$ and 82.5 GOPS/W, projected for chip area and power consumption). These performance numbers are even excelled by non-programmable CNNs, which we propose for use as SIMPL systems. In specialized tasks, it is known that CNNs can outperform digital computers by a factor of up to 1000 [29, 30]. CNNs are the largest analog circuit circuits - this particular one containing 3.75 million transistors.

A further important property of CNNs is that their functionality is especially sensitive to inevitable variations occurring in the fabrication process, unless special countermeasures are taken. This can make the function $F_S$ computed by a CNN $S$ truly unique. Since CNNs are integrated electrical systems, dedicated on-chip measurement circuitry can determine the fabrication mismatches, and still deliver a sufficiently detailed description $D(S)$ to simulate $F_S$. Such types of self-measuring cells are already today in standard use for calibration purposes [31]. Furthermore, it is known that there is a stable regime where the fabrication mismatches determine the CNN behavior, and where they override circuit noise and temperature variations [32, 33]. Altogether, said properties makes CNNs excellent candidates for SIMPL systems.

From the extensive literature on CNNs, we cite below some results, which make them excellent candidates for SIMPL systems:

- CNN UM's are computationally universal, i.e. they are capable of performing any processing tasks that Turing machines can [42].
- For several image processing operations, CNNs outperform sequential digital algorithms by several orders of magnitude. In fact, the speed of a CNN with hundreds of thousands cells can be equivalent to hundreds of thousands of stand-alone CPU's, which is a large supercomputer. As of 2004, a 200 x 200 CNN array could perform $10^{15}$ OPS (operations per second), four orders magnitude higher than a state of the art, stand-alone CPU [42][43].
- From the common application point of view, robust CNN's are important, which are immune against small cell to cell variations of the templates. For SIMPL systems (or SHIC systems), however, in particular non-robust CNN's are applicable, too [42] [43].
- CNNs can be used to directly solve several partial differential equations (PDEs), known from physics / mathematics to exhibit complex behaviors [43].
- Most CNN-s are space invariant (each cell has nominally the same template), but CNN with templates varying from cell to cell can exhibit an even more rich dynamics.
- Many CNN implementations have a photodetector attached to each cell, so they can directly be placed in a focal plane of an optical system for ultrafast image processing. The input of a CNN / SIMPL system can be applied extremely fast this way.
- CNN circuits can directly operate on analog signals, and no A/D conversion is needed - this conversion can be especially time consuming in a digital emulation.
- CNNs can outperform their digital emulators by many orders of magnitude in speed [43], and a unique CNN can outperform a general (programmable) CNN by a large factor,
- Due to their cellular structure, the size and complexity of CNN circuits can be scaled up just like as in digital circuitry.

### 12.2 Possible Features of a CNN-based SIMPL system

For the implementation of SIMPL systems we propose the use of special CNNs, for example CNNs with the following properties:

- The templates are not programmable, but they deviate from their nominal value due to device (transistor / interconnect capacitance / resistance) variations, which are beyond the manufacturer's control. A programmable CNN cell has thousands of transistors per cell, a fixed-template CNN cell can be built from a few-ten transistors, meaning that a relatively simple VLSI circuit can contains millions of them.

- The CNN cell is built from the smallest possible number of transistors and these transistors are fabricated at the lithographic limit, so it is impossible to fabricate an 'equivalent' cell with programmable template or transistors, which are factory-set for a desired value, and which behaves as quickly as a cell of the original SIMPL system.

- The hard-wired template shows complex behavior, where complex can mean:

* Any local variation in a template has a long range effect (i.e. it influences cell behavior far away),

* The number of possible input combinations (which can be cell inputs, initial boundary conditions or both) is very high, ideally exponential in some parameter concerning the size of the CNN

* There is no 'computational shortcut' to emulate the CNN cell behavior other than solving the full system of ODEs by a digital computer or another (programmable) CNN,

* It is impossible to split the solution of the equation into non-interacting (or hardly interacting) parts, which could be solved separately and in parallel.

- The cells reach a steady state fast and they may contain very fast-operating circuit elements (such as bipolar logic, SRAM), to make sure that no other circuit technology can operate significantly faster than the actual chip,

- The cells may realize a time-varying template: the initial unstable state results in oscillations and a complex, sensitive global pattern. As the template varies, the pattern stabilizes and can be read out easily.

- The cells contain temperature-compensating elements (such as bandgap references, current mirror constructions, and the like), which make the templates temperature insensitive

- Templates are designed to be insensitive to noise, e.g. temperature noise and aging

- The chip may contain long-range interconnections to increase complexity,

- The cells contain a built-in measuring circuitry that is used to characterize all the templates after fabrication

- Possibly, the system has an optical input and an electrical output (this is the way most commercial CNN applications are built at the moment). The challenge can then be applied very quickly; the result can be sampled (i.e. read out at only at some selected points).

- The cell contains a built-in measurement circuitry that can characterize each template individually and yield the required simulation parameters. Alternatively, the chip can be designed to have access to each of its individual cells (or groups of cells). The dynamics of these small groups of cells allows reverse engineering the templates and extracting parameters for the simulation. Still alternatively, numerical reverse engineering or machine learning of the circuit parameters on the basis of certain read-out values and/or measurement values is possible.

- The challenge vector for the simulation can be the initial condition or boundary condition of the CNN circuit, the output vector is the result sampled at some positions.

### 12.3 Read-Out Formalism for CNN-SIMPL systems

The measuring parameter or excitation vector $p_i$ can be applied as an input or fixed value on some cells. It triggers an excitation (wave) that propagates through the circuit and possibly bounces back and forth between the boundaries. The circuit may go to a stationary state after some time or oscillate indefinitely, depending on the choice of the A and B templates. The steady-state values or, alternatively, the averaged oscillating voltages can serve as the response or measurement value $M(p_i,S)$..

Depending on the CNN template and cell design, the resulting measurement value $M(p_i, S)$ will be sensitive to the deviations of the templates from their nominal value (cell mismatches) and consequently carries a signature from the individual device characteristics from each cell of the CNN. Note that even if the cells are only locally connected, far-away cells influence each other indirectly due to the propagation effects. Quantitative values for this influence can be obtained by simulations, and will be discussed over the next sections.

### 12. 4 A preferable implementation: CNNs derived from complex physical systems and/or partial differential equations

A preferable realization of SIMPL systems are CNNs that solve partial differential equations (PDEs), in particular PDEs that describe complex physical systems. Our motivation is that such CNN-based SIMPL systems inherit their complexity from the suitably chosen PDEs. In other words, we use complex physical PDEs as a design guideline for highly secure SIMPL systems.

More specifically, given a two-dimensional, continuous, one variable, time dependent PDE which was discretized in space (but not in time) on an n times m lattice, there are standard methods to design CNNs to directly simulate this discretized system [97], [98]. In other words, a CNN can be tuned to physically evolve according to a certain PDE. In particular, we can derive a CNN template from the PDE such that the state variables of the CNN cells evolve over time in the same way as the states of the lattice points in the discretized n times m lattice. The necessary CNN templates, which enforce the right CNN behavior, can be directly determined from the finite difference approximation of the PDE.

To illustrate this concept at work, we discuss over the next sections a CNN whose design is derived from Maxwell's equation, and which -- electrically and on-chip -- imitate the behavior of optical PUFs. Another straightforward PDE from which CNN designs could be derived is the Navier-Stokes Equation, and, in principle, many other PDEs will be suitable as well.

**12.5 Case Study: CNNs derived from Maxwell's equation, or: wave propagation on a chip**

As a case study that illustrates many of the concepts which we discussed above, we will now investigate a CNN which solves a linear wave equation known from electromagnetic theory, aspiring that it will inherit the typical optical feature of non-local interactions. For weak excitations, the CNN solves a linear scattering problem (i.e. the original PDE). For stronger excitations, the nonlinear cell-cell dynamics comes into play. Many of the features discussed in this special case study apply either directly or analogously to other CNN-based implementations of SIMPL systems as well, and are to be understood in this general sense; they are not restricted to CNNs derived from Maxwell's equations.

**12.5.1 The Maxwell equation for TE waves**

Our CNN design is based on a simple numerical technique that rests on Zuse's seminal work [15], [16] for solving Maxwell's equations in two dimensions for TE (transversal electric) waves [17]. Using $\mu_0 = \varepsilon_0 = 1$, Maxwell's equations take the form:

$$curl\mathbf{H} = \frac{d\mathbf{E}}{dt}$$

$$curl\mathbf{E} = -\frac{d\mathbf{E}}{dt}$$

$$div\mathbf{E} = 0$$

$$div\mathbf{H} = 0$$

For a TE field (propagating in the $x$ - $y$ plane), the electric field vector has only an $E_z$ component, while the magnetic field bears the $H_x$ and $H_y$ components. A continuous time, spatially discretized form of the wave equations can be obtained by using a second-order, central finite difference approximation for the spatial deriatives:

$$\frac{dH_x^{i,j}}{dt} = -\frac{E_z^{i,j+1} + E_z^{i,j-1} - 2E_z^{i,j}}{\Delta y^2}$$

$$\frac{dH_y^{i,j}}{dt} = \frac{E_z^{i+1,j} + E_z^{i-1,j} - 2E_z^{i,j}}{\Delta x^2}$$

$$\frac{dE_z^{i,j}}{dt} = -\left( \frac{H_y^{i+1,j} + H_y^{i-1,j} - 2H_y^{i,j}}{\Delta x^2} - \frac{H_x^{i,j+1} + H_x^{i,j-1} - 2H_x^{i,j}}{\Delta y^2} \right)$$

Here $\Delta x$ and $\Delta y$ are the step width of the spatial discretization. We used $\Delta x = \Delta y = 5$ for all the example simulations. The 'CNN-hardware' that evolves according to the above equations (and thereby computes its solution) must be implemented as a three-layer CNN: One layer for each of the $E_z$, $H_x$ and $H_y$ variables. Comparing the above equations with the CNN dynamical equations, the templates can be directly determined. The $H_x$ and $H_y$ layers are bi-directionally coupled to the $E_z$ layer, and there is no direct coupling between $H_x$ and $H_y$ layers. The corresponding templates are:

$$B^{E_z \to H_x} = \frac{1}{(\Delta x)^2} \begin{bmatrix} 0 & 0 & 0 \\ -1 & 2 & -1 \\ 0 & 0 & 0 \end{bmatrix}$$

$$B^{H_x \to E_z} = \frac{1}{(\Delta x)^2} \begin{bmatrix} 0 & 0 & 0 \\ 1 & 2 & -1 \\ 0 & 0 & 1 \end{bmatrix}$$

$$B^{E_z \to H_y} = \frac{1}{(\Delta x)^2} \begin{bmatrix} 0 & 1 & 0 \\ 0 & -2 & 0 \\ 0 & 1 & 0 \end{bmatrix}$$

$$B^{H_y \to E_z} = \frac{1}{(\Delta x)^2} \begin{bmatrix} 0 & -1 & 0 \\ 0 & 2 & 0 \\ 0 & -1 & 0 \end{bmatrix}$$

All self-feedback templates are:

$$A = \begin{bmatrix} 0 & 0 & 0 \\ 0 & 1 & 0 \\ 0 & 0 & 0 \end{bmatrix}$$

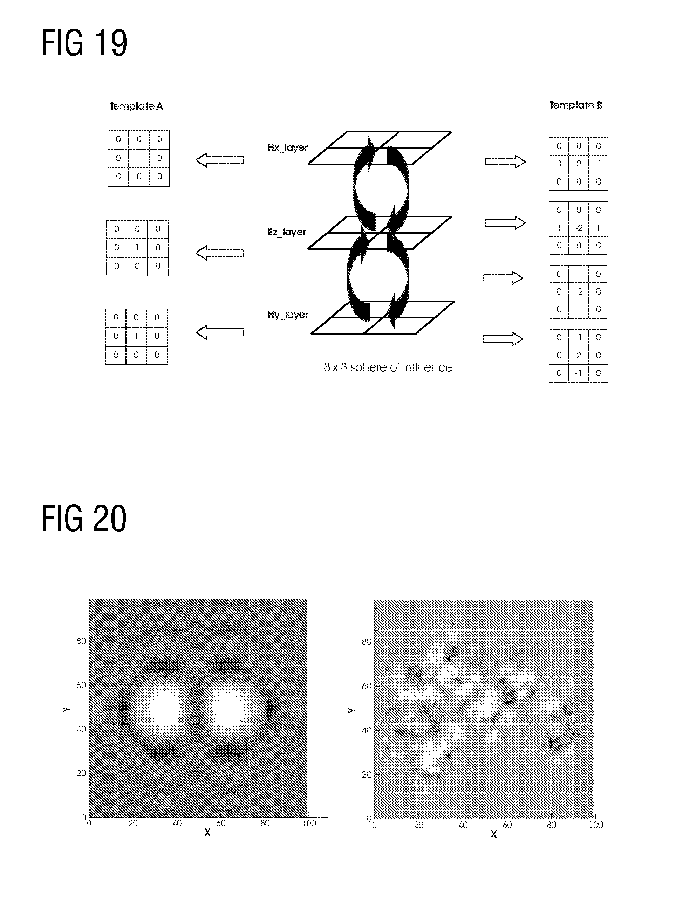

The three-layer structure of the resulting CNN, together with the above templates, is again shown in Figure 19.

**12.5.2 Simulation of CNN-dynamics in our case study: Discussion of sensitivity and complexity**

We numerically studied the behavior of larger CNNs with the above design by custom-built Matlab and C++ based simulators. We used a simple Runge-Kutta scheme for calculating the CNN dynamics integrating the above ODEs [18].

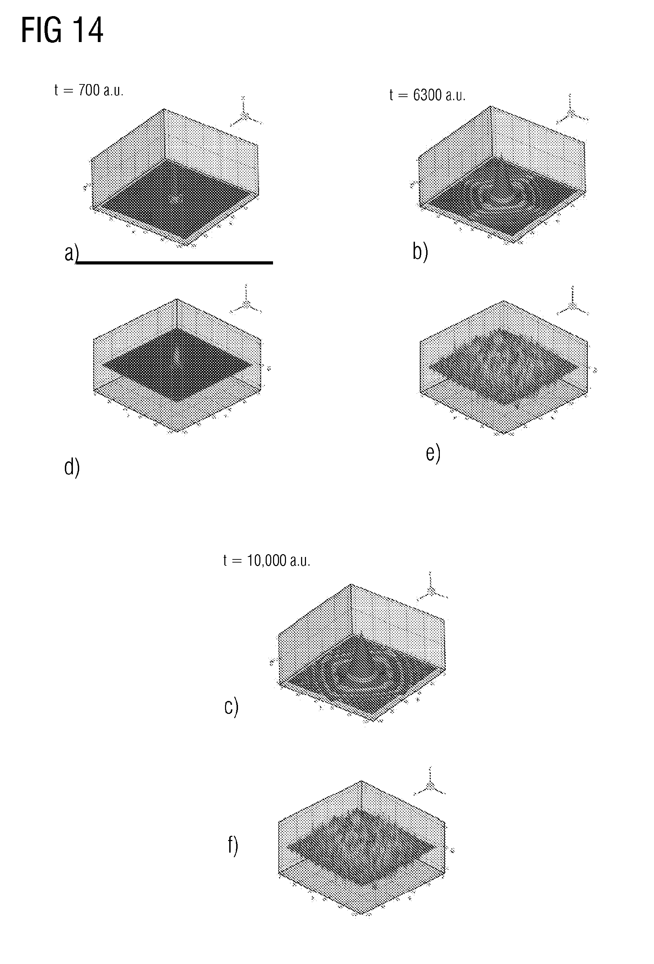

If all the templates are fixed at their nominal value and the excitation vector or measurement parameter $p_i$ is a single, fixed-value cell placed at the center, then the CNN generates a wave, which is illustrated in Fig. 14a, 14b, 14c. Initially, all state variables of the circuit were zero and the circuit does not cross into the nonlinear regime. Figure 14 shows simulation results of the wave-CNN, with a single excitation of the center. For identical cells, a characteristic wave pattern is formed (panels a, b,c)). For mismatched templates complex, non-symmetric interferences appear (panel d, e, f)).

The bottom panels d, e, f of Fig. 14 show snapshots from simulations of a mismatched CNN. All the elements of the **B** templates (matrices) were varied by $\sigma = 0.03$. The initial similarity to the non-mismatched case quickly disappears, and non-periodic nonlinear waves appear in the structure.

We found that for mismatched templates, the dynamic behavior never stays in the linear range, as even for very weak excitations signals rapidly amplify. The mismatches automatically lead into a non-linear regime, which is desirable in order to increase the system's complexity. The sigmoid-type nonlinearity has the further positive effect that it forces all the signals (circuit variables) to stay in the [-1;+1] range.

Physically, the mismatched **B** templates essentially are equivalent to a nonlinear, non-isotropic and optically active gain material. This 'world' is much more rich than the linear scattering effects used in [1]. On the other hand, the CNN model is only two-dimensional unlike the 3D token described there. Three-dimensional CNNs can be straightforwardly defined, but they cannot be realized on a large scale by planar IC technology. A more direct CNN analogy of the linear scattering system of [1] could also be built by placing fix zero-valued cells (obstacles, scatterers) at some (random) positions but this 'randomization strategy' realizes only lower information content and density, and is to some extent unnatural in the circuit implementation case, since there are better sources of random information and uniqueness there.

A similar simulation to the one illustrated by Figure 14 is provided in Figure 20. Figure 20 shows the current distribution in a 100 by 100 cell CNN with the templates given in section 12.5.1. The left image of the figure illustrates the quasi-optical interference behavior that occurs in a perfect, linear structure without mismatches with two excitation sources. The right image of the figure shows the much more complex, non-linear regime that arises if mismatches are taken into account. Also in the right image, two excitation sources were used.

Simulation results also confirm the sensitivity of this CNN for both the initial (input) values and the templates.

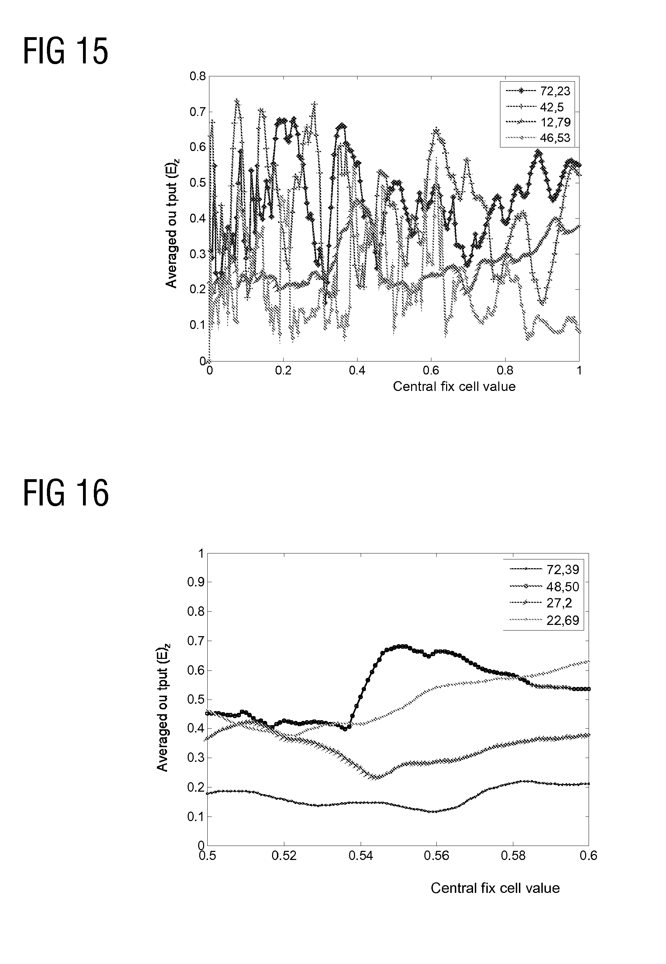

A particular simulation result for the input sensitivity is sketched in Fig. 15. We placed one source (a fixed-value cell) in the center of the CNN array - all the other cells started from a zero initial value. The averaged absolute value ($|E_z|$) of some randomly picked cell outputs is plotted as a function of this source value. The function is oscillating with a high amplitude even far away from the source and the curves belonging to nearby cells seem to be uncorrelated. It strongly indicates that this structure fulfills the criteria we set up for the input sensitivity.

In particular, Figure 15 shows the sensitivity of the CNN for one particular input. The averaged output value is shown as a function of the applied fixed input. A close-up view (from a different simulation) shown in Figure 16 illustrates that despite the 'chaotic' appearance of the signals in Figure 15, the signals are changing continously.

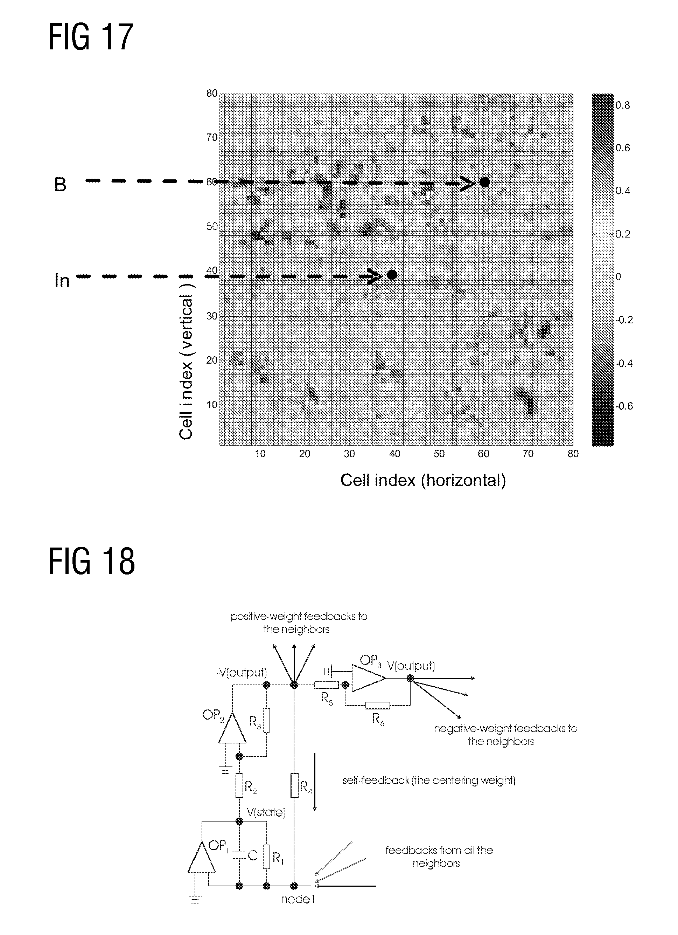

The simulations of Figure 17 confirm that this structure sensitively responds to the change of circuit parameters (templates) as well. Figure 17 shows the sensitivity of the CNN to change in a particular template - the contour plots gives the difference of $E_z$ if a single template is altered. Changing only a single template at a particular position (denoted by **B** in the figure), even far away from an input (marked as *In* in the figure) going to alter the global behavior of the circuit detectably.

These simulation results confirm that this circuit inherits the 'global sensitivity' property from optical PUF-like systems, while it can be described sufficiently accurately to allow simulation (as discussed above). The circuit behavior also appears to be complex, as it is expected from a nonlinear dynamic system with many degrees of freedom. Another very important characteristics of our circuit that its behavior is sensitive, but is not chaotic. Chaotic circuits are well known [19] and several CNN templates are known to realize chaos [20] [21] [22]. The time trajectories of a chaotic system are irreproducable in a real physical environment and seem to be unsuitable as a PUF.

### 12.5.3 Effect propagation and read-out speed in our case study

The interactions in the described cellular structures are propagating with a finite speed. If the dynamics of the system is interrupted after a short time then only cells lying within a finite neighborhood can influence each other. Changing the length of the time evolution gives a possibility to balance 'global sensitivity' against error tolerance and robustness of the circuit. Strongly depending on the template that we choose, the development of the full pattern *can* take considerable time. Assuming that the time constant of a single cell is $\Delta t$, and the circuit is composed of $n \times n$ cells, the entire pattern (with the signals bouncing back and forth between the boundaries) can take several times $n\Delta t$ time to develop.

This provides us even with the possibility to design CNN-based SIMPL systems which take *intendedly* long time in order to develop robust outputs, and even to set the read-out speed to an intrinsic, predefined value.

### 12.5.4 Circuit-level implementation of the CNN of our case study

So far, we described the behavior of our "quasi-optical" CNN on an abstract, template-based level. We now investigate which design on a transistor level is necessary to enforce this behavior in a real circuit. This will allow us to estimate the information content per chip area and the scalability of the structure.

A non-programmable (fixed-template) CNN cell can be built using three operational amplifiers. Additional passive elements (resistors) set the cell to cell coupling via the cloning templates, and the feedback. The circuit schematics is shown in Fig. 18, for a non-programmable CNN cell.

The state variable is represented by the voltage of the capacitor. $OP_1$ is used for limiting the state voltage and connecting one end of the capacitor (node1) to virtual ground. $OP_2$, $R_2$ and $R_3$ work as an inverting amplifier which can realize the full nonlinear transfer characteristic to map V(state) nonlinearly to -V(output). $R_3$ is usually several times larger than $R_2$ so as to have the $OP_2$ driven to the saturation region. Another inverting amplifier ($OP_3$, $R_5$, $R_6$ ) is used to provide the actual V(output). The weights in the **A** template can be controlled by changing the resistances of feedback resistors, e.g. $R_4$. The weight of the **B** templates are set by resistor values connecting from the neighboring cells to $node_1$ Kirchoff's current law applied for $node_1$ can exactly present the CNN state equation we have discussed in Section 4.

The simplest CMOS operational amplifiers can be built using seven transistors, so the circuit of Fig. 5 requires 21 transistors. Considering that a state of the art CPU contains a few times $\approx 10^7$ circuit elements, an approximately $1000 \times 1000$ cell fixed-template CNN could be reasonable to build [23], eventhough probably much smaller sizes will suffice for the construction of secure SIMPL systems. Each template carries at least a few bytes of information in its deviation from the nominal value. Obviously, some part of this information could be lost because of averaging / error correction. In the most extreme case, the the effective and behavior-relevant information content of a CNN-based SIMPL system could be made be comparable or even higher as the optical PUF of [1], if this was required in a certain application. As we said above, however, in most cases such an extreme information content in a CNN-based SIMPL system may not even be necessary.

Using a modest workstation and standard SPICE distribution [24], we could verify the operation of few-hundred cell (few thousand transistor) circuits, and the results agree with the results from the template-based description. Only highly parallelized, research-distributions of SPICE, running on supercomputers (such as Xyce [25]) could deal with the few-million transistor circuits that could eventually be envisaged as CNN-based SIMPL systems. This is a strong indication of the security of our CNN-PUF approach: Even if all the parameters of the circuit are known, it still takes hours for supercomputer to simulate the few microsecond or millisecond behavior of the CNN-based SIMPL system. Reverse engineering of such a circuit would thus be formidably difficult.

### 12.5.5 Error correction and stability in our case study

An important benefit of circuit-based SIMPL systems in general and CNN-based systems in particular is that there are efficient circuit solutions to minimize the output instability of the circuit. For example, bandgap references can provide temperature-independent voltage sources, albeit they make the circuit more complicated and slightly reduce the achievable information content per chip area.

We could not yet perform extensive simulations on large-scale circuits to estimate the effects of temperature, noise, power supply fluctuations, etc. on the circuits, as it requires extreme amount of computer power. It is known, however that cell to cell mismatch in CNN circuits dominates over temperature effects [11, 26], which is particularly important in our context. The templates are set by resistance ratios, so if those close-by resistors are at the same temperature, the temperature dependence of the templates will become very small. As the template-based simulations in Fig. 15. Fig. 16 and Fig. 17 suggest, a one-percent change in circuit parameters does not make the circuit dynamics unrecognizable.

In addition, the response vector or measurement value $M(p_i, S)$ is read-out as a result of a stationary process. While $M(p_i, S)$ depends on the internal dynamics / timing of the circuit, noise, glitches may be averaged out, increasing the stability of the circuit.

### 12.5.6 Security assessment and summary of our case study

In this case study, we discussed CNN circuits with non-robust templates (i.e. CNNs which are sensitive to uncontrollable variations in their circuit parameters) as promising circuit implementations of SIMPL systems. We argued that analog circuits, in general, are very well suited for the design of SIMPL systems, since they are more sensitive to manufacturing variations, show a stronger unique behavior, and can operate in a way that is very time consuming and complex to simulate on a digital architecture (as is required for SIMPL systems). Furthermore, the CNN paradigm (or a similar cellular structure) is among the very few viable possibilities to build scalable analog arrays of sufficient size..

Based on an physical analogy (optical scattering systems), we designed a CNN template that inherits the benefits of optical structures (such as high sensitivity, no averaging out effects, global interactions) and, on top of that, also displays nonlinear behavior. The complex internal interactions probably eliminate the possibility to construct a computationally non-intensive model of such a circuit, which operates at the same speed as the original system, but can be carried out on a digital computer with a standard architecture.

The described CNN-design derived from Maxwell's equations furthermore seems particularly suited as SIMPL system because its quasi-optical behavior fosters pairwise interaction between the cells throughout the structure. This leads to a particularly strong, inherent parallelism, which will be costly to simulate on digital architectures. Furthermore, as we could show in simulations, its behavior automatically shifts into a non-linear, highly complex regime through the occurring manufacturing mismatches, which can be exploited even better for our purposes.

A 100 $\times$ 100 cell CNN with our architecture leads to the following specific numbers: It requires a description D(S) containing about $10^4 \cdot 19$ template values, which is about 100 *kB* of information. In order to simulate the real-time evolution which the CNN undergoes in few microsecond time frame, $10^4$ coupled differential equations (one for each cell) should be solved. Parallelization is to some extent possible, but it requires an extreme number of parallel CPU-s with fast interconenctions.

Non-programmable CNNs require about 10 times less transistor per cell than programmable CNNs and they operate faster due to the simple, resistive interconnections of their cells. By increasing the size of our non-programmable CNN, we can easily shift into regions where commercially programmable CNNs are no longer available, making it impossible for a fraudster to use a programmable CNN in order to imitate or mimic our above CNN-based SIMPL system.

We could not give 'hard' computational limits on the difficulty of simulating the behavior of a random (mismatched) CNN with the described template. Note, however, that providing such provably hard limits may be beyond the current state of complexity theory anyway. We refer in this context to the unsettled NP vs. P question and the general difficulty of giving hard, meaningful and non-linear boundaries for natural problems in NP [20].

Nevertheless, it can be argued convincingly that based on our case study, on the proven computational power of CNN chips [9] [27], [28], [30], [35], on their large internal information content, and on their parameter sensitivity, the use of CNNs as SIMPL systems seems very promising.

**12.6 Other Implementation Possibilities: Autowave phenomena, alternative PDEs or ODEs, and other phenomena**

In this section, we will quickly list some other possibilities of CNN-based SIMPL systems.

Figure 13 shows autowave formation phenomena in a random CNN array, and interference-like patterns in a 100 x 100 cell CNN array.

Furthermore, the following classes of templates are suitable:

- Oscillatory, chaotic templates, which are either read-out at a well defined time point or which are gradually changing in a stable template and can be read-out in steady state,

- Templates producing non-linear autowaves and/or spiral waves,

- Templates, which are converging to a pattern, which is a solution to a partial differential equation (PDE) known from physics to exhibit complex behavior [44]. The (nonlinear) wave equation, the Navier-Stokes equation all have their corresponding CNN template(s) and the patterns resulting from this template(s) inherit the complexity of the underlying PDEs and the complexity of the described physical phenomena.

- Templates that are derived from other Differential Equations (PDEs and/or Ordinary Differential Equations (ODEs)) than the Maxwell Equation, or from certain general types of differential equations. Examples include:

      \* Navier-Stokes equation
      \* Newton's Second Law in dynamics (mechanics)
      \* Navier-Stokes Equation in Fluid dynamics
      \* Hamilton's equations in classical mechanics
      \* Radioactive decay in nuclear physics
      \* Newton's law of cooling in thermodynamics
      \* The wave equation
      \* Maxwell's equations in electromagnetism
      \* The heat equation in thermodynamics

* Laplace's equation, which defines harmonic functions
* Poisson's equation
* Einstein's field equation in general relativity
* The Schrödinger equation in quantum mechanics
* The geodesic equation
* The Navier-Stokes equations in fluid dynamics
* The Lotka-Volterra equation in population dynamics
* The Black-Scholes equation in finance
* The Cauchy-Riemann equations in complex analysis
* The Poisson-Boltzmann equation in molecular dynamics
* The shallow water equations
* Verhulst equation - biological population growth
* Lotka-Volterra equations - biological population dynamics
* Replicator dynamics - may be found in theoretical biology
* The Black-Scholes PDE
* Hyperbloic PDEs
* Parabolic PDEs
* Elliptic PDEs
* Stochastic PDEs
* Etc.

- CNNs employed for image processing tasks, which are known to outperform classical architectures by a factor of 10-100 [30, 35].

## 12.7 Security discussion of CNN-based SIMPL systems

Let us now briefly argue why the two main approaches of a faker, namely refabrication and efficient simulation (on the same timescales as the original system) are practically impossible for a suitably designed CNN-based SIMPL system. The discussion applies to the implementation example discussed in our case study, but also to any other CNN-based SIMPL system.

Re-fabrication or rebuilding of the SIMPL system (knowing its parameters) would require that the faker:

- Had access to chip fabrication technology that is significantly more advanced than the technology used to fabricate the 'original' chip, meaning that faker has full control over all the circuit parameters that are manufacturing inaccuracies in the original. For state of the art microelectronic technologies the cloning procedure would require atomic-level control over the chip area and even if it is possible, it would be painstakingly slow and expensive.

- Could build an enlarged copy of the CNN-SIMPL chip, which is technologically far more feasible, does not require advanced fabrication technology and the individual (known) device characteristics may be substituted by multiple / programmable devices. However, a bigger circuit built with the same circuit technology will be inevitably slower (because of enlarged interconnect capacitances / longer signal propagation paths). The faker could use a faster circuit technology (for example, ECL (emitter-coupled logic) instead of CMOS, Gallium arsenide devices instead of silicon, optical couplers, etc.), but this already requires extreme investment and results only in a few-fold speedup. It is furthermore likely that the faker will run into fundamental physical limits such as the ones imposed by the speed of light, material resonances, wires melting / electromigrating and extreme power consumption in his attempt to emulate the behavior of the original SIMPL system by a larger structure.

Efficient simulation of the CNN-SIMPL chip would only be possible if

- The attacker could use a multiprocessor system / supercomputer to efficiently parallelize the computing. Simulating circuit blocks by separate CPUs would be limited by a communication bottleneck: the CPUs of this can be several centimeters / meters away, and even with the speed of light such delay would change circuit operation.

- Furthermore, badly designed templates or 'unlucky' templates (with trivial patterns) could be broken relatively easily. This could corrupt the security of individual circuits, but does not necessarily weaken the security of other chips and occurs only at extremely low probabilities. Those chips which are easy to simulate can be found and put away after production.

Because the semiconductor roadmap develops in similar pace for analog computer arrays and digital microprocessors, the performance gap between CNN arrays and their digital emulators does not disappear. Older CNN-SIMPL chips may become obsolete and insecure with the development of newer chip generations, but can be replaced by new ones.

### 12.9 Variants of CNN-based SIMPL systems

Having become familar with CNN-based SIMPL systems, we will now discuss briefly how certain variants of SIMPL systems -- such as modifiable, tamper-sensitive or interacting SIMPL systems -- can be implemented via CNNs.

### 12.9.1 Modifiable CNN-SIMPL systems

It is straightforward to open circuit or short-circuit some cells of the CNN array and derive a differently behaving SIMPL system. This can be done by fuse / anti-fuse elements integrated in the CNN array, so the signal paths simply bypass some of the cells. If the faker has access to advanced nanofabrication technology then it could be difficult to prove that the connection was irreversibly destroyed and the modification cannot be undone.

### 12.9.2 Tamper-sensitive SIMPL systems

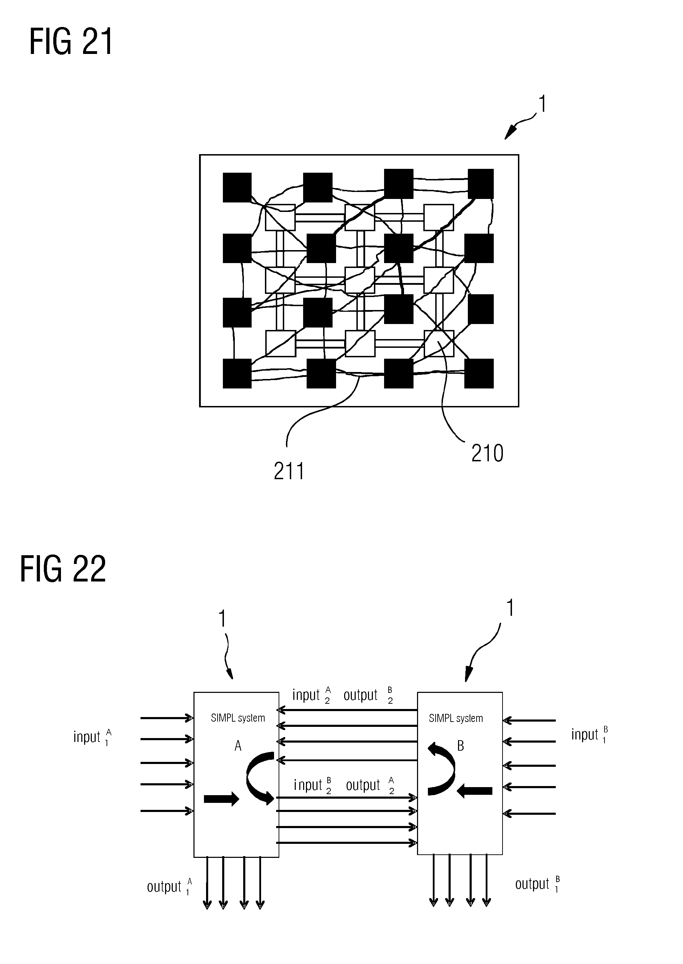

SIMPL systems can serve as protective layers on a top of a conventional circuitry, in a very similar way as in the case of SHIC systems. Consider the circuit sketched in Figure 21, where a protected circuit 210 is surrounded / covered by the SIMPL system, the cobweb-like analog interconnection 211 of the SHIC system 1 protects the underlying circuit 210. The interconnections of the protected system and the protecting SIMPL circuit are running close, and access to the protected circuit 210 should cut through / alter the interconnections of the SIMPL system 1. The SIMPL system can be formed by a CNN.

The output of a CNN-like analogic array depends on the delay / resistance of the wires interconnecting the cells. If the faker would tamper with the underlying circuit, the behavior of the sensitive analog circuit would change.

Note that this system is not rigorously a CNN any more (as it may contain longer-range interconnections to protect the underlying circuit parts), but majority of the connections are still local, giving it high speed and straightforward realizability.

### 12.9.3 Interacting SIMPL systems

The first part of patent application introduced the concept of interacting SIMPL systems with the corresponding security protocols, which can prove the physical proximity of object $O_1$ and $O_2$. We also proposed analog circuits for SHIC-systems in a separate but related patent application.

We demonstrate that fast CNN-SIMPL can realize interacting SIMPL systems. The proposed device consists of:

- Two (or more) CNN-SIMPL system, with fast electrical / optical outputs (their response time lies in the microsecond - nanosecond range,
- An electrical / optical / radiowave transducer system is capable of reliably transmitting a sequence of analog or digital outputs at a high speed (Gbit/sec),

The schematics of Figure 22 illustrates the interconnection of two SIMPL systems 1 and their excitation scheme. The SIMPL systems 1 that are designated A and B are excited by the combinatorial excitation $input^A$ and $input^B$ , which are partly coming from the interrogator (Alice / Bob) and from the other object. When the interrogator applies his vectors to system $A$ in a fast sequence (with a time sequence $T$ ), then the other parts of the excitation vector arrive from system B with at least $\Delta T + 2d / c$ additional delay, where $\Delta T$ is the reaction time of system $B$ (which is approximately the same as of the delay of system $A$ ), $d$ is the distance of the two systems and $c$ is the speed of light. If $\Delta T$ is in the nanosecond / microsecond time range, then the $2d / c$ additional delay starts to influence the SIMPL system response if their distance is larger than meters / kilometers.

An attacker (Eve) could breach the security of the scenario only if she could emulate the behavior of system B sufficiently fast, which is impossible from the definition of the SIMPL system.

The simplest interconnection of two SIMPL systems can be done through a digital channel or a high-quality analog channel. A/D conversion and a simple microwave (or Ethernet) connection can easily achieve Gbit/s transfer rates and few-ten nanosecond conversion times.

### 12.9.4 SIMPL cameras

CNN systems are used primarily for sensory / image processing purposes and many implementations already contain built in photosensors. A CNN SIMPL camera then can produce an extreme fast image transformation on the incoming image, which can be done only by this particular hardware and faking a similar image sequence could take much longer time by the simulator of the SIMPL system. CNN-based image processing also provides a tool to differentiate between 'real' or 'projected' events. For example, if CNNs can process thousands of frames per second and detect the continuity of the movement on the image on the microsecond scale - such image would be extremely difficult to 'project' into the camera.

### 12.10 Full Summary: CNNs as SIMPL systems

Fast Cellular Nonlinear Networks / Analogic Computers, with templates defined by the physical properties / uniqueness of circuit elements and with an on-chip measurement apparatus to extract the parameters required for the simulation, are advantageous candidates for SIMPL systems. Variants of this device are applicable as modifiable tamper sensitive, interacting SIMPL systems and cameras.

The security of CNN-based SIMPL system rests on the fact that they are analog, extremely efficient computation system for specialised tasks. The complexity of the template(s) adds to the speed gap compared to standard, digital computers.

Currently, CNN - like chips are mass manufactured, but they are on the expensive side of the chip market. Commercially available CNN chips are programmable so that they could be applied to a variety of image processing tasks. Once they are mass-fabricated, the price of fixed-template CNN chips should fall in the same range as the price of standard VLSI circuits (digital or analog).

### 13 Electro -Optical SIMPL Systems

In this devices a *unique linear* optical object is coupled to an electrical processor, which is prefer ably non-linear, and which can either be unique or non-unique. These devices unites the beneficial characteristics of optical media (stability, instantaneous operation) with the known complexity of a nonlinear electrical circuit.

### 13.1 CNN with photodetectors coupled to a unique optical system

It may be challenging to realize CNN circuits, which are based on non-robust templates (i.e. interactions which are sensitive to cell to cell parameter variations) and possibly such realization would be susceptible to electronic noise and give non-stable outputs. A robust CNN circuit (insensitive to electric circuit parameter variations), which gets an optical input, which is 'distorted' by a unique optical scattering object (where the scattering object alone has the characteristics given in [45]).

The advantageous properties of such object are:

- It can exhibit uniqueness / can be irreproducible, but the uniqueness is contained in a very stable, robust media such as an optical scattering object,
- It offers the required computational complexity (and nonlinear behavior) through a CNN circuit (and its corresponding photodetector array, fast A/D conversion capability, etc).

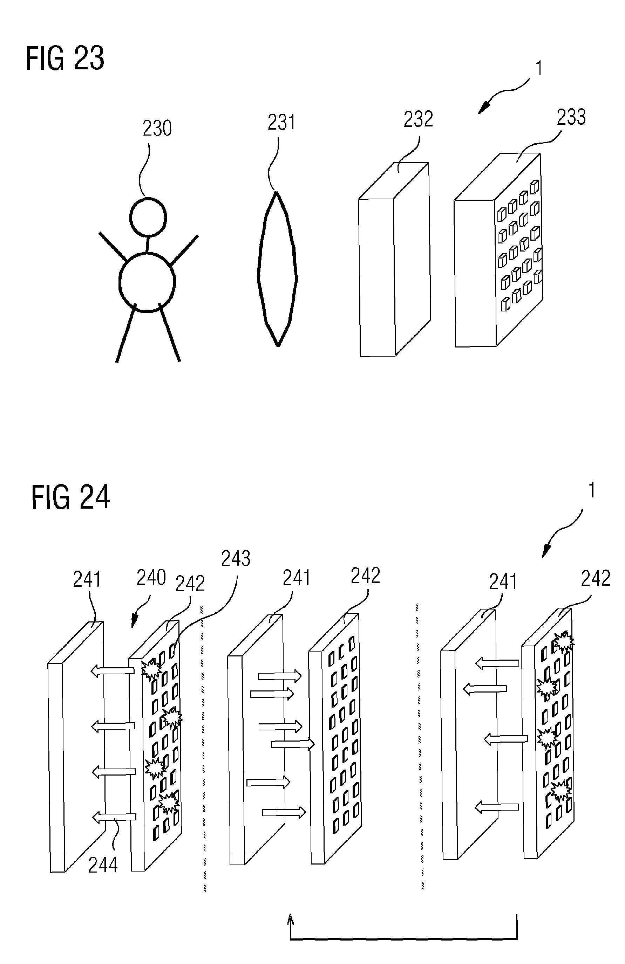

Figure 23 shows such an apparatus in which an image 230 that is used as input test vector is projected by an optical component to an unique scatterer 232 and to an CNN focal plane array 233.

A disadvantage of this apparatus is that the test vector is an image and may have to contain a lot of data - communicating this data between Alice and Bob can take time and can eliminate the time advantage of SIMPL system. On the other hand, the image could consits of pseudo-random data, that is based on a short seed. The seed could then be communicated very quickly, and expanded to the image on site.

A big benefit of this SIMPL system that no new electrical hardware must be developed for it: CNNs with integrated photodetectors are available on the market and only the unique optical system has to be designed and built. The time to prototype this device and bring it to market is probably the shortest among all SIMPL systems.

### 13.2 CNN or Cellular Automata with Photosensitive and Photoactive components

This device exploits the 'interconnection bottleneck' of conventional microelectronic circuits: no matter how fast electronic device components can be, communicating the information by electrical signals between the different part of the circuit is limited - ultimately by the speed of the electromagnetic wave, practically by the parasitic capacitances/ inductances and the limited power output of the transistors driving the interconnections. When large fan out and long-range interconnections are required, optical interconnections can greatly outperform electrical ones.

We exploit this observation for designing SIMPL systems. The proposed device is an ultrafast, optically routed CNN / cellular automata like device which is made from:

- Nonlinear but non-unique electrical electrical circuitry which can be

  * A simple Boolean logic circuit with photo detectors and LED / laser diodes, all of them are ultrafast (sub-ns) operation speed,
  * A CNN-like cell, which has photodiodes / laser diodes to receive and generate optical signals. The cell has CNN-like dynamics, but the device is not rigorously a CNN (because of the optical interconnections)

- A random and unique optical scattering media, providing 'optical routing' between the circuit units.

Figure 24 illustrates the operation of a SIMPL system 1 that is formed by a cellular automate 240 comprising a scatterer 241 and an array 242 of cells 243. Each cell 243 is provided with a light source, for example a LED and a photo detector. In a first initial circuit state the LEDs of the electric cells 243 are emitting light 244 in the direction of the scatterer 241. In a second step light is scattered back from the scatterer 241 is received in particular cells 243. Dependent on the inner logic of the array 242 another election of cells 243 is activated in the next light emitting step.

### 13.2.1 Parameter extraction / extraction of the description

Each logic unit is illuminated one by one (or some of them simultaneously) and the current (or the on / off state) of the photodetectors is detected. At the end of this procedure the scattering matrix of the optical media is known.

For the cellular automate like circuit, the digital units are not unique, there is well defined rule that the LED(s) / laser(s) will lit up if the photodetectors detect a particular pattern. If the underlying circuit is CNN-like, then it is also robust.

The description $D(S)$ is then formed from the rules (logic behavior) of the Boolean units and/or the scattering parameters of the optical medium.

### 13.2.2 Device operation

The input of the device is an initial pattern of on / off LED's. Considering $n$ LED's, $k$ of them being on, the number of possible input combinations is combinatorially large: $\begin{pmatrix} n \\ k \end{pmatrix}$. Depending on the pattern what is projected down the chip and the rule of the circuit units, new LEDs will go off / or shut down in the next cycle. This procedure is repeated until a pre defined time elapses / until several clock cycles (if the circuit is clocked) / or until a steady state is reached.

Because of the cellular-automata like sequential operation any time advantage (compared to a simulator) can be amplified.

### 13.2.3 Complexity, stability and speed of the device

The device is a composition of an extremely stable, unique and linear object (the optical matrix) and low-complexity, non-unique and highly nonlinear circuit blocks (Boolean units or CNN cells). The complexity comes from the computationally universal cellular automata rule / CNN rule and the global interconnection provided by the optical matrix. The origin of the high-speed operation is the instantaneous optical pattern formation and the high-speed circuit units of the device. We assume that the response time of the circuit units (circuit response, photodiode response and LED response time together) is in the order of $dt = 10^{-10}$ seconds.

The description of the test vector can be very compact as it only the list of the initially 'on' photodiodes. The can be a short list as the patterns can quickly evolve.

### 13.3 Security considerations

Knowing the optical scattering matrix ($S$) and the cellular automata rule / CNN template, the device can be simulated on a digital computer in a straightforward way. To build a simulator which is as fast as the original device, one should:

- Re-fabricate the device: it is straightforward for the electrical part, but extremely demanding for the optical media: the structure has to be reverse-engineered from the scattering matrix or the position of the scattering centers measured and the particles / optical fibers should be positioned with sub-micrometer accuracy.

- Make a magnified copy of the device: the faker could try to build an optically /electrically routed computer to simulate the system.

Even if the Boolean units of the emulator circuit are infinitely fast (their response time is zero), and the interconnection is optical (i.e. faster than any electrical routing) the device should be smaller than $cdt$, where $c$ is the speed of light - i.e. it should fit into a $d$ < 10 cm box. Physical limitations on photdiode / photodetector speed will result in an even smaller critical size. It is practically impossible to build such an emulator.

The security of the device is based on the fact that it is difficult to built fast circuits with long-range interconnections and optical routing is very difficult to beat in speed.

### 13.4 Variants of Electro-Optical SIMPL systems

#### 13.4.1 Modifiable SIMPL systems

Modification of the electrical part is straightforward by simply 'burning out' some LEDs /photodetectors. The resulting SIMPL system can easily be derived from the original one. The drawback of this scheme is that the electrical units are not unique objects and they could be re-activated (placed back), although with considerable effort. Modification on the optical unit are undoable but then it is non-trivial to relate the new scattering matrix ($S'$) to the original one.

#### 13.4.2 Tamper sensitive SIMPL systems

Any tampering with the optical unit will change the SIMPL system operation. This optical layer can be used as a protective coating and any protected circuit can be placed under the optical matrix / between the photodiode and laser cells.

#### 13.4.3 Interacting SIMPL systems

These can be most straightforwardly provided by optically interconnecting two SIMPL systems. The interconnection could be done by 'holes' on top of the media. By knowing the scattering matrix between this the holes and the rest of the media, the new scattering matrix can be derived.

### 13.5 Summary

The system described in this section are mixed electrical / optical systems, with simple and extremely fast electrical units, routed together with a random and unique optical matrix acting as a globally and densely interconnected cellular automata / analog CNN-like array.

Fast simulation on a computing architecture which is much larger in physical size is impossible, as information would have to propagate faster than the speed of light to achieve that. Rebuilding the system in smaller size requires advanced and time-consuming microfabrication.

The electrical units and the photodiodes / photodetectors has to be fast (possibly GaAs or InAs based) systems and are supposedly fairly expensive, but could be mass fabricated and their complexity is low. The optical scattering media is cheap.

### 14 Constructing SIMPL systems from SHIC systems or Physical Unclonable Functions with low complexity

As we noted already earlier, another generic possibility to construct SIMPL systems works as follows: One takes a class of physical systems that is generally suited to realize SHIC systems (for an explanation of SHIC systems see patent application EP 09003763). Then, one takes a specimen of this class whose internal complexity is so low that the system is *not* a SHIC system, because it can be machine learned or otherwise numerically simulated. It can be expected in these circumstances that such a simulation will take longer than the real-time behavior of the system. In other words: Such a low complexity version of a SHIC system has a good chance to be a SIMPL system.

As an example, let us consider an optical system consisting of a matrix with many scatterers. The complexity of the system will be strongly influenced by the number of the scatterers. A very large number of scatterers may lead to a SHIC system, since the system may be impossible to simulate or to machine learn. Reducing the number of scatterers step by step will eventually allow simulatability and/or machine learnability, leading to a SIMPL system.

Similar considerations apply to most SHIC systems, except maybe those which are standard memories (or variations of these) with intentionally slow read-out. This means that, among others, the following classes of systems may be suited as SIMPL systems, provided that their internal complexity is intentionally set to be relatively low:

### 14. 1 Electrical Systems

- Nonlinear, inhomogeneous, conductive media which are accessed by electrical contacts at several points. One example is a medium that contains conducting wires in a complex and unique three dimensional arrangement. Such structures will typically be measured by a so-called 'combinatorial' excitation scheme. In this type of scheme, typically several measurement parameters or stimuli are used, which can be switched on and off or tuned independently from each other. For $n$ independently switchable contact points, this leads to art least $2^n$ different overall excitation conditions.

- A regular, cellular structure of active, interconnected circuit elements which produce a characteristic voltage/current pattern by a transient process. Such structures may incorporate circuit constructions for temperature correction and voltage stabilization, constructed in a similar fashion as for CNN's (Cellular Nonlinear Networks).

- Circuits incorporating particles or inhomogeneous films made of nonlinear dielectrics, or (nonlinear) magnetic materials, which are measured by an integrated sensor array by DC or AC techniques.

- On-chip interference of surface acoustic waves.

- Variants of the above described circuits, which are accessed by electromagnetic fields and can be used as secure RFIDs.

### 14. 2 Electro-Optical and Optical Systems

- Scattering tokens with very large number of inputs/outputs
- Scattering token coupled to non-linear and/or slow circuitry
- Combinatorial SHIC systems, possibly using random gain media
- Active photonic crystals
- Optical systems using inhomogeneous organic materials

For further details, the reader is referred to the patent application EP 09003763 whose priority is claimed for the present application and whose subject-matter is included in the present application by reference and from which the above lists of implementation possibilities are taken.

If tamper sensitive, modifiable and interacting SIMPL systems shall be constructed via the above approach, then the use of tamper sensitive, modifiable and interacting SHIC systems or PUFs is required. The required properties will then (in most cases) be inherited from the original, former SHIC systems or PUFs.

### 14.3 Physical Unclonable Functions

Besides the examples of SHIC systems that can be turned into SIMPL systems listed above, any other known Physical One-Way Function, Physical Random Function or Physical Unclonable Function may potentially be converted into a SIMPL system be reducing its complexity to a point where it can be numerically simulated or machine learned, or where its physical features can be determined sufficiently accurately by physical measurements in order to allow numeric simulation and prediction, or other numeric verification of a given measurement value for correctness. Examples of Physical One-Way Functions, Physical Random Functions or Physical Unclonable Functions can be found in [99].

### 14.4 Optical PUFs with Reduced Complexity

As said earlier, the main difference between SIMPL systems and standard PUFs is the simulatability condition. Their main other security feature, physical uniqueness, applies to both concepts. Again as said earlier, this suggests an easy SIMPL system implementation strategy: (i) Take a standard PUF $P$; (ii) reduce its internal complexity, for example by building a smaller or less complex version; (iii) try to characterize this reduced-complexity PUF $P'$ as exactly as possible, obtaining a description $D(P')$; (iv) simulate the reduced PUF $P'$ on the basis of $D(P')$. One suggestive candidate to implement this approach is the optical PUF of [1], since its complexity can be reduced almost continuously by taking smaller and smaller numbers of scatterers.

As a concrete implementation, we suggest to use around $10^5$ polysterene scatterers in an acrylic matrix. The scatterers should be as equal in size and as perfectly spherical in shape as possible. Also the material between the scatterers should ideally be perfectly homogeneous in its refractive index. These two constraints seem to be achievable by current nanofabrication techniques. Please note also that any changes or irregularities beyond $\approx \lambda/4$, where $\lambda$ is the wavelength of the employed laser light, should NOT affect the interference outcome.

Under these conditions, a numerical simulation of the optical structure does not need to consider the interplay of *all* subunits of size $\lambda^3$ in the scatterer, as suggested in [1, 2]. Instead, it suffices to consider the interplay of the $10^5$ scattering centers. The generic simulation algorithm Sim must include the material constants, such as refractive index of the matrix and of the scatterers, the scatterer size and shape, etc. The individual description $D(S)$ should include the position of the scattering centers. These can be determined sufficiently accurately by established optical techniques (also in 3D), such as optical coherence tomography (OCT). While providing a general resolution of typically 5 $\mu$m, OCT is able to determine the center of mass of a spherical shaped particle with an accuracy of up to about 10 *nm* [23].

Using the estimate in [1] as a basis, the simulation of such a structure should take roughly $10^5 \times 10^5 \times 10^2 = 10^{12}$ steps. The real scattering structure would generate the resulting pattern in picoseconds, and positioning of the laser beam could be carried out in microseconds to milliseconds via acousto-optic devices [24]. Recording of the speckle pattern does not necessarily have to be carried out by slow CCD cameras, but by smaller and extremely quick arrays of photosensitive diodes. Overall, this makes such a structure a good candidate for a SIMPL system.

Two important variants of the above procedure are conceivable. Firstly, the description $D(S)$ does not necessarily need to be determined by OCT or comparable physical measurements. In order to make the prediction more robust against possible deviations from an idealized system, one could employ machine learning methods on the basis of many measurement parameter - measurement value - pairs $(p_i, M(p_i, S))$. Certain well-known techniques, such as Support Vector Machines, are specialized to learn large, linear systems [25, 26]; they are also known to be robust against noise both in the input data as well as in the model. In that case, the trained ML algorithm would serve as $D(S)$.

Secondly, it is, of course, possible to use a reduced-complexity *integrated* optical PUF [6, 7] for our purpose. This makes the measurement more stable and is generally more practical. On the other hand, it may reduce the the speed advantage of the SIMPL system, especially if the scattering material is linear: The resulting response for complex challenges may then be derived via hidden variable models [25] and as a linear superposition of known responses, circumventing the need for a full simulation.

### 14.5 Summary

In this section, the use of SHIC systems or PUFs (Physical Unclonable Functions) with reduced complexity as SIMPL systems has been described. The reduced complexity of the systems makes them eventually machine learnable or otherwise numerically simulatable. Nevertheless, the still remaining, moderate complexity of the numerical prediction will make the prediction slower than a real-world experiment. This qualifies the structure as a SIMPL system.

Due to the inherently analog, three dimensional, and parallel nature of the employed systems and their internal processes, it will be very difficult to simulate them in real-time on a standard, sequential, digital architecture. Further aspects in our favour are the still relatively large number of mutually interacting system components and the fact that it will be difficult to identify the equivalent function to the system that can be computed most efficiently.

The underlying systems typically will be disordered and can be produced very easily and in the sub-cent range. Numerical characterization or machine learning of the structures should be executed during production, causing presumably moderate costs.

### 15 Standing wave phenomena and interference of high-frequency electromagnetic waves on a chip

The wiring of electronic circuits operating at high frequencies (GHz--10 GHz range) should be very carefully designed to minimize interference effects, inductive-capacitive couplings, reflections on unmatched impedances etc. These electromagnetic phenomena cause complex and parasitic effects in the circuit operation, which are undesired in most applications. The electrical signals (currents / voltages) at a given point of the structure will depend on the dynamic history of currents / voltages at other points in the device. From our perspective of implementing SIMPL systems, said complex effects are desirable. As a potential realization of a SIMPL system we hence propose an integrated circuit, which is intentionally designed to be susceptible to these electromagnetic effects.

Simulation of such a circuit requires full electromagnetic modeling of the interconnects, or at least the employment of transmission line models for the wiring. This is far more demanding computationally than a circuit model with only lumped elements. Nevertheless, if the timing / dynamics of the input (exciting) signals is kept under control, the circuit should behave deterministically and obey to the well-known, precise laws of classical electrodynamics. It should also be possible to use a built-in test circuitry to extract capacitive / inductive couplings, resonance frequencies, and complex impedances of the wiring. There are standard circuit simulation packages (derivatives of the established SPICE package) which are capable of simulating such structures.

The electromagnetic behavior of the circuit develops with (almost) the speed of light, while any electromagnetic simulator program is going to be significantly slower than that. The number of simulation parameters is not going to be extremely high - it equals the number of resistive, inductive and capacitative network elements necessary for an accurate description of the passive electromagnetic structure.

Uniqueness and / or non-clonability of the microwave network (chip wiring) can be provided by post-manufacturing steps on the metallization layer (cuts by FIB / laser tools) or randomly placing scattering centers around this top layer. The unique electrical properties of active circuit elements (transistors) will also make the life of a potential faker very difficult.

Read-out of the electromagnetic field patterns can be done by microelectronic structures coupled / connected to the chip wiring. For example, a memory array placed beneath the wiring can record a snapshot of the field distribution or extract the time averaged amplitude of electric fields.

### 15.1 Summary

In this section an on-chip system where the complex interference patterns of high frequency electromagnetic waves in partly random media, surfaces or other geometries creates a complex, yet predictable pattern. This pattern can be simulated numerically with respective tools, and can be read out by on chip sensors, such as transistors or memory cells.

The system in fact acts as a highly parallel, analogue computer, whence it seems basically impossible to simulate it in real time. The inherent physical uniqueness of the substrate and geometry and further intrinsic chip effects leads makes it impossible to refabricate the structure.

Ideally, the systems would be integrated in standard integrated circuits and computer chips. They can be built and implemented with standard, already existing technology.

### 16 Semiconductor Memories with Special Designs

This section proposes the use of semiconductor memories with a special design, which we call "skew design", for use as SIMPL systems. The adjective "skew" refers to the fact that the memory cells in this design have varying dimensions, which differentiates them from standard designs. It implies that the cell behaviour differs uniquely at varying operational voltages, which makes it difficult for an adversary to simulate the behaviour of the whole memory in real time. This holds especially when the memory executes very many consecutive read and write events at full operational speed, and at randomly varied voltage levels. On the other hand, since the behaviour of the whole system is digital, and since the dimensions of the single cells are known at least to the manufacturer, the behaviour of the memory can clearly be simulated in principle. Together, this makes these structures usable as SIMPL systems. The following sections unfold this basic idea, and also provide the reader with some background on semiconductor memories.

### 16.1 Introduction to Semiconductor Memories

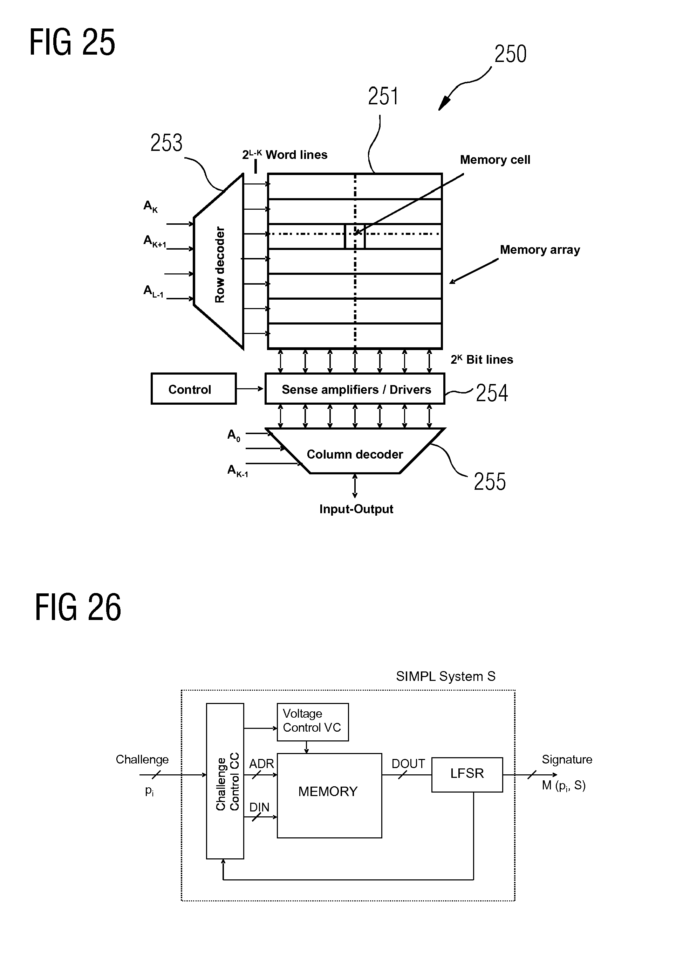

As depicted in figure 25 a semiconductor memory 250 consist of the following parts.
A core or memory array 251 is made up of individual memory cells 252 arranged in rows and columns. Each memory cell 252 is individually addressable for writing and reading. Typically it can store one bit. Different types of semiconductor memories 250 are differentiated primarily by the type of memory cell 252 in the core array 251. The core memory array 251 is surrounded by peripheral circuits that perform primarily the following functions: a road decoder 253, an component 254 containing sense amplifiers and drivers and a column decoder 255 is used for decoding the address and selecting the proper rows and columns; writing new information into selected memory cells 252 (WRITE operation); reading stored information out of selected memory cells (READ operation) as well as amplifying the signal obtained from a memory cell in case of a READ operation; controlling READ and WRITE accesses to the memory.

Key characteristics of a memory are:

- Word width: how many bits are read from or written into the memory in one read or write operation? Typically this value is a power of 2.
- Address range: how many memory words can be stored in the memory? Typically this value is a power of 2.

- A memory can be organized differently internally than it appears to the outside world. E.g. in DRAMs often the internal word width is larger than the external word width. In this case, if a certain word is read from the memory array, only part of it is provided at the output pins of the memory. The rest is stored temporarily, in case the next memory access is from the same internal word.

Major different types of semiconductor memory are as follows:

i.) DRAM (Dynamic random access memory). A DRAM memory cell consists of an access transistor and a capacitor that stores a charge. As it contains only one transistor, a DRAM cell is very small. Due to different leakage currents, stored charges tend to dissipate and therefore need to be refreshed regularly (usually multiple times every second). DRAMs immediately lose their stored data when their supply voltage is turned off.

ii.) SRAM (Static random access memory). An SRAM memory cell usually consists of six transistors (four transistors form a latch, two additional transistors serve as access devices). An SRAM cell is significantly larger than a DRAM cell. But since the information is stored in a latch, refresh is not needed. SRAMs tend to be significantly faster in reading and writing compared to DRAMs. SRAMs also immediately lose their stored data when their supply voltage is turned off.

iii.) NVM (non-volatile memory). The predominant type of NVM today is FLASH memory. In FLASH memories, the storage cell typically consists of one transistor, as in DRAMs. FLASH memories, however, retain their contents when their supply voltage is turned off. For a more detailed overview of semiconductor memories, please refer to [40].

### 16.2 Usage of Semiconductor Memories as SIMPL Systems

The basic concept of using a semiconductor memory as a SIMPL system is shown in Figure 26. A description of the full concept follows. The SIMPL system $S$ consists of a semiconductor memory MEMORY, a linear feedback shift register LFSR, a voltage control $VC$ and a challenge control $CC$. In the following, we assume MEMORY to be an SRAM, but the concepts outlined below could possibly also be realized using other types of memories.

The memory array in MEMORY differs from a standard memory in two major aspects:

i.) The memory contains three different types of memory cells:

- fixed 0 cells
- fixed 1 cells
- regular cells

Fixed 0 cells and fixed 1 cells have been modified during manufacturing such that they will always store values of either "0" or "1", respectively -regardless of which data have been attempted to be written into these cells by a WRITE operation. Such behavior can be achieved economically towards the end of the manufacturing process of a semiconductor memory e.g. by modifying individual cells using lasers. Regular cells will generally contain the value that has last been written into them, assuming a sufficient supply voltage $VDD$ (see below the next aspect). Therefore, since each memory cell can have one of three possible types, already with only 210 memory cells, more than $10^{99}$ different memories can be manufactured. This simplified calculation is somewhat optimistic, however. It should be avoided to manufacture a SIMPL memory $m_A$ such that the set of its fixed 0 cells is a proper subset of the set of the fixed 0 cells of another SIMPL memory $m_B$ and the set of its fixed 1 cells is also a proper subset of the set of fixed 1 cells of $m_B$. In this case, a cryptographic adversary could potentially take $m_A$ and modify it (albeit at significant costs) to the characteristics of $m_B$ by converting regular cells to fixed 0/1 cells. As this number is already larger than the estimated number of atoms in the universe, the variety of different unique memories that can be created is vastly beyond the requirements of any security application that we can envision.

ii.) In contrast to standard memory cells, the "regular cells" in SIMPL memories have been designed such that they do not operate correctly across the entire range of supply voltages $VDD_{min}...VDD_{max}$ for which the memory has been specified. Instead, they have been designed such that during WRITE operations, the supply voltage $VDD$ must be $VDD \geq VDD_{funcmin} > VDD_{min}$ for the value to be written to actually be stored in the memory cell. For $VDD < VDD_{funcmin}$, the cell's current value will not be changed. The supply voltage level $VDD_{funcmin}$ required for a correct WRITE operation on a memory cell depends on the design of this memory cell (structure of this cell; dimensions of the individual transistors making up this cell). We refer to a memory design in which different memory cells have different required supply voltage levels as a "skew design". While the above discussion assumes a uniform minimum

**EP 2 230 793 A2**

supply voltage level $VDD_{funcmin}$, it is entirely possible to design different cells in a manner such that they will have different minimum supply voltage levels $VDD_{funcmin}$, thus further increasing the complexity of this system.

From outside, the SIMPL system receives a challenge $p_i$ which consists of a sequence of $j = 1,..., l$ binary strings $p_{i,j}$ (so called subchallenges) of length $len(p_{i,j}) = n_{row} + n_{col} + n_{cc} + n_w$. Here, $n_{row}$ denotes the number of bits to address the rows of the memory, $n_{col}$ the number of bits to address the columns of the memory. $n_{cc}$ denotes the number of bits reserved for control purposes and $n_w$ the width of a data word in bits. In other words, a subchallenge consists of the following parts:

- $p_{i,j}[n_{row}]$: row address $ADR_{row}$
- $p_{i,j}[n_{col}]$: column address $ADR_{col}$
- $p_{i,j}[n_{cc}]$: control bits
- $p_{i,j}[n_w]$: data bits $D_{IN}$ (only in case of a WRITE operation)

The control bits serve the following functions:

- they contain control signals needed by MEMORY (e.g. READ / WRITE signals)
- they control the voltage control $VC$
- they control whether data $D_{OUT}$ read out from MEMORY are utilized to modify the next subchallenge or not (any bit in subchallenge $p_{i,j}$ can potentially be modified by $D_{OUT}$).

$CC$ derives from $p_{i,j}$ both an address consisting of $ADR_{row}$ and $ADR_{col}$ and control signals which are applied to MEMORY, as well as possibly also data $D_{IN}$ to be written into MEMORY in case of a WRITE operation. Initially, all write-able memory cells contain zero.

In case of a WRITE operation, the memory cell (in the following discussion it is assumed that the word-width of MEMORY is $n_w$ =1 --- but, of course, the discussion applies to larger word-widths just as well) selected by $p_{i,j}[n_{row}]$ and $p_{i,j}[n_{col}]$ is addressed and the data $D_{IN}$ (derived from $p_{i,j}[n_w]$) are applied to the addressed memory cell. What then actually happens inside the memory, depends on a number of circumstances:

- if the selected cell is a fixed 0 or fixed 1 cell, its contents is fixed and will not change
- if the selected cell is a regular cell, but the current supply voltage level $VDD$ is $VDD < VDD_{funcmin}$, then the contents of the cell will not change.
- only if the selected cell is a regular cell and the current supply voltage level $VDD \geq VDD_{funcmin}$, then the contents of the cell will be $D_{IN}$ after the WRITE operation.

Of course, it is possible that the cell already contains a value equal to $D_IN$ even before the WRITE operation

The task of voltage control $VC$ is to set the supply voltage $VDD$ of MEMORY. Theoretically, an arbitrary number $m$ of different supply voltage levels $VDD_1,...,VDD_m$ can be defined. In reality, e.g. for cost reasons, it will typically suffice to have two or three different supply voltage levels.

In case of a READ operation, the data $D_{OUT}$ are read from the addressed memory cell. The memory is designed in such a way that the data stored in a memory cell will be read out correctly for any permissible supply voltage level $VDD_i$ with $VDD_{min} \leq VDD_i \leq VDD_{max}$. The resulting data $D_{OUT}$ are then fed into LFSR. The output of LFSR is then fed back into CC where it is potentially combined with the next subchallenge $p_{i,j+1}$. This feedback loop is important to increase the security of our concept. If e.g. the memory address $p_{i,j+1}[n_{row}]$, $p_{i,j+1}[n_{col}]$ embedded in the next challenge is modified by $D_{OUT}$, then the memory can only be correctly addressed once $D_{OUT}$ is available. The result is that if an attempt to build a clone of the SIMPL memory results in an object which delivers $D_{OUT}$ just a little bit slower than the SIMPL memory itself, this timing difference will be amplified with each successive subchallenge $p_{i,j}$.

Key parameters of this SIMPL system are the number $n$ (= $2^{n_{row}+n_{col}+n_w}$) of memory cells, as well as the data-write-time $t_{dw}$ (measured from the availability of a subchallenge $p_{i,j}$ at $CC$ until the data are stably stored in the memory cell), the data read time $t_{dr}$ (measured from the availability of a subchallenge $p_{i,j}$ at $CC$ until the read data are available at the output of LFSR (and there also at the input of $CC$ for another read or write operation)), and the voltage-switch time $t_{vs}$ (measured from the availability of a subchallenge $p_{i,j}$ at $CC$ until MEMORY has stably achieved the supply voltage $VDD$ requested by $p_{i,j}$). From these values the cycle time $t_{cyc}$ can be determined, which describes with which temporal spacing successive subchallenges can be applied to the SIMPL system $S$. The frequency $f$ at which the SIMPL system S can operate is then obviously given by $f = 1/t_{cyc}$.

It should be noted that we might not simply want to determine $t_{cyc}$ as $max(t_{dw}, t_{dr}, t_{vs})$, as potentially $t_{vs}$ might be significantly larger than $t_{dw}$ and $t_{dr}$. This could alternatively also be handled by allocating multiple clock cycles to a voltage switch operation.

On the other hand, parts of the above concept may be omitted to reduce cost -- at the expense of reduced security. E.g. the voltage control may be dropped, thus operating MEMORY only at one fixed voltage.

### 16.2.1 Discussion

A key advantage of the SIMPL system based on semiconductor memories as described above is that a measuring apparatus is very simple and therefore low-cost. Measurements $M_i$ are represented by the challenges $p_i$, which are binary strings. Also, the measurement results $M(p_i,S)$ are simply binary strings which are obtained at the output of LFSR. Assuming that a challenge $p_i$ consists of $l$ subchallenges $p_{i,j}$ which are applied to MEMORY in $l$ successive clock cycles, then the measurement result $M(p_i,S)$ can either be taken as the concatenation of the LFSR output in these $l$ cycles, or a function of all LSFR outputs, for example a subset thereof (e.g. only the last output) or a hash value of the outputs. Here obviously a tradeoff between required effort (size of measurement result) and potential for aliasing (different combinations of SIMPL systems and challenges being mapped to the same measurement result) is present. The response time $t_R$ of the SIMPL system is essentially given by $l \cdot t_{cyc}$. As both the measurement inputs and results are simple binary strings, they can be processed very cheaply and quickly.

The concept for a SIMPL system S based on a semiconductor memory described above obviously obeys the definition of a SIMPL system as it can be described by a numerical string $D(S)$ which a "computer algorithm" *SIM* can take as input together with a challenge $p_i$ to determine a response $SIM(p_i,D(S))$ which will be equal to the measurement result $M(p_i,S)$.

This description $D(S)$ needs to contain the following information:

- structure of the memory: number of rows and columns, wordwidth
- for each memory cell: type (fixed 0/1 or regular); for regular cells: voltage level required for correct operation
- structure of *CC*
- structure of *VC*
- structure of LFSR

Please note that some, but not all of these values, may be the same for all SIMPL systems from a certain class. Furthermore, to show that we have a SIMPL system according to definition 3.1 in [47], we need to establish that a cryptographic adversary cannot determine $M(p_i,S)$ in time $2 \cdot t_R$ or less, except by chance. For this purpose, we will now show that:

i.) the IC cannot easily be replicated ( = exact physical clone')
ii.) the IC cannot easily be modeled e.g. by an FPGA (= functional physical clone)
iii.) the IC cannot easily be simulated on a general-purpose computer (= digital clone').

We will deal with these three threats in the following.

**Exact physical clone.**

A cryptographic adversary Eve can theoretically analyze the SIMPL system S based on a semiconductor memory and exactly replicate it. This, however, is very costly. Designing and manufacturing a semiconductor IC in an advanced manufacturing technology (90nm and below) will incur one-time costs (NRE, non-recurring engineering costs) of millions of US dollars. While this concept therefore is not technologically secure, it can be considered to be secure against private attackers and consumers. The concepts outlined above could also be extended by utilizing the inherent variations of the manufacturing process of integrated circuits as a unique type of "fingerprint" for each manufactured IC to achieve a unique, technologically secure SIMPL system.

**Functional physical clone.**

A faker or fraudster may consider different ways to achieve a functional clone:

i.) Analyze the memory of the SIMPL system. Then take an existing, mass-manufactured semiconductor memory having the same size and organization, and use modification techniques to create fixed 1 and fixed 0 memory cells in the existing memory as are present in the reference SIMPL memory.

Such modifications might theoretically be possible using equipment such as FIB (focused ion beam), which are very expensive to acquire, but not so costly on a per-modification basis. It is by no means guaranteed that such a FIB-based modification will be successful in replicating a semiconductor memory-based SIMPL system, but also success can certainly not be ruled out. In any way, the use of FIB equipment on large scales will be beyond the reach of any private consumer and criminal organisations.

One way to foil such an approach is the proposed combination of skew design cells and different supply voltage levels. The cells in a standard existing mass-manufactured semiconductor memory will all be alike, and we can ensure in the prosposed skew design that e.g. space constraints prohibit the modifications of the cells in an existing, mass-manufactured memory to replicate the behavior of skew design cells. Even assuming that Eve manages to cheaply modify existing mass-manufactured memories such that they correspond to the different behavior of the SIMPL memory at different voltage levels, it would be impossible to replicate the behavior of our SIMPL memory. Changing the supply voltage $VDD$ in this scheme corresponds to changing to a different memory - but this memory will not have the history (and therefore memory contents) of the SIMPL memory.

ii.) Use programmable electronics (FPGAs) to replicate the behavior of the proposed SIMPL memory. The idea would be to replicate each cell of the memory by FPGA logic. For each memory cell, the corresponding FPGA logic could be designed to act either like a fixed 0 or fixed 1 cell, or like a regular cell. The different behavior of a regular cell in a WRITE operation depending on supply voltage level could also be modeled. There are a few major problems associated with this approach:

A. Cost: while a bit cell e.g. in a DRAM memory today can be manufactured for less than one millionth of a US dollar, the FPGA circuitry required to emulate one bit cell will cost at least 10 to 100 times more.

B. Performance: emulating the behavior of a memory cell by means of an FPGA takes significantly more time than the real system. In particular, programmable FPGAs work at considerably lower clock frequencies than state of the art memories.

C. Sheer complexity: as the emulation of a single bit cell requires the resources of several (2 or more, the exact number depends on the complexity of the basic logic block) basic logic blocks (CLBs) of an advanced FPGA, the largest FPGA available today can emulate at most one hundred thousand memory cells. Thus, for a medium sized memory of 1 MBit, 10 FPGAs are required. These FPGAs all need to be connected together and data needs to travel through the connections, strongly impacting the performance, and further slowing down the system to an extent where the difference between the original and the faker system will be clearly detectable.

**Digital clone.**

Basically, a SIMPL semiconductor memory can easily be analyzed ("reverse engineered") and modeled in a digital computer. This computer can then simulate the response of the SIMPL memory to any incoming challenge $p_i$. As in the case of the FPGA above, the question is primarily the speed at which this simulation can be performed.

For two of the above replication possibilities (FPGA based functional physical clone, or digital clone), the speed of the SIMPL memory, as measured by $t_{dw}$, $t_{dr}$ and $t_{vs}$, is essential. If any attempt to replicate the SIMPL object results in $t_{dw}$ and $t_{dr}$, which are two times the value of the SIMPL memory, then we can very safely conclude that the object indeed meets the criteria for a SIMPL object. By combining multiple sequential subchallenges incorporating WRITE and READ accesses to the memory, we can then achieve essentially any required difference in response time between the SIMPL object and its replication.

**Summary**

In summary, the usage of semiconductor memories as SIMPL systems rests on the following key ideas:

- data can be written into and read from a memory faster than such operations can be simulated using other hardware (e.g. FPGA, $\mu$ P) - unless orders of magnitude more money is invested into such hardware, than the memory, or the object that is to be protected, cost.
- by modifying cells such that they work properly only above a certain supply voltage $VDD_i$, a unique memory design results that is not easily available on the open market. It will be manufactured exclusively for our security purpose.
- By uniquely "personalizing" cells to behave as fixed 0 or fixed 1 cells during manufacturing, each resulting SIMPL memory will be unique.

**Variants.**

As straightforward variations of the SRAM SIMPL systems discussed above, one could imagine the following measures:

- To repeat several write operation cycles before the next read operation is executed. This can also help to exploit possible time asymmetry between read and write operations (where applicable) to our advantage.
- To activate and write into more than one word line in one writing cycle. This should further increase the relative time difference between an original SRAM SIMPL system and a faker.
- To devise special memory chip architectures for parallel write operations into a large number of cells in one write cycle, at least some of which have the above skew design.

**16.3 Concrete cell layout example and corresponding simulation results**

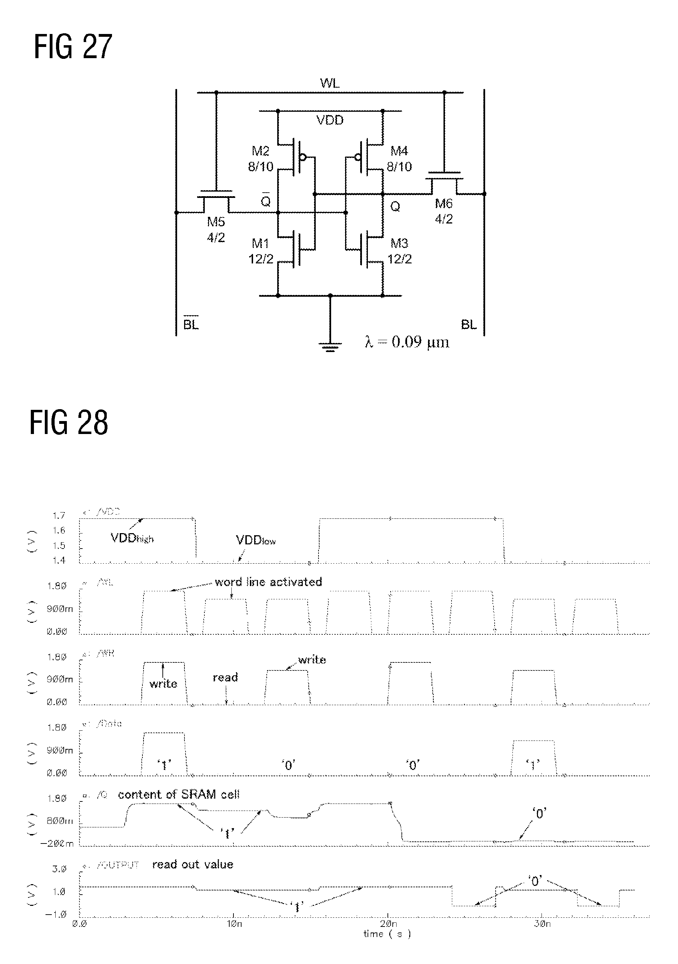

We also devised one particular cell layout in one specific technology that exhibits the desired properties which we described over the last sections. This layout works in TSMC's 0.18 $\mu$m technology, and is illustrated in Figure 27. It shows an SRAM cell with its six transistors, and also gives the width/length ratios of the respective transistors, which are written right next to the transistors in the Figure 27. Concretely, the width/length ratios for the transistors termed as $M_1$, ..., $M_6$ are as follows: $M_1$: 12/2, $M_2$: 8/10, $M_3$: 12/2, $M_4$: 8/10, $M_5$: 4/2, $M_6$: 4/2. The absolute value for the widths and the lengths is given by multiplication with the factor $\lambda$= 0.09 $\mu$m, as also specified in the Figure 27.

As desired, this special design and the special width/length ratio of the cells ensures that some of the cells will not function properly over the whole operational voltage range $VDD_{min}$ to $VDD_{max}$. Instead, they will exhibit write failures (meaning that the cell content is not changed) whenever the operational voltage is below a certain threshold voltage $VDD_{funcmin}$. Whenever the supply voltage is above this threshold, however, they function properly.

The desired functionality of the design shown in Figure 27 based on TSMC's 0.18 $\mu$m technology has been verified successfully with Spectre simulations (Spectre is a standard, SPICE-type simulation tool by the company Cadence, www.cadence.com). The results are shown in Figure 28, which illustrates the respective write failures and write successes together with the reliable read-out functionality at different operational voltages. In our case, $VDD_{min}$ = 1.4 V, $VDD_{max}$ = 1.7 V, and $VDD_{funcmin}$ = 1.58 V.

**16.4 Summary**

In this section the use of semiconductor memories with special designs as SIMPL systems has been described. In particular, one design possibility consists of changing the memory cell dimensions in such a manner that read and write errors are induced intentionally at varied operational voltage levels (so-called skew designs).

As argued earlier, the simulation of such a skew design on a classical architecture or on configurable hardware can be expected to be slower than the original system. Rebuilding the original hardware will only be possible if the adversary owns or controls a chip foundry, since legal reproduction of the skew design in memories by customized orders will be forbidden and controlled by the foundries.

The systems can be produced at the common, moderate prices on the semiconductor memory market.

**17 Advantages**

We have discussed SIMPL systems and their applications. These physical systems open up new avenues in the treatment of some of the most important and most investigated problems in cryptography and security. Among them are the following:

- Secure communication
- Digital rights management
- Forgery-proof labeling of valuable items such as consumer goods, pharmaceuticals, banknotes, bankcards and ID cards
- Authentication of audio/video material and audio/video transmissions
- Remote proofs of hardware integrity and hardware functionality over binary communication channels

Apart from being technically challenging, these problems also possess particular economic relevance: The labeling and DRM problem alone have a volume of several hundreds of billions of Dollars [31].

In comparison to conventional cryptographic system, the SIMPL system described herein have the following advantages:

1. SIMPL systems do not rely on the standard assumptions omnipresent in mathematical cryptography, such as the assumed hardness of the factoring or the discrete logarithm problem, which would all at once be endangered by quantum computers. SIMPL systems help to create an independent long-term fundament for cryptography that would not be endangered by quantum computers.

2. SIMPL systems enable structurally new applications that could not be achieved on the basis of purely mathematical cryptography alone. Thus, they do not only improve existing approaches, but allow fundamentally new concepts.

3. In opposition to secret binary keys, SIMPL systems cannot be transferred or spied out from a computer system, or extracted from mobile systems like smart cards through invasive or side channel attacks [2], and later be copied. This critically enhances the security in several applications.

4. One of the most notable new ideas related to SIMPL systems is the concept of a *Virtual Proof of Reality.* It enables two remote parties Alice and Bob to *prove* physical statements regarding the physical system or location they are situated in by mere communication over a binary channel. Special cases of Virtual Proofs of Reality include the Virtual Proofs of Possession, of Destruction, of Hardware Functionality and of a (physical) Event that we discussed earlier.

Virtual Proofs enable a vast number of novel applications both in cryptography and security. They are tailored for a situation where many physical parties or persons are connected via binary channels, which reflects just the modem Internet and general network scenarios. In these situations, Virtual Proofs enable to carry over some of the preferable security properties of the analogue physical world (like secure and unambiguous recognition of entities) to a networked digital world.

In order to judge the novelty of this concept, the reader may recall at this point how difficult it was *without* the use of SIMPL objects and the concept of a Virtual Proof to prove over a binary channel that some physical system was in the possession of a certain person, or that some physical system had been altered or destroyed, just to name two examples.

Throughout the description and claims of this specification, the singular encompasses the plural unless the context otherwise requires. In particular, where the indefinite article is used, the specification is to be understood as contemplating plurality as well as singularity, unless the context requires otherwise.

Features, integers, characteristics, compounds or groups described in conjunction with a particular aspect, embodiment or example of the invention are to be understood to be applicable to any other aspect, embodiment or example described herein unless incompatible therewith.

**References**

[1] U. Feige, A. Fiat and A. Shamir: Zero knowledge proofs of identity, Journal of Cryptology, Vol. 1, pp. 77--94 (1987)

[2] Ross Anderson (2001): Security Engineering. Wiley. ISBN 0-471-38922-6.

[3] Whitfield Diffie, Martin E. Hellman: New Directions in Cryptography. IEEE Transactions on Information Theory, 22(6):644-654, November 1976

[4] Ronald L. Rivest, Adi Shamir, Leonard M. Adleman: A Method for Obtaining Digital Signatures and Public-Key Cryptosystems. Commun. ACM 21(2): 120-126 (1978)

[5] Bruce Schneier: Applied Cryptography. Second Edition. John Wiley & Sons, 1996. ISBN 0-471-11709-9.

[6] Wenjun Zeng, Heather Yu, Ching-Yung Lin (Editors): Multimedia security technologies for digital rights management. Academic Press, 2006. ISBN 0-12-369476-0.

[7] Gerald de Jean, Darko Kirovski: Radio Frequency Certificates of Authenticity. http://research.microsoft.com/users/darkok

[8] Gerald de Jean, Darko Kirovski, Certifying Authenticity using RF Waves, http://research.microsoft.com/users/darkok

[15] Darko Kirovski: Toward an automated verification of certificates of authenticity. ACM Conference on Electronic Commerce 2004: 160-169

[16] Joshua R. Smith, Andrew V. Sutherland: Microstructure based indicia. Proceedings of the Second Workshop on Automatic Identification Advanced Technologies, Morristown, NJ. October 1999, pp. 79-83.

[17] M. Bellare, S. Goldwasser: Lecture Notes in Cryptography. Available from http://www-cse.ucsd.edu/ mihir/papers/gb.html.

[18] B. Schneier, J. Kelsey, D. Wagner, and C. Hall: An Authenticated Camera. 12th Annual Computer Security Applications Conference, ACM Press, December 1996, pp. 24-30

[19] Charles H. Bennett: Ideas on privacy vs. Authentication. Authentication by online challenges. IBM Research Yorktown, January 2002. Available from www.research.ibm.com/people/b/bennetc.

[20] C. Papadimitiou: Computational Complexity. Addison Wesley, 1994. ISBN 0201530820.

[21] C.H. Bennett and G. Brassard: Quantum cryptography: Public key distribution and coin tossing. Proceedings of IEEE International Conference on Computers, Systems, and Signal Processing, Bangalore (IEEE, New York, 1984) p.175.

[22] R. Rivest, B. Lampson: SDSI --- A Simple Distributed Security Infrastructure. Manuscript, 1996. Available from http://www.soe.ucsc.edu/~abadi/Papers/sdsi11.html.

[23] C. Ellison, B. Frantz, B. Lampson, R. Rivest, B. Thomas, T. Ylonen: SPKI Certificate Theory. Manuscript, September 1999. Available from http://www.ietf.org/rfc/rfc2693.txt

[24] C. Ellison, B. Schneier: Ten Risks of PKI: What You're not Being Told about Public Key Infrastructure. Computer Security Journal, v 16, n 1, 2000, pp. 1-7. Available from www.schneier.com/paper-pki.html.

[25] MIT's project oxygen. All details available from http://oxygen.csail.mit.edu.

[26] http://www.ubiq.com/hypertext/weiser/UbiHome.html

[27] M. Weiser: Some computer science issues in ubiquitous computing. ACM SIGMOBILE Mobile Computing and Communications Review, 1999.

[28] M. Satyanarayanan: Pervasive computing: vision and challenges. Personal Communications, IEEE 2001. Available from http://www.cs.cmu.edu/ aura/docdir/pcs01.pdf

[29] D. Lim: Extracting Secret Keys from Integrated Circuits. MSc Thesis, MIT, 2004.

[30] D. Chinnery, K. Keutzer: Closing the Gap between ASIC & Custom. Kluwer Academic Publishers, 2002.

[31] The World Economic Forum, Davos, 2004.

[32] Akio Ushida, Yoshihiro Yamagami, Yoshifumi Nishio, Ikkei Kinouchi and Yasuaki Inoue: An Efficient Algorithm for Finding Multiple DC Solutions Based on the SPICE-Oriented Newton Homotopy Method. IEEE Transactions on computer-aided design of integrated circuits and systems, Vol. 21, No. 3, March 2002.

[33] K.G. Nichols, T.J. Kazmierski, M. Zwolinski, A.D. Brown: Overview of SPICE-like circuit simulation algorithms. IEEE Proc.-Circuits Devices Syst., Vol. I11, No. 4, August I594

[34] Otto Forster: Algorithmische Zahlentheorie. Vieweg Verlag, 1996. ISBN 3-528-06580-X.

[35] B. Gassend: Physical Random Functions. Master Thesis, MIT, February 2003.

[36] R. Pappu, B. Recht, J. Taylor, N. Gershenfeld, Physical One-Way Functions, Science, vol. 297, pp. 2026-2030, 20 September 2002.

[37] R. Pappu, Physical One-Way Functions, PhD Thesis, MIT.

[38] Catherine Taylor Clelland, Viviana Risca, Carter Bancroft: Hiding Messages in DNA Microdots. Nature Vol 399, pp. 533 -- 534, 1999.

[39] Richard P. Feynman, Simulating Physics with Computers. International Journal of Theoretical Physics, Vol. 21, No. 6&7, pp. 467--488, 1982.

[40] Betty Prince, Semiconductor Memories -- A Handbook of Design, Manufacture, and Application. John Wiley & Sons, 1995.

[41] Peter M. Kogge, Jay B. Brockman, Thomas Sterling, Guang Gao : Processing in memory: Chips to Petaflops In Workshop on Mixing Logic and DRAM: Chips that Compute and Remember at ISCA '97

[42] Chua, L.O. and L. Yang (1988a), Cellular Neural Networks Theory, IEEE Transactions on Circuits and Systems, vol. 35, pp. 1257-1272.

[43] Chua, L.O.; Roska, T.; Kozek, T.; Zarandy, A., CNN universal chips crank up the computing power Circuits and Devices Magazine, IEEE , vol.12, no.4, pp.18-28, Jul 1996 URL:http://ieeexplore.ieee.org/stamp/stamp.jsp?arnumber=526876&isnumber=11056

[44] Serpico, C., Setti, G., and Thiran, P. 1997. Analogies between cellular neural networks and partial differential equations In Advances in intelligent Systems, F. C. Morabito, Ed. Ios Frontiers In Artificial Intelligence And Applications Series, vol. 41. IOS Press, Amsterdam, The Netherlands, 157-162.

[45] R. Pappu, B. Recht, J. Taylor, N. Gershenfeld, Physical One-Way Functions, Science, vol. 297, pp. 2026-2030, 20 September 2002.

[97] T. Roska, L.O. Chua, D. Wolf, T. Kozek, R. Tetzlaff, F. Puffer: \textit{Simulating nonlinear waves and partial differential equations via CNN-Part I: Basic techniques}, IEEE Transaction on Circuits and Systems-I, vol. 42, pp. 807-815, 1995.

[98] Serpico, C., Setti, G., and Thiran, P. 1997. \textit {Analogies between cellular neural networks and partial differential equations}. In: Advances in intelligent Systems, F. C. Morabito, (Ed.) IOS Frontiers In Artificial Intelligence And Applications Series, vol. 41. IOS Press, Amsterdam, The Netherlands, 157-162.

[99] "Security with Noisy Data", Tuyls, Pim; Skoric, Boris; Kevenaar, Tom (Eds.), Springer 2007, ISBN: 978-1-84628-983-5

**Claims**

**1.** A method for security purposes with the acts of:

- requesting a measurement on a physical system (1) wherein the measurement is performed by applying a challenge signal (90) to the system (1) and by receiving a response signal (92) dependent on a setting of the challenge signal (90) and dependent on the inner structure of the system (1) and by determining a characteristic of the response signal (92),
- receiving the characteristic of the response signal (92),

**characterized in that**
the characteristic of the response signal (92) is validated by determining the time that has elapsed for the measurement and by performing a verification process of the response signal (92) using a description of the system (1), wherein the complexity of the inner structure of the physical system ensures that the time needed for the verification process is longer than the time that has elapsed for the measurement.

**2.** The method according to Claim 1,
wherein the characteristic of the response signal (92) is validated by generating a simulated characteristic of the response signal (92) using a simulation program capable of reproducing the characteristic of the response signal (92) dependent on the description of the system (1) and the setting of the challenge signal (90), wherein the complexity of the inner structure ensures that the time needed for the simulation is longer than the time elapsed for the measurement.

**3.** The method according to Claim 1 or 2,
wherein for validating the assignment of a functionality to an item (30, 40, 50) by an authority, the following acts are performed before the method according to Claim 1 or 2 is executed:

- the authority assigns the system (1) to the item (30, 40, 50),
- the authority generates a digital signature of the description of the system (1) and of an identification of the item (30, 40, 50) using a secret signing key of the authority, allowing the validation of the assignment of the functionality to the item (30, 40, 50) by validating the signature using a public signing key of the authority.

**4.** The method according to Claim 3,
wherein the item is a software program and wherein for licensing the software program, the following acts are performed:

- the authority generates a digital licensing signature of the description and an identification of the program using a secret signing key of the authority,
- the licensing signature is made accessible to a processing unit that runs the program and that has also access to the system (1),
- the authority arranges the program for performing the following acts during execution of the program:

  > the program requests the description and the licensing signature,
  > for validating the assignment of the program identification to the processing unit the validity of signature is checked using the public signing key of the authority,
  > for checking the accessibility of the system (1) to the processing unit, the processing unit requests the measurement on the system (1) that responds with the measured characteristic of the response signal of the system (1),
  > the program determines the time elapsed for the measurement and validates the response signal.

**5.** The method according to Claim 3,
wherein the authority attaches the system (1) to a product (30, 40, 50) and generates a digital signature of the description and the identification of the product (30, 40, 50) and makes the identification, the description and the signature readable from the product for allowing that:

- a control unit reads the identification, the description and the signature and verifies the validity of the signature, and that
- the control unit performs the validation of a measured characteristic of the response signal originating from the system (1) attached to the product (30, 40, 50).

**6.** The method according to Claim 1 or 2,
wherein a proof of possession of the system (1) is performed by assigning the measurement on the one side and the validation on the other side to different functional units A (60) and B (62), respectively.

**7.** The method according to Claim 6,
wherein for performing a proof of destruction:

- the unit A (60) and the unit B (62) perform a method according to claim 6,
- the unit A (60) modifies the original system (1) into a modified system (64) and determines a description of the modified system (64) and sends the description to unit B (62), - unit B (62) checks whether the modified description allows the conclusion that the modified system (64) must have been generated by a modification of the original system (1), and
- unit A (60) and unit B (62) execute the method according to claim 6 with respect to the modified system (64).

**8.** The method according to Claim 3 and 7,
wherein for transferring an item and a functionality associated with the item from unit A (60) to unit B (62):

- an authority receives a message from unit A (60) that comprises an identification of the item and a signature of the identification and of the description of the system associated with the item and issued by the authority,
- the authority validates the signature and aborts the procedures if the signature is invalid,
- the authority performs the method according to claim 7 regarding the original system (1) associated with unit A (60),
- the authority receives another description of another system from unit B (62),
- the authority performs the method according to claim 3 for assigning the item to the other system associated with unit B (62).

**9.** The method according to Claim 1 or 2,
wherein for proving colocality of two interacting systems (1), the following acts are performed:

- a unit C receives from a unit A (60) that has access to a first system (1), the response time, the description and if applicable the simulation program of the first system (1),
- the unit C further receives from a unit B (62) that has access to a second system (1), the response time, the description and if applicable the simulation program of the second system (1),
- the unit C determines for a joined system a joined response time, a joined description and if applicable a joined simulation program from the information received from unit A (60) and unit B (62),
- the unit C chooses a setting for a challenge of the joined system and sends the setting to unit A (60) and unit B (62),
- the unit C receives a characteristic of a joined response signal generated by measurement on the joined system,
- the unit C performs a validation of the joined response by using the description of the joined system and by measuring the time elapsed between sending the setting to unit A and receiving the joined response signal.

**10.** The method according to Claim 1 or 2,
wherein the method comprises the acts:

- a unit B (62) chooses the setting and send the setting to a unit A allowing unit A (60) to perform a measurement on the system (1) using a challenge signal according to the setting transmitted by unit B and allowing unit A to use the characteristic of the response signal obtained by the measurement as a key and to generate an authentication code with respect to a message,
- unit B (62) receives the message together with the authentication code from unit A (60),
- unit B (62) measures the time elapsed for the measurement and validates the characteristic of the response signal.

**11.** The method according to Claim 1 or 2,
wherein the system (1) is provided with an inner structure sensitive to the environment and wherein the system (1) is used to generate sensor data (71, 82, 91, 101-103) and the response signal, that depend on the challenge date and the inner structure and that is used as authenticating data (72, 83) for the sensor data enabling a control unit checking (62) the authenticity of the sensor data (71, 82, 91, 101-103) by using the description of the system (1) and the temporal structure of the generation of the sensor data (71, 82, 91, 101-103).

**12.** The method according to any one of Claims 1 to 11,
wherein the system is a circuit, an integrated circuit, an analog circuit comprising a plurality of analog electrical components or a cellular non-linear network (110) comprising a plurality of interconnected cells (111) wherein a temporal behavior of state variables of a particular cell dependent on the outputs of cells (111) interconnected with the particular cell (111).

**13.** The method according to any one of Claims 1 to 11,
wherein a semiconductor memory (250) is used for the system (1) wherein the semiconductor memory (250) comprises cells (252) with fixed information content and cells (252) with variable information content and wherein the result of a writing procedure into the cells (252) with variable information content depends on the supply voltage of the semiconductor memory (250).

**14.** A device for security purposes,

wherein the device is:

- a cash card provided with the system for performing the method according to Claim 7 or 8 wherein the cash card represents unit A and unit B, or
- a bank note (30) provided with the system for performing the method according to Claim 5, or
- an identification card (40) or access card provided with the system for performing the method according to Claim 5, or
- a camera (70, 80), a microphone, a fingerprint sensor, an iris sensor, an biometric sensor or sensor for measuring physical quantities provided with the system for performing the method according to Claim 11..

**15.** A software product for security purposes,
wherein the software product comprises program code for implementing any one of the methods according to claim 1 to 14.

FIG 1

FIG 2

# FIG 3

30  1

100 Euro → SIMPL System S

31

32

1110110110001001 00 → Monetary Value V,
10100101001001001010 → Further Information I,
D(S), Sig $_{SK}$ (V, I, D(S))

# FIG 4

41  40  1

Product X → SIMPL System S

1110110110001001 00 → I, D(S), Sig $_{SK}$ (I, D(S))
1010010100100100101 0

42

# FIG 5

Picture of the
card holder  50  52  Biometric Data

1 → SIMPL System S

51 → ☺

Mr. X  10101011010110 1 → I, D(S)
1010010100101

Name of Card
Holder  Digital Signature
Sig$_{SK}$ (I, D(S))

53

# FIG 6

1

System S

60 — Alice

System S

61     64

Binary Channel

65

Bob — 62

63

# FIG 7

70

71 — Digital Pictures

$I_1, I_2, I_3, \ldots$

Authenticator

$A_1, A_2, A_3, \ldots,$

where $A_i = M(I_i, p_i, CCD)$

72

73

SIMPL CCD

Event E

SIMPL Camera

# FIG 8

81     80

82 — Digital Pictures

$I_1, I_2, I_3, \ldots$

Authenticator

$A_1, A_2, A_3, \ldots,$

where $A_i = M(I_i, p_i, S)$

83

Standard CCD

Photosensitive SIMPL system S

1

85     84

Beam Splitter

Event E

SIMPL Camera

## FIG 9

Random Challenges
$p_1, ..., p_k$
90

Image Stream $I_1, I_2, ...$
91

Authenticator Stream
$A_1, A_2, ...$
(depends on random challenges
$p_i$, images $I_i$, SIMPL camera S)
92

60 Alice 70 E
61

Bob 62
63

## FIG 10

The temperature of the
sensor is 20 ℃
101

This is my fingerprint
(in digitised form)
102

This is a (digitised)
picture/video of mine
103

60 Alice Sensor S
61 100

? Bob 62
63

# FIG 11

# FIG 12

Inputs        State and feedback        Outputs

# FIG 13

(a)                                    (b)

$$A(a) \text{ template} = \begin{pmatrix} -0.0487 & 0.776 & -0.285 \\ -0.53 & 0.443 & -0.267 \\ 0.747 & -0.774 & -0.181 \end{pmatrix} \quad A(b) \text{ template} = \begin{pmatrix} 0.317 & 0.612 & -0.501 \\ 0.512 & -0.134 & 0.105 \\ -0.9 & -0.758 & 0.986 \end{pmatrix}$$

# FIG 14

t = 700 a.u.

a)

t = 6300 a.u.

b)

d)

e)

t = 10,000 a.u.

c)

f)

FIG 15

FIG 16

# FIG 17

# FIG 18

# FIG 19

Template A

Hx_layer

Template B

| 0 | 0 | 0 |
|---|---|---|
| 0 | 1 | 0 |
| 0 | 0 | 0 |

| 0 | 0 | 0 |
|---|---|---|
| -1 | 2 | -1 |
| 0 | 0 | 0 |

Ez_layer

| 0 | 0 | 0 |
|---|---|---|
| 0 | 1 | 0 |
| 0 | 0 | 0 |

| 0 | 0 | 0 |
|---|---|---|
| 1 | -2 | 1 |
| 0 | 0 | 0 |

Hy_layer

| 0 | 0 | 0 |
|---|---|---|
| 0 | 1 | 0 |
| 0 | 0 | 0 |

| 0 | 1 | 0 |
|---|---|---|
| 0 | -2 | 0 |
| 0 | 1 | 0 |

3 x 3 sphere of influence

| 0 | -1 | 0 |
|---|---|---|
| 0 | 2 | 0 |
| 0 | -1 | 0 |

# FIG 20

FIG 21

211      210

FIG 22

FIG 23

FIG 24

## FIG 25

253

$2^{L-K}$ Word lines

251

250

Memory cell

$A_K$

$A_{K+1}$

$A_{L-1}$

Row decoder

Memory array

$2^K$ Bit lines

Control

Sense amplifiers / Drivers

254

$A_0$

$A_{K-1}$

Column decoder

255

Input-Output

## FIG 26

SIMPL System S

Voltage
Control VC

Challenge

$p_i$

Challenge
Control CC

ADR

DIN

MEMORY

DOUT

LFSR

Signature

M ($p_i$, S)

# FIG 27

$\lambda = 0.09 \ \mu m$

# FIG 28

## REFERENCES CITED IN THE DESCRIPTION

### Patent documents cited in the description

- EP 09003763 A

### Non-patent literature cited in the description

- **PAPPU, R. ; RECHT, B. ; TAYLOR, J. ; GERSHENFELD, N.** Physical One-Way Functions. *Science,* 20 September 2002, vol. 297, 2026-2030
- **U. Feige ; A. Fiat ; A. Shamir.** Zero knowledge proofs of identity. *Journal of Cryptology,* 1987, vol. 1, 77-94
- **Ross Anderson.** Security Engineering. Wiley, 2001
- **Whitfield Diffie ; Martin E. Hellman.** New Directions in Cryptography. *IEEE Transactions on Information Theory,* November 1976, vol. 22 (6), 644-654
- **Ronald L. Rivest ; Adi Shamir ; Leonard M. Adleman.** A Method for Obtaining Digital Signatures and Public-Key Cryptosystems. *Commun. ACM,* 1978, vol. 21 (2), 120-126
- **Bruce Schneier.** Applied Cryptography. John Wiley & Sons, 1996
- Multimedia security technologies for digital rights management. Academic Press, 2006
- **Gerald de Jean ; Darko Kirovski.** *Radio Frequency Certificates of Authenticity, http://research.micro-soft.com/users/darkok*
- **Gerald de Jean ; Darko Kirovski.** *Certifying Authenticity using RF Waves, http://research.micro-soft.com/users/darkok*
- **Darko Kirovski.** Toward an automated verification of certificates of authenticity. *ACM Conference on Electronic Commerce,* 2004, 160-169
- **Joshua R. Smith ; Andrew V. Sutherland.** Microstructure based indicia. *Proceedings of the Second Workshop on Automatic Identification Advanced Technologies,* October 1999, 79-83
- **M. Bellare ; S. Goldwasser.** *Lecture Notes in Cryptography, http://www-cse.ucsd.edu/ mihir/papers/gb.html.*
- An Authenticated Camera. **B. Schneier ; J. Kelsey ; D. Wagner ; C. Hall.** 12th Annual Computer Security Applications Conference. ACM Press, December 1996, 24-30
- **Charles H. Bennett.** Ideas on privacy vs. Authentication. Authentication by online challenges. *IBM Research,* January 2002, www.research.ibm.com/people/b/bennetc.
- **C. Papadimitiou.** Computational Complexity. Addison Wesley, 1994
- **C.H. Bennett ; G. Brassard.** Quantum cryptography: Public key distribution and coin tossing. *Proceedings of IEEE International Conference on Computers, Systems, and Signal Processing,* 1984, 175
- **R. Rivest ; B. Lampson.** SDSI --- A Simple Distributed Security Infrastructure. *Manuscript,* 1996, http://www.soe.ucsc.edu/∼abadi/Papers/sdsi11.html.
- **C. Ellison ; B. Frantz ; B. Lampson ; R. Rivest ; B. Thomas ; T. Ylonen.** SPKI Certificate Theory. *Manuscript,* September 1999, http://www.ietf.org/rfc/rfc2693.txt
- **C. Ellison ; B. Schneier.** Ten Risks of PKI: What You're not Being Told about Public Key Infrastructure. *Computer Security Journal,* 2000, vol. 16 (1), 1-7, www.schneier.com/paper-pki.html.
- *MIT's project oxygen, http://oxygen.csail.mit.edu.*
- **M. Weiser.** Some computer science issues in ubiquitous computing. *ACM SIGMOBILE Mobile Computing and Communications Review,* 1999
- **M. Satyanarayanan.** Pervasive computing: vision and challenges. Personal Communications. *IEEE, http://www.cs.cmu.edu/ aura/docdir/pcs01.pdf*
- **D. Lim.** Extracting Secret Keys from Integrated Circuits. *MSc Thesis,* 2004
- **D. Chinnery ; K. Keutzer.** Closing the Gap between ASIC & Custom. Kluwer Academic Publishers, 2002
- *The World Economic Forum,* 2004
- **Akio Ushida ; Yoshihiro Yamagami ; Yoshifumi Nishio ; Ikkei Kinouchi ; Yasuaki Inoue.** An Efficient Algorithm for Finding Multiple DC Solutions Based on the SPICE-Oriented Newton Homotopy Method. *IEEE Transactions on computer-aided design of integrated circuits and systems,* March 2002, vol. 21 (3

- **K.G. Nichols ; T.J. Kazmierski ; M. Zwolinski ; A.D. Brown.** Overview of SPICE-like circuit simulation algorithms. *IEEE Proc.-Circuits Devices Syst.,* August 1994, vol. I11 (4
- **Otto Forster.** Algorithmische Zahlentheorie. Vieweg Verlag, 1996
- **B. Gassend.** Physical Random Functions. *Master Thesis,* February 2003
- **R. Pappu ; B. Recht ; J. Taylor ; N. Gershenfeld.** Physical One-Way Functions. *Science,* 20 September 2002, vol. 297, 2026-2030
- **R. Pappu.** Physical One-Way Functions. *PhD Thesis, MIT*
- **Catherine Taylor Clelland ; Viviana Risca ; Carter Bancroft.** Hiding Messages in DNA Microdots. *Nature,* 1999, vol. 399, 533-534
- **Richard P. Feynman.** Simulating Physics with Computers. *International Journal of Theoretical Physics,* 1982, vol. 21 (6, 7), 467-488
- **Betty Prince.** Semiconductor Memories -- A Handbook of Design, Manufacture, and Application. John Wiley & Sons, 1995
- **Peter M. Kogge ; Jay B. Brockman ; Thomas Sterling ; Guang Gao.** Processing in memory: Chips to Petaflops. *Workshop on Mixing Logic and DRAM: Chips that Compute and Remember at ISCA,* 1997
- **Chua, L.O. ; L. Yang.** Cellular Neural Networks Theory. *IEEE Transactions on Circuits and Systems,* 1988, vol. 35, 1257-1272
- **Chua, L.O. ; Roska, T ; Kozek, T. ; Zarandy, A.** CNN universal chips crank up the computing power Circuits and Devices Magazine. *IEEE,* vol. 12 (4), 18-28, http://ieeexplore.ieee.org/stamp/stamp.jsp?arnumber=526876&isnumber=11056
- Analogies between cellular neural networks and partial differential equations In Advances in intelligent Systems. **Serpico, C. ; Setti, G. ; Thiran, P.** Artificial Intelligence And Applications Series. IOS Press, 1997, vol. 41, 157-162
- **T. Roska ; L.O. Chua ; D. Wolf ; T. Kozek ; R. Tetzlaff ; F. Puffer.** Simulating nonlinear waves and partial differential equations via CNN-Part I: Basic techniques. *IEEE Transaction on Circuits and Systems-I,* 1995, vol. 42, 807-815
- {Analogies between cellular neural networks and partial differential equations}. In: Advances in intelligent Systems. **Serpico, C. ; Setti, G. ; Thiran, P.** IOS Frontiers In Artificial Intelligence And Applications Series. IOS Press, 1997, vol. 41, 157-162
- Security with Noisy Data. Springer, 2007